# EUROPEAN PATENT APPLICATION

(11) **EP 4 527 805 A1**
(43) Date of publication of application: **26.03.2025**
(21) Application number: 22942344.7
(22) Date of filing: 19.08.2022
(51) Int. Cl.: C01G 55/00, C25B 1/04

(54) **METAL-DOPED RUTHENIUM OXIDE NANO MATERIAL, PREPARATION METHOD THEREFOR, AND USE THEREOF**

(30) Priority: 16.05.2022 CN 202210530718; 04.08.2022 CN 202210932935
(71) Applicant: QINGDAO BOLIU INNOVATION TECHNOLOGY CO., LTD, Qingdao, Shandong 266061 (CN)
(72) Inventor: SUN, Xiaoming, Beijing 100029 (CN); LIU, Hai, Beijing 100029 (CN); ZHAO, Susu, Beijing 100029 (CN); KUANG, Yun, Beijing 100029 (CN)
(74) Representative: Gille Hrabal Partnerschaftsgesellschaft mbB Patentanwälte
(86) International application number: PCT/CN2022/113508
(87) International publication number: WO 2023/221315

(57) **Abstract**

The present invention belongs to the technical field of inorganic advanced nanometer materials, and particularly relates to a metal-doped ruthenium oxide nanometer material and a preparation method and use thereof. The metal-doped ruthenium oxide nanometer material is an acid-insoluble metal oxide doped ruthenium oxide nanometer material or a transition metal doped ruthenium oxide nanometer material. A molecular formula of the acid-insoluble metal doped ruthenium oxide nanometer material is MₓRu₁₋ₓO₂, wherein M is acid-insoluble metal, and the acid-insoluble metal is selected from: one or more of niobium, titanium, zirconium, hafnium, tungsten, molybdenum, and tantalum; or, a molecular formula of the transition metal doped ruthenium oxide nanometer material is MₓRu₁₋ₓO₂, M is transition metal, and the transition metal is selected from: one of Cr, Mn, Ge, In, Sn, Sb, Nb, Ti, Zr, Hf, W, Mo, Ta, and Pt. The metal of the present invention is highly uniformly dispersed in a ruthenium oxide material, such that active-site ruthenium is well controlled, and the stability and activity of the material during an oxygen evolving reaction are improved.

## Description

### TECHNICAL FIELD

The present invention belongs to the technical field of inorganic advanced nanometer materials, and particularly relates to a metal-doped ruthenium oxide nanometer material and a preparation method and use thereof.

### BACKGROUND

With the consumption of traditional fossil energy and the increasingly severe environmental pollution issue caused by its combustion, carbon dioxide emissions are increased, the goals of "peak carbon dioxide emissions" and "carbon neutrality" still face severe challenges, and therefore, developing new sustainable clean energy to replace fossil fuels is of the highest priority. At present, solar energy, wind energy, bioenergy, tidal energy, and hydrogen energy are developed into relatively mature new alternative energy. Among them, hydrogen energy, as clean energy, has high energy density, is clean and pollution-free, and increasingly receives a widespread attention. Meanwhile, there are numerous sources of hydrogen energy, including fossil fuel hydrogen production, carbon capture hydrogen production, water electrolysis hydrogen production, etc. Among them, water electrolysis hydrogen production is a relatively simple and mature technology among numerous production processes. Water electrolysis hydrogen production is divided into an alkaline water electrolysis hydrogen production technology (ALK), a solid oxide electrolysis cell technology (SOEC), and a proton exchange membrane water electrolysis technology (PEM). Compared to the ALK technology, PEM hydrogen production has a higher working current density (>1 A/cm²) in PEM water electrolysis hydrogen production, higher overall efficiency (74% to 87%), a higher hydrogen volume fraction (>99.99%), a higher gas production pressure (3MPa to 4 MPa), and a faster dynamic response speed, can adapt to the volatility of renewable energy power generation, and is considered as a highly promising water electrolysis hydrogen production technology.

However, an anode of a PEM electrolytic bath makes general transition metal catalysts such as iron, cobalt, and nickel dissolve quickly and hardly work stably due to locally super-strong acidity and oxidation. Iridium oxide is currently a commercially-used catalyst for PEM due to its extremely high acidic oxygen evolution stability. However, its increasingly soaring price and scarce resources make it difficult to use on a large scale and meet future demands for hydrogen energy. With the successful preparation of domestically produced proton exchange membranes, the cost of membranes will significantly decrease in the future. Seeking alternative acidic oxygen evolution catalysts with good activity and stability is the key to reduce the cost of pure water electrolysis.

Ruthenium oxide has extremely high acidic oxygen evolution activity, but a potential for oxidation to RuO₄ is 1.33 V (relative to a standard hydrogen electrode), which is within a working potential of an oxygen evolving reaction, making the oxidation of ruthenium in the oxygen evolving process, ultimately resulting in the production and dissolution of high-valence oxides of ruthenium in an electrolyte solution, which finally leads to the loss of active sites and the degradation of catalytic oxygen evolving reaction performance. However, its lower price makes designing ruthenium-based oxygen evolution catalysts with high activity and stability very promising and challenging.

In recent years, science researchers have made many efforts to improve the oxygen evolution activity and stability of ruthenium-based catalysts. For example, doping transition metal such as iron, cobalt, nickel and chromium in ruthenium oxide, introducing defects within ruthenium oxide, regulating the morphology of ruthenium oxide, and loading ruthenium oxide on a stable substrate ultimately achieve changes in an electronic structure of ruthenium oxide, improve its adsorption with oxygen-containing intermediates, and further improve the electrocatalytic oxygen evolution performance and stability. However, the issues of low activity and poor stability have not been resolved yet.

In order to solve the above problems, the present invention is proposed.

### SUMMARY

The present invention prepares an acid-insoluble metal doped ruthenium oxide nanometer material by adopting a sol-gel method, a solvothermal method and a ball milling method, and the nanometer material exhibits super-high activity and stability when used as an acidic oxygen evolution electrode material.

A first aspect of the present invention discloses an acid-insoluble metal oxide doped ruthenium oxide nanometer material, and the acid-insoluble metal doped ruthenium oxide nanometer material has a molecular formula of MₓRu₁₋ₓO₂;
wherein
M is acid-insoluble metal, and the acid-insoluble metal is selected from: one or more of niobium, titanium, zirconium, hafnium, tungsten, molybdenum and tantalum.

For example, the acid-insoluble metal is selected from: one, two, three, four, five, six or seven of niobium, titanium, zirconium, hafnium, tungsten, molybdenum and tantalum.

Herein, the acid-insoluble metal is defined as: a metal oxide with the solubility less than 10⁻⁵ in diluted inorganic acid (10% to 20% inorganic acid) at the normal temperature.

Preferably, in the acid-insoluble metal oxide doped ruthenium oxide nanometer material, the acid-insoluble metal is doped into lattices of ruthenium oxide, and the acid-insoluble metal replaces a position of ruthenium in part of the lattices. In addition, the acid-insoluble metal is uniformly dispersed in crystals of the ruthenium oxide.

Preferably, a size of nanoparticles is 5 to 2000 nm, more preferably 50 to 200 nm.

Preferably, the acid-insoluble metal oxide doped ruthenium oxide nanometer material is nanoparticles with rough and porous surfaces.

Preferably, the acid-insoluble metal and ruthenium are uniformly dispersed in the acid-insoluble metal oxide doped ruthenium oxide nanometer material.

Preferably, in the acid-insoluble metal oxide doped ruthenium oxide nanometer material, a doping ratio of the acid-insoluble metal is 1% to 50%, based on a total mole quantity of metal in the acid-insoluble metal oxide doped ruthenium oxide nanometer material. A calculation formula of the doping ratio of the acid-insoluble metal is: N acid-insoluble metal/(N acid-insoluble metal + N ruthenium), where N is a molar weight.

Preferably, in the acid-insoluble metal oxide doped ruthenium oxide nanometer material, the ruthenium oxide has 101 crystal planes and 110 crystal planes. A distance between the 101 crystal planes is 0.256 nm, and a distance between the 110 crystal planes is 0.316 nm or 0.317 nm.

In conventional ruthenium oxide, a distance between the 101 crystal planes is 0.254 nm, and a distance between the 110 crystal planes is 0.315 nm.

In terms of a lattice distance, the acid-insoluble metal oxide doped ruthenium oxide nanometer material of the present invention has a slightly wider lattice distance than a conventional ruthenium oxide material.

A second aspect of the present invention provides a preparation method of the acid-insoluble metal oxide doped ruthenium oxide nanometer material described in the first aspect, and the preparation method is a sol-gel method, and includes the following steps:
step (1), placing a ligand into a solution containing an acid-insoluble metal source and a ruthenium source to obtain a mixture, sealing and mixing the above mixture in a container at a constant temperature for several hours, then opening a lid of the container, volatilizing a solvent, such as drying by distillation or freeze-drying, and scrapping off powder to obtain a metal complex precursor; and
step (2), placing the metal complex precursor obtained in step (1) into a muffle furnace, raising a temperature to a required temperature and preserving the temperature for several hours, then taking out a product after natural cooling to obtain powder, thus obtaining the acid-insoluble metal oxide doped ruthenium oxide nanometer material.

Preferably, the acid-insoluble metal source is selected from: one or more of an acid-insoluble metal chloride, an acid-insoluble metal organic esterate, an acid-insoluble metal carbonyl compound, an acid-insoluble metal oxalate and an acid-insoluble metal ammonium oxalate;
the ruthenium source is one or more of ruthenium chloride, ruthenium carbonyl, ruthenium acetylacetone, or ruthenium nitrosylnitrate; and
the ligand is a polymer containing a plurality of coordination sites.

More preferably, the polymer containing the plurality of coordination sites is selected from: one or more of polyvinyl alcohol, polyethylene glycol, polyethylene diamine, polylactic acid, polyvinylpyrrolidone, polypyridine, polypyrrole and polyamide.

The solution containing the acid-insoluble metal source and the ruthenium source may be an aqueous solution or an alcoholic solution, as long as dissolution of the acid-insoluble metal source and the ruthenium source can be achieved.

Preferably, in the mixture in step (1), a concentration of the acid-insoluble metal source is 0.01 to 1 mol/L, a concentration of the ruthenium source is 0.1 to 1 mol/L, and a concentration of the complex is 1 to 40 g/L.

Preferably, in step (1), a temperature of sealing and mixing at the constant temperature ranges from 70°C to 150°C, and time ranges from 10 to 15 hours.

Preferably, in step (2), a temperature raising rate ranges from 1 °C/min to 10 °C/min, the required temperature ranges from 400°C to 600°C, and temperature preservation time ranges from 3 hours to 6 hours.

A third aspect of the present invention provides a preparation method of the acid-insoluble metal oxide doped ruthenium oxide nanometer material described in the first aspect, and the preparation method is a solvothermal method, and includes the following steps:
step A, placing a solution of an acid-insoluble metal source and a ruthenium source into a hydrothermal reactor, performing ultrasonic till complete dissolution, adding an alkali source to obtain a reaction liquid, placing the hydrothermal reactor into a constant temperature oven of 100°C to 200°C, performing temperature preservation for 8 to 16 hours, taking out the hydrothermal reactor, after natural cooling to a room temperature, taking out sediment generated by a reaction, and performing washing and drying to obtain powder; and
step B, placing the powder obtained by drying in above step A into a porcelain boat and placing the porcelain boat into a muffle furnace: setting a temperature raising rate to be 5 to 10 °C/min, raising a temperature to 400°C to 600°C, performing natural cooling after 2 to 8 hours of temperature preservation to obtain a black powder sample, thus obtaining the acid-insoluble metal oxide doped ruthenium oxide nanometer material; wherein
   in step A, in the reaction liquid, a concentration of the acid-insoluble metal source ranges from 0.001 mol/L to 1 mol/L, a concentration of the ruthenium source ranges from 0.1 mol/L to 1 mol/L, and a concentration of the alkali source is 0.5 to 4 mol/L.

The acid-insoluble metal source is selected from: one or more of an acid-insoluble metal chloride, an acid-insoluble metal organic esterate, an acid-insoluble metal carbonyl compound, an acid-insoluble metal oxalate and a rare acid-insoluble metal ammonium oxalate; and
the ruthenium source is one or more of ruthenium chloride, ruthenium acetylacetone, ruthenium carbonyl or ruthenium nitrosylnitrate.

The alkali source is one or more of urea and ammonium hydroxide.

In step A, the solution of the acid-insoluble metal source and the ruthenium source is an aqueous solution or an alcoholic solution, as long as dissolution of the acid-insoluble metal source and the ruthenium source can be achieved.

A fourth aspect of the present invention provides a preparation method of the acid-insoluble metal oxide doped ruthenium oxide nanometer material described in the first aspect, and the preparation method is a ball milling method, and includes the following steps:
placing ruthenium oxide and an acid-insoluble metal oxide into a ball milling tank, performing ball milling for 3 to 6 hours each time, repeating 2 to 3 times to obtain precursor powder, and placing the precursor powder into a porcelain boat and placing the porcelain boat into a muffle furnace: setting a temperature raising rate to be 5 to 10 °C/min, raising a temperature to 400°C to 800°C, performing natural cooling after 6 to 12 hours of temperature preservation to obtain a black powder sample, thus obtaining the acid-insoluble metal oxide doped ruthenium oxide nanometer material; wherein
a mole ratio of the ruthenium oxide to the acid-insoluble metal oxide is 99:1 to 1:1.

A fifth aspect of the present invention provides a use of the acid-insoluble metal oxide doped ruthenium oxide nanometer material described in any of the first aspect in an electrode material.

Preferably, the acid-insoluble metal oxide doped ruthenium oxide nanometer material is used in an anode material for acidic electrolysis of water for oxygen evolution.

The present invention prepares a transition metal doped ruthenium oxide nanometer material by adopting a hydrothermal method, and the nanometer material exhibits super-high activity and good stability when used as an acidic oxygen evolution electrode material.

A sixth aspect of the present invention discloses a transition metal doped ruthenium oxide nanometer material, and the transition metal doped ruthenium oxide nanometer material has a molecular formula of MₓRu₁₋ₓO₂; wherein
M is transition metal, and the transition metal is selected from: one of Cr, Mn, Ge, In, Sn, Sb, Nb, Ti, Zr, Hf, W, Mo, Ta, and Pt.

Preferably, in the transition metal doped ruthenium oxide nanometer material, the transition metal is doped into crystals of ruthenium oxide, and the transition metal replaces a position of ruthenium in part of the lattices and is uniformly dispersed in the lattices of the ruthenium oxide.

Preferably, a size of nanoparticles is 5 to 2000 nm.

Preferably, the transition metal doped ruthenium oxide nanometer material is nanoparticles with rough surfaces.

Preferably, the transition metal and ruthenium are uniformly dispersed in the transition metal doped ruthenium oxide nanometer material.

Preferably, in the transition metal doped ruthenium oxide nanometer material, a doping ratio of the transition metal is 1% to 50%, based on a total mole quantity of metal in the transition metal doped ruthenium oxide nanometer material. A calculation formula of the doping ratio of the transition metal is: N transition metal/(N transition metal + N ruthenium), where N is a mole quantity.

A seventh aspect of the present invention provides a preparation method of the transition metal doped ruthenium oxide nanometer material described in the sixth aspect, and the preparation method is a hydrothermal method, and includes the following steps:
step (1), adding a soluble transition metal source into a solution containing a soluble ruthenium source in sequence to obtain a mixture, after fully stirring the above mixture, adding a polymer containing a plurality of coordination sites, continuing full stirring, then transferring the mixture into a hydrothermal reactor, taking out the mixture after several hours of temperature preservation in a constant temperature oven, performing natural cooling to a room temperature, and after washing and centrifuging, performing drying to obtain a precursor containing transition metal; and
step (2), placing the transition metal precursor obtained in step (1) into a muffle furnace, raising a temperature to a required temperature and preserving the temperature for several hours, then taking out a product after natural cooling to obtain powder, thus obtaining the transition metal doped ruthenium oxide nanometer material.

Preferably, the transition metal source is one or more of a transition metal chloride, a transition metal high-valence compound, a transition metal organic esterate, a transition metal carbonyl compound, and a transition metal oxalate;
the ruthenium source is one or more of ruthenium chloride, ruthenium acetylacetone, ruthenium carbonyl or ruthenium nitrosylnitrate; and
the polymer containing the plurality of coordination sites is one or more of polyvinylpyrrolidone, polyvinyl alcohol, polyethylene glycol, polyethylene diamine, polylactic acid, polypyridine and polyamide.

The solution containing the transition metal source and the ruthenium source is an aqueous solution or an alcoholic solution to achieve dissolution of the transition metal source and the ruthenium source.

Preferably, a soluble chromium source is potassium dichromate and chromium chloride.

Preferably, a soluble manganese source is potassium permanganate and manganese chloride tetrahydrate.

Preferably, a soluble germanium source is germanium chloride.

Preferably, a soluble indium source is indium chloride.

Preferably, a soluble tin source is tin tetrachloride pentahydrate.

Preferably, a soluble antimony source is antimony chloride.

Preferably, a soluble niobium source is one of niobium chloride, niobium oxalate, and niobium pentoxide.

Preferably, a soluble titanium source is titanium chloride.

Preferably, a soluble zirconium source is zirconium chloride.

Preferably, a soluble hafnium source is hafnium oxide.

Preferably, a soluble tungsten source is tungsten oxide.

Preferably, a soluble molybdenum source is molybdenum chloride.

Preferably, a soluble tantalum source is tantalum chloride.

Preferably, a soluble platinum source is chloroplatinic acid.

Preferably, in the mixture in step (1), a concentration of the transition metal source is 0.001 to 1 mol/L, a concentration of the ruthenium source is 0.1 to 1 mol/L, and a concentration of the polymer is 1 to 50 g/L.

Preferably, in step (1), a temperature of the constant temperature oven is 100°C to 180°C, and time is 4 to 10 hours.

Preferably, in step (2), a temperature raising rate is 1 to 10 °C/min, the required temperature is 300°C to 500°C, and temperature preservation time is 3 to 5 hours.

An eighth aspect of the present invention provides a use of the transition metal doped ruthenium oxide nanometer material described in any of the sixth aspect in an electrode material.

Preferably, the transition metal doped ruthenium oxide nanometer material is used in an anode material for acidic electrolysis of water for oxygen evolution.

Preferably, the transition metal doped ruthenium oxide nanometer material is used to improve the activity and stability of the material in a water electrolysis reaction.

The above technical solutions may be combined freely on the premise of no conflict.

Compared to the prior art, the present invention has the following beneficial effects:
the acid-insoluble metal oxide doped ruthenium oxide nanometer material of the present invention has the following advantages:
(1) the acid-insoluble metal oxide doped ruthenium oxide nanometer material of the present invention is reported the first time, the acid-insoluble metal is doped into the lattices of the ruthenium oxide, the acid-insoluble metal replaces the position of ruthenium in part of the lattices, doping of the acid-insoluble metal does not break the intrinsic structure of the ruthenium oxide, and the crystal structure of rutile-phase ruthenium oxide is still maintained perfectly. Meanwhile, the acid-insoluble metal is highly uniformly dispersed in the material, and no impure-phase acid-insoluble metal oxide is generated, such that active-site ruthenium is well controlled, and stability is kept during an oxygen evolving reaction.
(2) The acid-insoluble metal oxide doped ruthenium oxide nanometer material of the present invention is uniform in particle size and porous, and a synthesis method is simple. The acid-insoluble metal oxide doped ruthenium oxide nanometer material further lowers the use amount of precious metal ruthenium, after doping of the acid-insoluble metal, the ruthenium-oxygen bond covalency is weakened due to the introduction of the acid-insoluble metal, the active-site ruthenium is made to be at a low valence state, and the obtained acid-insoluble metal doped ruthenium oxide exhibits extremely high activity and stability when used for an acidic water electrolysis oxygen evolution anode material.

In particular, in the material of the present invention, acid-insoluble metal elements have the advantages of 1, not dissolving in an acidic electrolyte solution and keeping stability of the material, and 2, weakening the ruthenium-oxygen bond covalency due to the introduction of the acid-insoluble metal, and the reasons are as follows: (1) the acid-insoluble metal elements and their oxides have very high acidic stability and oxidation resistance properties, active sites can be stably controlled in the oxygen evolution process, and the stability of the ruthenium oxide is improved; and (2) according to the adsorption theory, adsorption of the acid-insoluble metal for oxygen-containing intermediates is weak, and through doping into the lattices of the ruthenium oxide, adsorption of the ruthenium sites for the oxygen-containing intermediates will be improved, finally achieving the improvement of the activity at the ruthenium sites.

Iron, cobalt, nickel and chromium elements commonly doped in the ruthenium oxide at present do not have the above-mentioned effects. Doping of iron, cobalt, nickel and chromium is usually because their valence states are low and do not match with tetravalence of the ruthenium oxide, which causes the oxygen defect, finally changes their oxygen evolving reaction mechanism into a lattice oxygen oxidation mechanism, and finally improves their oxygen evolving reaction activity, but the instability of the oxygen defect makes the catalyst stability unable to be kept.

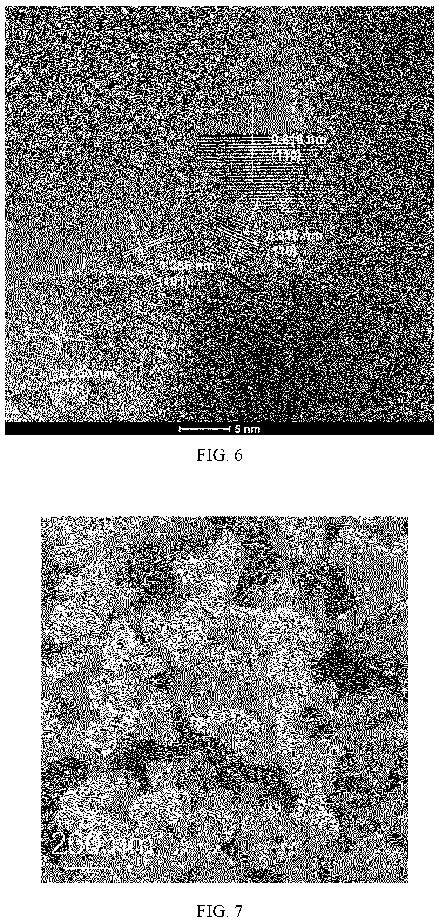

(3) In terms of activity: when the acid-insoluble metal oxide doped ruthenium oxide nanometer material of the present invention is used as the acidic water electrolysis oxygen evolution anode material, and the doping amount of the acid-insoluble metal is 1 at% to 50 at% (at% is a mole mass fraction of metal, based on total mole mass of metal in the acid-insoluble metal oxide doped ruthenium oxide nanometer material), the intrinsic activity is high, specifically, it can be seen from FIG. 7 that the acid-insoluble metal oxide doped ruthenium oxide nanometer material obtained in Example 1 and Example 2 has good water electrolysis oxygen evolution performance, and an overpotential under a current density of 10 milliampere per square centimeter is 196 millivolts and 219 millivolts, which are lower than 320 millivolts of commercial ruthenium dioxide.

(4) In terms of stability: when the acid-insoluble metal oxide doped ruthenium oxide nanometer material of the present invention is used as the acidic water electrolysis oxygen evolution anode material, under the working conditions of high current densities of 100 and 200 mA cm⁻², its constant current polarization curve may be still kept stable for 360 h, which proves that the acid-insoluble metal oxide doped ruthenium oxide nanometer material has extremely good acidic oxygen evolving reaction stability.

(5) The present invention has three preparation methods: the sol-gel method, the solvothermal method and the ball milling method. The sol-gel method is synthesis in a simple sol-gel reaction in combination with an air calcination condition, and the method is simple and convenient, low in cost, good in repeatability, friendly to environment, capable of magnified preparation and suitable for industrial popularization. The preparation method of the present invention is simple, providing a new thought for synthesizing a high-activity electrode material.

(6) In particular, in the sol-gel method of the present invention, a multidentate ligand high-molecular polymer matches with metal cations to form a complex. Compared with a small-molecular complex, the high-molecular polymer multidentate ligand facilitates uniform dispersion of multiple metals in a final product, which may improve the activity and stability of the material.

(7) In the solvothermal method of the present invention, weak alkali sources such as urea and ammonium hydroxide need to be used as the alkali source, such that the weak alkali sources slowly release hydroxyl ions at a high temperature, thereby achieving slow coprecipitation of ruthenium with acid-insoluble metal ions, and preventing the phenomena such as metal phase splitting caused by excessively large changes in the pH value in the hydrothermal process.

The transition metal doped ruthenium oxide nanometer material of the present invention has the following advantages:
(1) in the transition metal doped ruthenium oxide nanometer material of the present invention, the transition metal is doped into the crystals of the ruthenium oxide, while the transition metal replaces the position of ruthenium in part of the lattices, the intrinsic structure of the ruthenium oxide is not broken, that is, the crystal structure of the rutile-phase ruthenium oxide is still maintained perfectly. Meanwhile, the transition metal is highly uniformly dispersed in the material, and no impure-phase oxide is generated, such that active-site ruthenium is well controlled, and certain stability is also kept during the acidic oxygen evolving reaction.
(2) The transition metal doped ruthenium oxide nanometer material of the present invention is uniform in particle size, and a synthesis method is simple. While the transition metal doped ruthenium oxide nanometer material further lowers the use amount of precious metal ruthenium, after doping of the transition metal, Ru-O bond covalency is weakened due to the introduction of the transition metal, the active-site ruthenium is made to be at a low valence state, and thus the transition metal doped ruthenium oxide nanometer material exhibits extremely high activity and good stability in the process of being applied to an acidic water electrolysis oxygen evolution anode material.

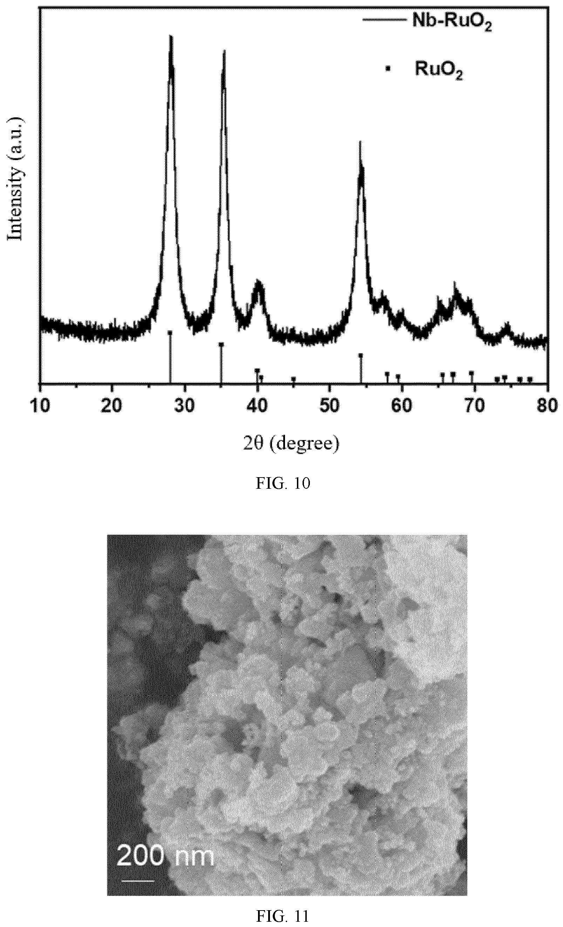

In particular, in the material of the present invention, transition metal elements have the advantages that: 1, in the stability test process of an acidic electrolyte solution, catalysts are not dissolved, and under the working condition of its high current density, a constant current polarization curve can still be kept stable for a long time; and 2, the Ru-O bond covalency is weakened due to the introduction of the transition metal such as manganese, chromium and tin, and the reasons are as follows:
(1) in terms of stability: as for the transition metal elements such as manganese, chromium and tin, in the preparation process, the transition metal such as manganese, chromium and tin is in a high-temperature high-pressure liquid environment or its highest-valence compounds are adopted as a transition metal source, the transition metal is made to be in a liquid environment which is fully oxidized, its oxides have strong acidic stability, and thus the effect of stably controlling ruthenium active sites can be achieved in the acidic oxygen evolution process, making the stability of the ruthenium oxide improved; and
(2) in terms of activity: the doping of the transition metal such as manganese, chromium and tin in the ruthenium oxide can adjust a d-band center of the ruthenium active sites and lower a surface-adsorbate state of anti-bonds, thereby lowering free energy in a rate deciding step, and finally improving the intrinsic activity of the ruthenium oxide. Transition metal which is low in valence state and poor in acidic stability, such as iron, cobalt and nickel, does not have the above-mentioned effects, it is usually because its low valence state does not match with tetravalence of the ruthenium oxide, which causes the oxygen defect, and finally changes its oxygen evolving reaction mechanism into a lattice oxygen oxidation mechanism, and although the activity of catalysts in the acidic oxygen evolving reaction is improved, the stability of the catalysts cannot be maintained due to the oxygen defect.
(3) When the transition metal doped ruthenium oxide nanometer material of the present invention is used as the acidic water electrolysis oxygen evolution anode material, and the doping amount of the transition metal ranges from 1 at% to 50 at% (at% is a molar mass fraction percentage of metal, based on a total molar mass of metal in the transition metal doped ruthenium oxide nanometer material), the intrinsic activity is extremely high, specifically, it can be seen from FIGS. 10, 18, 25, 32 and 33 that, the transition metal doped ruthenium oxide nanometer material obtained in Examples 1 to 18 has good water electrolysis oxygen evolution performance, and an overpotential under a current density of 10 milliamperes per square centimeter is lower than 320 millivolts of commercial ruthenium dioxide.
(4) When the transition metal doped ruthenium oxide nanometer material of the present invention is used as the acidic water electrolysis oxygen evolution anode material, and under the working condition of a high current density of 200 mA cm⁻², a constant current polarization curve may be still kept stable for 80 to 100 hours, which proves that the transition metal doped ruthenium oxide nanometer material has good acidic oxygen evolving reaction stability.
(5) The preparation method of the present invention is the hydrothermal method. The hydrothermal method is synthesis by performing a simple reaction in a sealed reactor in combination with an air calcination condition, the cost is low, the method is simple, the repeatability is good, and obtained powder is high in purity, good in dispersity, beneficial for environmental cleaning, and capable of magnified preparation. The preparation method of the present invention provides a new thought for synthesizing a high-activity electrode material.
(6) In particular, in the hydrothermal method of the present invention, a high-molecular polymer having a multidentate ligand matches with metal cations to form a complex. By adding the high-molecular polymer having the plurality of coordination sites, particle agglomeration that may be formed is avoided, it is beneficial for the doped transition metal such as manganese, chromium and tin to be uniformly dispersed in rutile lattices of the ruthenium oxide, and thus the activity and stability of the material can be improved.

### BRIEF DESCRIPTION OF THE DRAWINGS

FIG. 1 is a scanning electron microscopy (SEM) schematic diagram of a niobium-doped ruthenium oxide nanometer material in Example 1.
FIG. 2 is an X-ray diffraction (XRD) diagram of the niobium-doped ruthenium oxide nanometer material in Example 1.
FIG. 3 is an element distribution diagram of the niobium-doped ruthenium oxide nanometer material in Example 1.
FIG. 4 is a scanning electron microscopy (SEM) schematic diagram of a niobium-doped ruthenium oxide nanometer material in Example 2 of the present invention.
FIG. 5 is a high-resolution transmission electron microscopy (HRTEM) schematic diagram of a niobium-doped ruthenium oxide nanometer material in Example 3 of the present invention.
FIG. 6 is a high-resolution transmission electron microscopy (HRTEM) schematic diagram of a niobium-doped ruthenium oxide nanometer material in Example 4 of the present invention.
FIG. 7 is a scanning electron microscopy (SEM) schematic diagram of a niobium-doped ruthenium oxide nanometer material in Example 5 of the present invention.
FIG. 8 is a scanning electron microscopy (SEM) schematic diagram of a niobium-doped ruthenium oxide nanometer material in Example 6 of the present invention.
FIG. 9 is a scanning electron microscopy (SEM) diagram of a niobium-doped ruthenium oxide nanometer material in Example 7 of the present invention.
FIG. 10 is an X-ray diffraction (XRD) diagram of a niobium-doped ruthenium oxide nanometer material in Example 8 of the present invention.
FIG. 11 is an X-ray diffraction (XRD) diagram of a niobium-doped ruthenium oxide nanometer material in Example 9 of the present invention. FIG. 12 is an X-ray diffraction (XRD) diagram of a niobium-doped ruthenium oxide nanometer material in Example 10 of the present invention.
FIG. 13 is a scanning electron microscopy (SEM) schematic diagram of a niobium-doped ruthenium oxide nanometer material in Example 11 of the present invention.
FIG. 14 is an X-ray diffraction (XRD) diagram of a titanium-doped ruthenium oxide nanometer material in Example 12 of the present invention.
FIG. 15 is an X-ray diffraction (XRD) diagram of a zirconium-doped ruthenium oxide nanometer material in Example 13 of the present invention.
FIG. 16 is an X-ray diffraction (XRD) diagram of a hafnium-doped ruthenium oxide nanometer material in Example 14 of the present invention.
FIG. 17 is an X-ray diffraction (XRD) diagram of a tungsten-doped ruthenium oxide nanometer material in Example 15 of the present invention.
FIG. 18 is an X-ray diffraction (XRD) diagram of a molybdenum-doped ruthenium oxide nanometer material in Example 16 of the present invention.
FIG. 19 is an X-ray diffraction (XRD) diagram of a tantalum-doped ruthenium oxide nanometer material in Example 16 of the present invention.

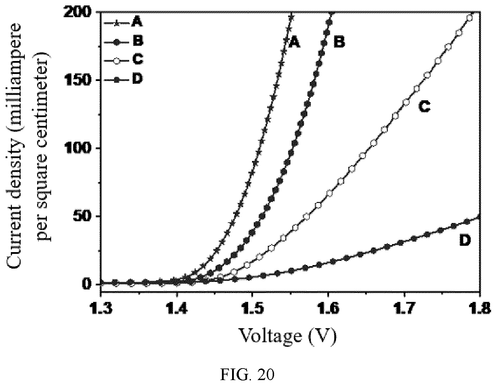

FIG. 20 is a polarization curve graph of an oxygen evolving reaction of the niobium-doped ruthenium oxide nanometer material in Examples 1 to 3 of the present invention and commercial ruthenium dioxide as an oxygen evolution anode material in a 0.5 mol/L H₂SO₄ solution, in which a curve A is a polarization curve of a niobium-doped ruthenium oxide material obtained in Example 1, a curve B is a polarization curve of a niobium-doped ruthenium oxide material obtained in Example 2, a curve C is a polarization curve of a niobium-doped ruthenium oxide material obtained in Example 3, and a curve D is a polarization curve of the commercial ruthenium dioxide.

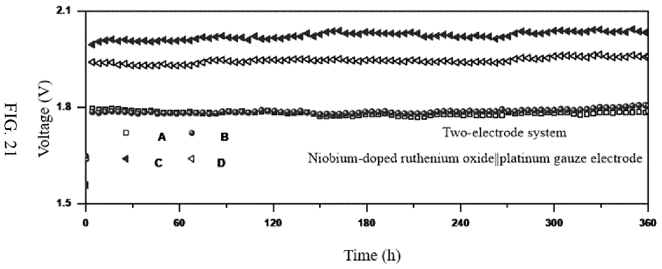

FIG. 21 is stability curves of the niobium-doped ruthenium oxide material obtained in Example 1 and Example 2 of the present invention as an oxygen evolution anode material in a 0.5 mol/L H₂SO₄ solution, in which a curve A is a stability curve of the niobium-doped ruthenium oxide material obtained in Example 1 under a 100 milliampere current density, a curve B is a stability curve of the niobium-doped ruthenium oxide material obtained in Example 2 under a 100 milliampere current density, a curve C is a stability curve of the niobium-doped ruthenium oxide material obtained in Example 1 under a 200 milliampere current density, and a curve D is a stability curve of the niobium-doped ruthenium oxide material obtained in Example 2 under a 200 milliampere current density.
FIG. 22 is polarization curves obtained by testing a niobium-doped ruthenium oxide nanometer material obtained in Example 5 and commercial ruthenium dioxide in a 0.5 mol/L sulfuric acid solution.
FIG. 23 is polarization curves obtained by testing a niobium-doped ruthenium oxide material obtained in Example 6 and commercial ruthenium dioxide in a 0.5 mol/L sulfuric acid solution.
FIG. 24 is polarization curves obtained by testing a niobium-doped ruthenium oxide material obtained in Example 7 and commercial ruthenium dioxide in a 0.5 mol/L sulfuric acid solution.
FIG. 25 is polarization curves obtained by testing a niobium-doped ruthenium oxide material obtained in Example 8 and commercial ruthenium dioxide in a 0.5 mol/L sulfuric acid solution.
FIG. 26 is polarization curves obtained by testing a niobium-doped ruthenium oxide material obtained in Example 10 and commercial ruthenium dioxide in a 0.5 mol/L sulfuric acid solution.
FIG. 27 is a stability curve obtained from the niobium-doped ruthenium oxide material obtained in Example 5 under a current density of 100 milliampere per square centimeter.
FIG. 28 is a stability curve obtained from the niobium-doped ruthenium oxide material obtained in Example 7 under a current density of 100 milliampere per square centimeter.
FIG. 29 is a stability curve obtained from the niobium-doped ruthenium oxide material obtained in Example 8 under a current density of 100 milliampere per square centimeter.
FIG. 30 is a stability curve obtained from the niobium-doped ruthenium oxide material obtained in Example 10 under a current density of 100 milliampere per square centimeter.
FIG. 31 is polarization curves obtained by testing metal-doped ruthenium oxide materials obtained in Examples 12 to 17 in a 0.5 mol/L sulfuric acid solution.
FIG. 32 is stability curves obtained from the metal-doped ruthenium oxide materials obtained in Examples 12 to 17 under a current density of 100 milliampere per square centimeter.
FIG. 33 is a constant current test curve of commercial ruthenium dioxide under a current density of 100 milliampere per square centimeter.
FIG. 34 is polarization curves obtained by testing the niobium-doped ruthenium oxide material obtained in Example 1 and an iron-doped ruthenium oxide material obtained in Comparative Example 1 in a 0.5 mol/L sulfuric acid solution, in which A is a polarization curve of the iron-doped ruthenium oxide material obtained in Comparative Example 1, and B is a polarization curve of the niobium-doped ruthenium oxide material obtained in Example 1.
FIG. 35 is a stability curve obtained from the iron-doped ruthenium oxide material obtained in Comparative Example 1 under a current density of 100 milliampere per square centimeter.
FIG. 36 is an XRD diagram of a three-metal-doped ruthenium oxide nanometer material obtained in Example 18.
FIG. 37 is an XRD diagram of a five-metal-doped ruthenium oxide nanometer material obtained in Example 19.
FIG. 38 is an XRD diagram of a seven-metal-doped ruthenium oxide nanometer material obtained in Example 20.
FIG. 39 is polarization curves obtained by testing metal-doped ruthenium oxide materials obtained in Examples 18 to 20 in a 0.5 mol/L sulfuric acid solution.
FIG. 40 is stability curves obtained from the metal-doped ruthenium oxide materials obtained in Examples 18 to 20 under a current density of 100 milliampere per square centimeter.
FIG. 41 is an XRD diagram of a niobium-doped ruthenium oxide nanometer material obtained in Comparative Example 2.
FIG. 42 is polarization curves obtained by testing the niobium-doped ruthenium oxide nanometer material obtained in Comparative Example 2 in a 0.5 mol/L sulfuric acid solution.
FIG. 43 is a stability curve of the niobium-doped ruthenium oxide obtained in Comparative Example 2 under a current density of 100 milliampere per square centimeter.
FIG. 44 is a scanning electron microscopy (SEM) schematic diagram of a manganese-doped ruthenium oxide nanometer material in Example 21 of the present invention.
FIG. 45 is an X-ray diffraction (XRD) diagram of the manganese-doped ruthenium oxide nanometer material in Example 21 of the present invention.
FIG. 46 is an element distribution diagram of the manganese-doped ruthenium oxide nanometer material in Example 21 of the present invention.
FIG. 47 is a scanning electron microscopy (SEM) schematic diagram of a chromium-doped ruthenium oxide nanometer material in Example 26 of the present invention.
FIG. 48 is an X-ray diffraction (XRD) diagram of the chromium-doped ruthenium oxide nanometer material in Example 26 of the present invention.
FIG. 49 is an element distribution diagram of the chromium-doped ruthenium oxide nanometer material in Example 26 of the present invention.
FIG. 50 is a scanning electron microscopy (SEM) diagram of a tin-doped ruthenium oxide nanometer material in Example 27 of the present invention.
FIG. 51 is an X-ray diffraction (XRD) diagram of the tin-doped ruthenium oxide nanometer material in Example 27 of the present invention.
FIG. 52 is an element distribution diagram of the tin-doped ruthenium oxide nanometer material in Example 27 of the present invention.

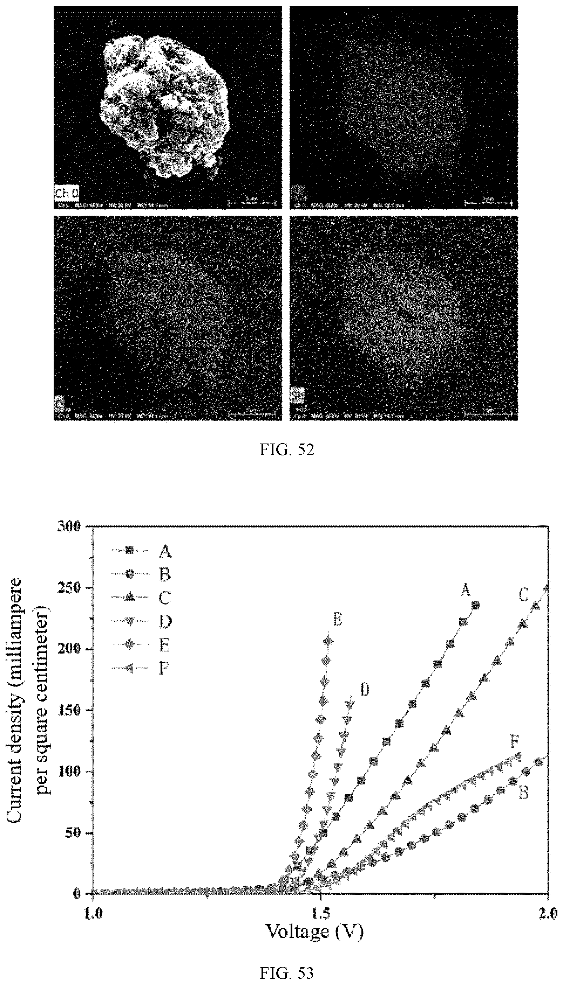

FIG. 53 is a polarization curve graph of an oxygen evolving reaction of manganese-doped ruthenium oxide nanometer materials obtained in Examples 21 to 25 of the present invention and commercial ruthenium oxide as an oxygen evolution anode material in a 0.5 mol/L H₂SO₄ solution, in which a curve A is a polarization curve of the manganese-doped ruthenium oxide material obtained in Example 21, a curve B is a polarization curve of the manganese-doped ruthenium oxide material obtained in Example 22, a curve C is a polarization curve of the manganese-doped ruthenium oxide material obtained in Example 23, D is a polarization curve of the manganese-doped ruthenium oxide material obtained in Example 24, E is a polarization curve of the manganese-doped ruthenium oxide material obtained in Example 25, and F is a polarization curve of the commercial ruthenium oxide.
FIG. 54 is stability curves obtained from the manganese-doped ruthenium oxide material obtained in Example 21, Example 24 and Example 25 of the present invention under a current density of 100 milliampere per square centimeter.
FIG. 55 is stability curves obtained from the manganese-doped ruthenium oxide material obtained in Example 21, Example 24 and Example 25 of the present invention under a current density of 200 milliampere per square centimeter.

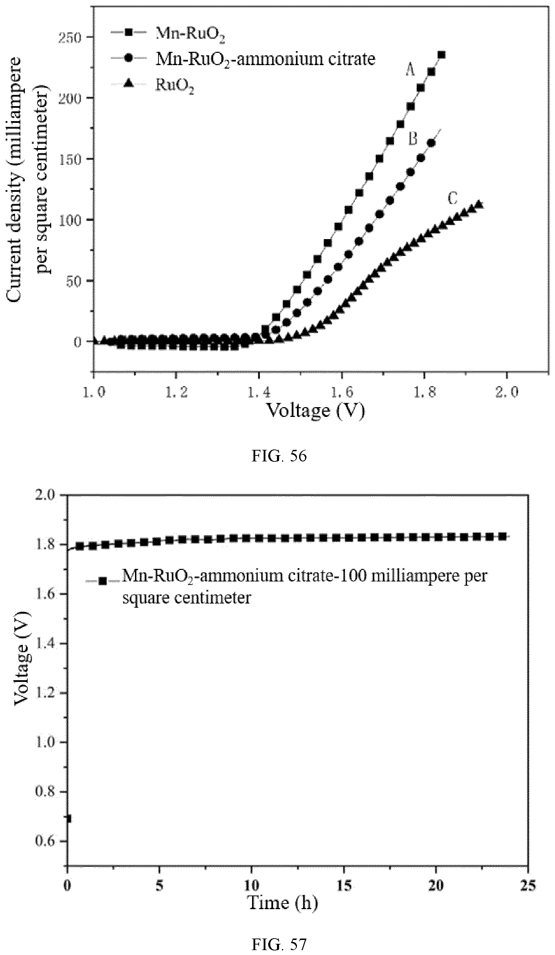

FIG. 56 is a polarization curve graph of an oxygen evolving reaction of manganese-doped ruthenium oxide nanometer materials obtained in Example 21 and Comparative Example 3 of the present invention and commercial ruthenium oxide as an oxygen evolution anode material in a 0.5 mol/L H₂SO₄ solution, in which a curve A is a polarization curve of the manganese-doped ruthenium oxide material obtained in Example 21, a curve B is a polarization curve of the manganese-doped ruthenium oxide material obtained in Comparative Example 3, and a curve C is a polarization curve of the commercial ruthenium oxide.
FIG. 57 is a stability curve obtained from the manganese-doped ruthenium oxide material obtained in Comparative Example 3 of the present invention under a current density of 100 milliampere per square centimeter.
FIG. 58 is a stability curve obtained from the manganese-doped ruthenium oxide material obtained in Comparative Example 3 of the present invention under a current density of 200 milliampere per square centimeter.

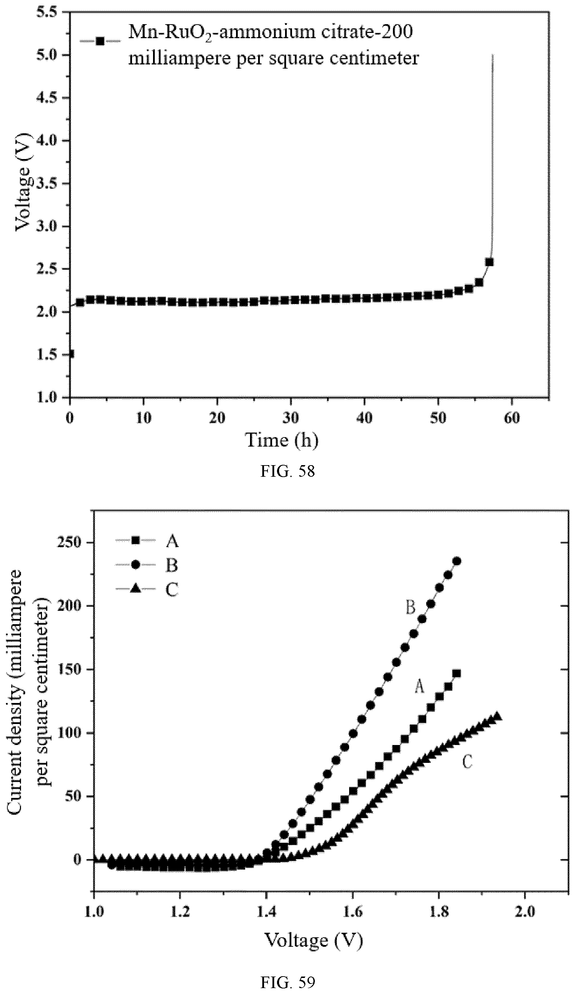

FIG. 59 is a polarization curve graph of an oxygen evolving reaction of manganese-doped ruthenium oxide nanometer materials obtained in Example 21 and Comparative Example 4 of the present invention and commercial ruthenium oxide as an oxygen evolution anode material in a 0.5 mol/L H₂SO₄ solution, in which a curve A is a polarization curve of the manganese-doped ruthenium oxide material obtained in Comparative Example 4, a curve B is a polarization curve of the manganese-doped ruthenium oxide material obtained in Example 21, and a curve C is a polarization curve of the commercial ruthenium oxide.
FIG. 60 is a stability curve obtained from the manganese-doped ruthenium oxide material obtained in Comparative Example 4 of the present invention under a current density of 50 milliampere per square centimeter.
FIG. 61 is a polarization curve graph of an oxygen evolving reaction of chromium-doped ruthenium oxide nanometer materials obtained in Example 26 and Comparative Example 5 of the present invention and commercial ruthenium oxide as an oxygen evolution anode material in a 0.5 mol/L H₂SO₄ solution, in which a curve A is a polarization curve of the chromium-doped ruthenium oxide material obtained in Comparative Example 5, a curve B is a polarization curve of the chromium-doped ruthenium oxide material obtained in Example 26, and a curve C is a polarization curve of the commercial ruthenium oxide.
FIG. 62 is a stability curve obtained from the chromium-doped ruthenium oxide material obtained in Example 26 of the present invention under a current density of 100 milliampere per square centimeter.
FIG. 63 is a stability curve obtained from the chromium-doped ruthenium oxide material obtained in Example 26 of the present invention under a current density of 200 milliampere per square centimeter.
FIG. 64 is a stability curve obtained from the chromium-doped ruthenium oxide material obtained in Comparative Example 5 of the present invention under a current density of 100 milliampere per square centimeter.
FIG. 65 is a stability curve obtained from the chromium-doped ruthenium oxide material obtained in Comparative Example 5 of the present invention under a current density of 200 milliampere per square centimeter.
FIG. 66 is a polarization curve graph of an oxygen evolving reaction of chromium-doped ruthenium oxide nanometer materials obtained in Example 26 and Comparative Example 6 of the present invention and commercial ruthenium oxide as an oxygen evolution anode material in a 0.5 mol/L H₂SO₄ solution, in which a curve A is a polarization curve of the chromium-doped ruthenium oxide material obtained in Comparative Example 6, a curve B is a polarization curve of the chromium-doped ruthenium oxide material obtained in Example 26, and a curve C is a polarization curve of the commercial ruthenium oxide.
FIG. 67 is a stability curve obtained from the chromium-doped ruthenium oxide material obtained in Comparative Example 6 of the present invention under a current density of 50 milliampere per square centimeter.
FIG. 68 is a polarization curve graph of an oxygen evolving reaction of tin-doped ruthenium oxide nanometer materials obtained in Example 27 and Comparative Example 7 of the present invention and commercial ruthenium oxide as an oxygen evolution anode material in a 0.5 mol/L H₂SO₄ solution, in which a curve A is a polarization curve of the tin-doped ruthenium oxide material obtained in Example 27, a curve B is a polarization curve of the tin-doped ruthenium oxide material obtained in Comparative Example 7, and a curve C is a polarization curve of the commercial ruthenium oxide.
FIG. 69 is a stability curve obtained from the tin-doped ruthenium oxide material obtained in Example 27 of the present invention under a current density of 100 milliampere per square centimeter.
FIG. 70 is a stability curve obtained from the tin-doped ruthenium oxide material obtained in Example 27 of the present invention under a current density of 200 milliampere per square centimeter.
FIG. 71 is a stability curve obtained from the tin-doped ruthenium oxide material obtained in Comparative Example 7 of the present invention under a current density of 100 milliampere per square centimeter.
FIG. 72 is a stability curve obtained from the tin-doped ruthenium oxide material obtained in Comparative Example 7 of the present invention under a current density of 200 milliampere per square centimeter.
FIG. 73 is a polarization curve graph of an oxygen evolving reaction of tin-doped ruthenium oxide nanometer materials obtained in Example 27 and Comparative Example 8 of the present invention and commercial ruthenium oxide as an oxygen evolution anode material in a 0.5 mol/L H₂SO₄ solution, in which a curve A is a polarization curve of the tin-doped ruthenium oxide material obtained in Comparative Example 8, a curve B is a polarization curve of the tin-doped ruthenium oxide material obtained in Example 27, and a curve C is a polarization curve of the commercial ruthenium oxide.
FIG. 74 is a stability curve obtained from the tin-doped ruthenium oxide material obtained in Comparative Example 8 of the present invention under a current density of 100 milliampere per square centimeter.

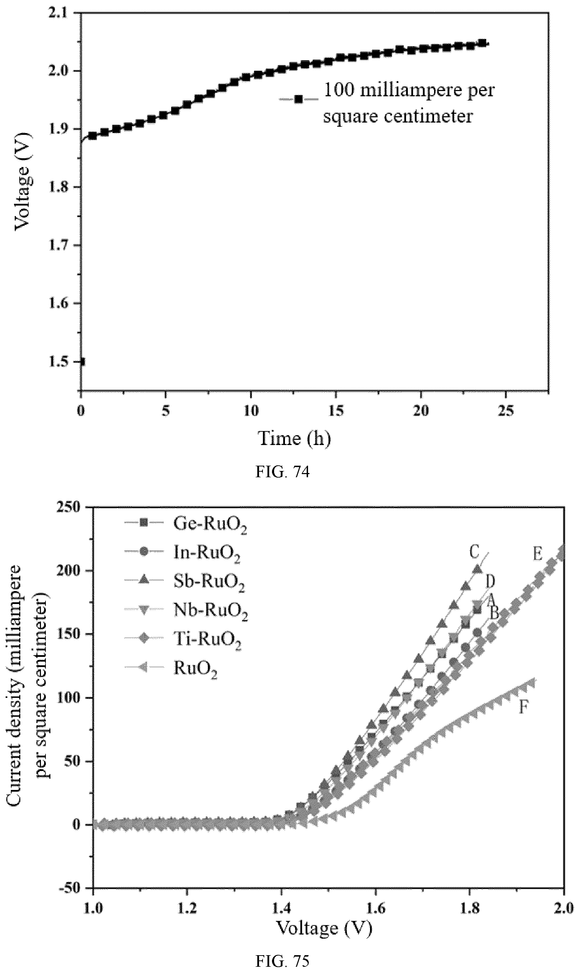

FIG. 75 is a polarization curve graph of an oxygen evolving reaction of transition metal doped ruthenium oxide nanometer materials obtained in Examples 28 to 32 of the present invention and commercial ruthenium oxide as an oxygen evolution anode material in a 0.5 mol/L H₂SO₄ solution, in which a curve A is a polarization curve of a germanium-doped ruthenium oxide material obtained in Example 28, a curve B is a polarization curve of an indium-doped ruthenium oxide material obtained in Example 29, a curve C is a polarization curve of an antimony-doped ruthenium oxide material obtained in Example 30, a curve D is a polarization curve of a niobium-doped ruthenium oxide material obtained in Example 31, a curve E is a polarization curve of a titanium-doped ruthenium oxide material obtained in Example 32, and a curve F is a polarization curve of the commercial ruthenium oxide.

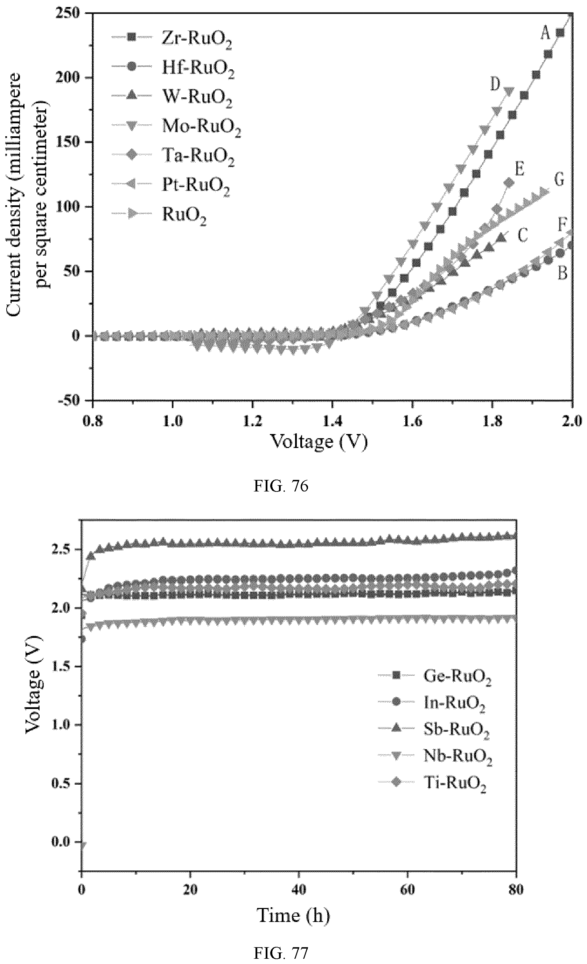

FIG. 76 is a polarization curve graph of an oxygen evolving reaction of transition metal doped ruthenium oxide nanometer materials obtained in Examples 33 to 38 of the present invention and commercial ruthenium oxide as an oxygen evolution anode material in a 0.5 mol/L H₂SO₄ solution, in which a curve A is a polarization curve of a zirconium-doped ruthenium oxide material obtained in Example 33, a curve B is a polarization curve of a hafnium-doped ruthenium oxide material obtained in Example 34, a curve C is a polarization curve of a tungsten-doped ruthenium oxide material obtained in Example 35, a curve D is a polarization curve of a molybdenum-doped ruthenium oxide material obtained in Example 36, a curve E is a polarization curve of a tantalum-doped ruthenium oxide material obtained in Example 37, a curve F is a polarization curve of a platinum-doped ruthenium oxide material obtained in Example 38, and a curve G is a polarization curve of the commercial ruthenium oxide.
FIG. 77 is stability curves obtained from the transition metal doped ruthenium oxide nanometer materials obtained in Examples 28 to 32 of the present invention under a current density of 200 milliampere per square centimeter.
FIG. 78 is stability curves obtained from the transition metal doped ruthenium oxide nanometer materials obtained in Examples 33 to 38 of the present invention under a current density of 200 milliampere per square centimeter.

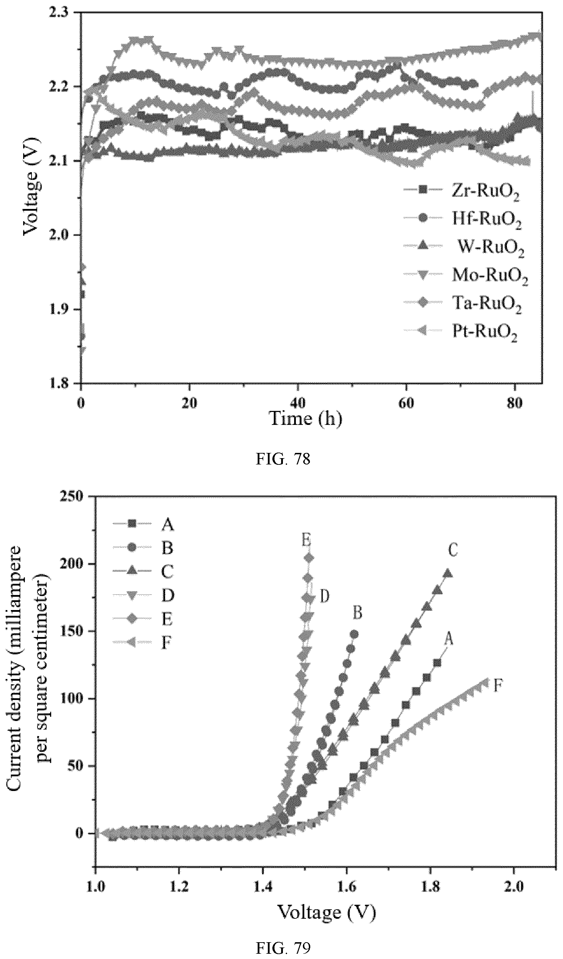

FIG. 79 is a polarization curve graph of an oxygen evolving reaction of manganese-doped ruthenium oxide nanometer materials obtained in Examples 39 to 43 of the present invention and commercial ruthenium oxide as an oxygen evolution anode material in a 0.5 mol/L H₂SO₄ solution, in which a curve A is a polarization curve of the manganese-doped ruthenium oxide material obtained in Example 39, a curve B is a polarization curve of the manganese-doped ruthenium oxide material obtained in Example 40, a curve C is a polarization curve of the manganese-doped ruthenium oxide material obtained in Example 41, a curve D is a polarization curve of the manganese-doped ruthenium oxide material obtained in Example 42, a curve E is a polarization curve of the manganese-doped ruthenium oxide material obtained in Example 43, and F is a polarization curve of the commercial ruthenium oxide.
FIG. 80 is stability curves obtained from the manganese-doped ruthenium oxide nanometer materials obtained in Examples 39 to 43 of the present invention under a current density of 200 milliampere per square centimeter.
FIG. 81 is a constant current test curve of commercial ruthenium dioxide under a current density of 100 milliampere per square centimeter.

### DETAILED DESCRIPTION OF THE EMBODIMENTS

The present invention will be further explained below through examples, but is not limited to the present examples. Experimental methods that do not specify specific conditions in the examples are usually carried out under conventional conditions and the conditions described in the manual, or according to the conditions recommended by manufacturers. General devices, materials, reagents, etc. used can be obtained through commercial channels unless otherwise stated. Raw materials required in the following examples and comparative examples are all commercially available.

In the following experiments, the water electrolysis oxygen evolution activity of an acid-insoluble metal oxide doped ruthenium oxide nanometer material of the present invention is tested using a three-electrode system to obtain polarization curves. Three-electrode system: a reference electrode is a silver/silver chloride electrode, a counter electrode is a platinum gauze electrode, and a working electrode is an acid-insoluble metal oxide doped ruthenium oxide nanometer material obtained in the examples. When comparison is required, other specific materials below are used for comparison by the working electrode.

In the following experiments, the water electrolysis oxygen evolution stability of an acid-insoluble metal oxide doped ruthenium oxide nanometer material of the present invention is tested using a two-electrode system to obtain stability curves. Two-electrode system: a cathode is a platinum gauze electrode, and an anode is an acid-insoluble metal oxide doped ruthenium oxide nanometer material obtained in the examples. When comparison is required, other specific materials below are used for comparison by the working electrode.

### Example 1-Sol-gel method

A preparation method of a niobium-doped ruthenium oxide nanometer material included the following steps:
(1) an ethanol solution of ruthenium chloride and an ethanol solution of niobium chloride were placed in a glass reactor, and in the glass reactor, a concentration of the ruthenium chloride was controlled to be 0.1 mol/L, and a concentration of the niobium chloride was controlled to be 0.025 mol/L. A lid of the glass reactor was sealed to prevent hydrolysis of a precursor. The sealed glass reactor was dispersed for 3 h under an ultrasonic condition to obtain a metal ethanol solution with a uniform color.
   Polyvinylpyrrolidone powder was then added into this solution (controlling a concentration of a ligand polyvinylpyrrolidone to be 40 g/L), and sealed ultrasonic was continued for 1 h to obtain a mixed solution with a uniform color. Then the glass reactor was placed in a constant temperature oil bath pan, and temperature preservation was performed for 12 h at a constant temperature of 70°C. Afterwards, the lid was opened, and a solvent was volatilized to dryness to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, natural cooling was performed after temperature preservation of 5 h to obtain a black powder sample, and the niobium-doped ruthenium oxide nanometer material was obtained after washing with deionized water and ethanol many times and drying, wherein a doping amount of niobium was 20%. A calculation formula of the doping amount of niobium was N niobium/(N niobium + N ruthenium)=1/5=20%.

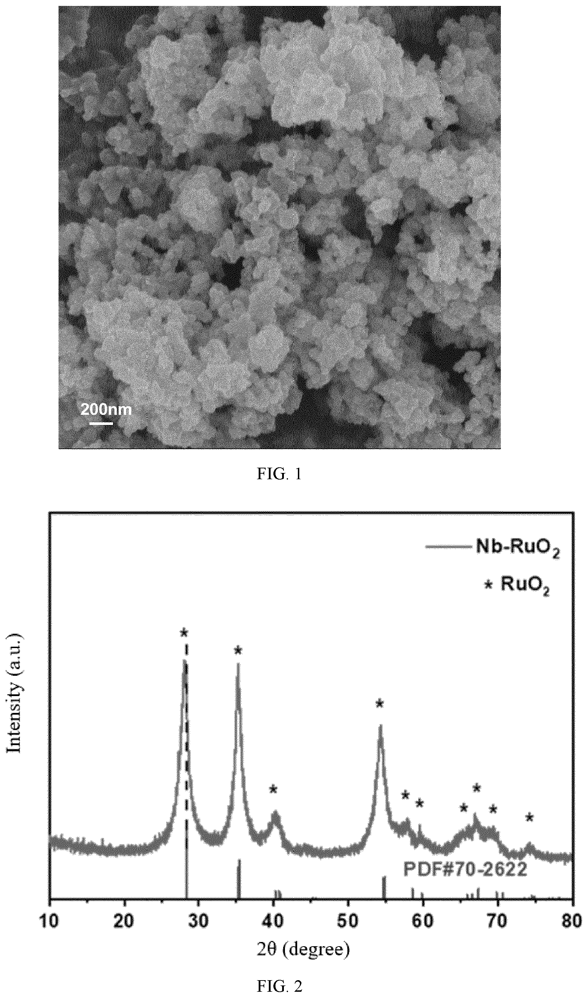

The niobium-doped ruthenium oxide nanometer material is represented:
see FIG. 1 for a scanning electron microscopy diagram of the obtained niobium-doped ruthenium oxide nanometer material, and see FIG. 2 for its XRD spectrogram. It can be seen from FIG. 1 that a particle size of the niobium-doped ruthenium oxide nanometer material is small, ranging from 50 nm to 200 nm, and particles are quite uniform and have rough and porous surfaces.
See FIG. 2 for the XRD spectrogram of the obtained niobium-doped ruthenium oxide nanometer material. It can be seen from FIG. 2 that the niobium-doped ruthenium oxide nanometer material exhibits a characteristic peak of rutile-phase ruthenium oxide, and compared to a standard card of the rutile-phase ruthenium oxide, a diffraction peak of the niobium-doped ruthenium oxide moves towards a low angle without a diffraction peak of any niobium oxide, indicating that the niobium element is successfully doped into lattices of the ruthenium oxide without producing a split phase. That is, in the niobium-doped ruthenium oxide nanometer material, niobium is doped into the lattices of the ruthenium oxide to replace a position of ruthenium in part of the lattices.

Therefore, FIG. 2 proves that a molecular formula of the material is NbₓRu₁₋ₓO₂.

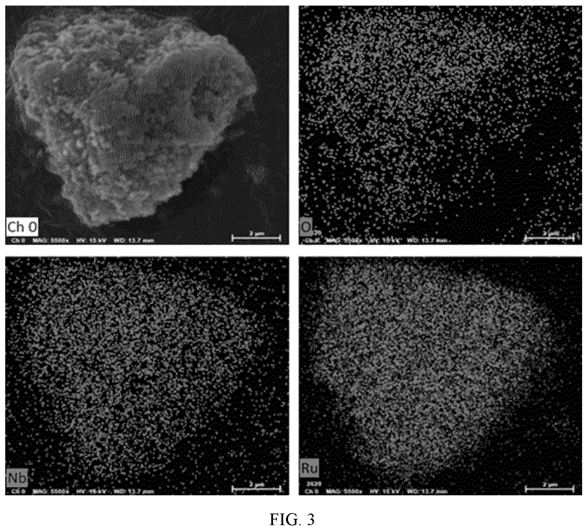

An element distribution diagram of the obtained niobium-doped ruthenium oxide nanometer material is as shown in FIG. 3. It can be seen from FIG. 3 that the niobium-doped ruthenium oxide nanometer material has uniform element distribution, and particularly niobium and ruthenium are consistently distributed on whole particles, indicating that niobium is uniformly dispersed within crystals of the ruthenium oxide. Therefore, niobium and ruthenium are both uniformly dispersed in the niobium-doped ruthenium oxide nanometer material.

### Example 2--Sol-gel method

Referring to the method in Example 1, the ethanol solution of niobium chloride was replaced with an ethyl niobate aqueous solution, and polyvinylpyrrolidone was replaced with polyvinyl alcohol. The use amounts of ruthenium chloride and ethyl niobate were changed, and in the glass reactor, a concentration of the ethanol solution of ruthenium chloride was controlled to be 1 mol/L, and a solubility of the ethyl niobate aqueous solution was controlled to be 0.01 mol/L. Calcination conditions of the muffle furnace were: the temperature raising rate was 10 °C/min, a temperature preservation temperature was 400°C, and temperature preservation time was 5 hours.

The doping amount of niobium in the niobium-doped ruthenium oxide nanometer material was 1%. A calculation formula of the doping amount of niobium was N niobium/(N niobium + N ruthenium)=0.001/0.1=1%.

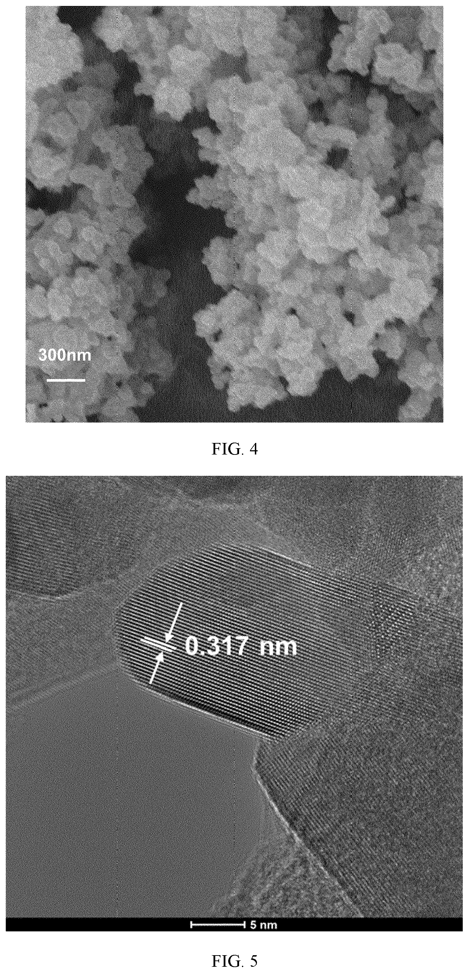

See FIG. 4 for a scanning electron microscopy diagram of the obtained niobium-doped ruthenium oxide nanometer material.

### Example 3----Sol-gel method

Referring to the method in Example 1, the ethanol solution of niobium chloride was replaced with an ethyl niobate aqueous solution, and polyvinylpyrrolidone was replaced with polyethylene glycol. The use amounts of ruthenium chloride and ethyl niobate were changed, and in the glass reactor, a concentration of the ethanol solution of ruthenium chloride was controlled to be 1 mol/L, and a solubility of the ethyl niobate aqueous solution was controlled to be 1 mol/L. The doping amount of niobium in the niobium-doped ruthenium oxide nanometer material was 50%. Calcination conditions of the muffle furnace were: the temperature raising rate was 10 °C/min, a temperature preservation temperature was 400°C, and temperature preservation time was 5 hours.

The doping amount of niobium in the niobium-doped ruthenium oxide nanometer material was 50%. A calculation formula of the doping amount of niobium was N niobium/(N niobium + N ruthenium)=25/50=50%.

See FIG. 5 for a high-resolution transmission electron microscopy diagram of the obtained niobium-doped ruthenium oxide nanometer material. In the figure, 0.317 nm corresponds to 110 crystal planes of the ruthenium oxide.

### Example 4--Sol-gel method

Referring to the method in Example 1, the ethanol solution of niobium chloride was replaced with an ethyl niobate aqueous solution, and polyvinylpyrrolidone was replaced with polyethylene diamine. The use amounts of ruthenium chloride and ethyl niobate were changed, and in the glass reactor, a concentration of the ethanol solution of ruthenium chloride was controlled to be 0.8 mol/L, and a solubility of the ethyl niobate aqueous solution was controlled to be 0.2 mol/L. Calcination conditions of the muffle furnace were: the temperature raising rate was 10 °C/min, a temperature preservation temperature was 400°C, and temperature preservation time was 5 hours.

The doping amount of niobium in the niobium-doped ruthenium oxide nanometer material was 20%. A calculation formula of the doping amount of niobium was N niobium/(N niobium + N ruthenium)=2/10=20%.

See FIG. 6 for a high-resolution transmission electron microscopy diagram of the obtained niobium-doped ruthenium oxide nanometer material. In the figure, 0.256 nm and 0.316 nm correspond to 101 crystal planes and 110 crystal planes of the ruthenium oxide, and it can be seen that due to the reduction of the doping amount of niobium, compared to Example 3, a lattice distance in Example 4 is decreased.

### Example 5--Sol-gel method

Referring to the method in Example 1, the ethanol solution of niobium chloride was replaced with a carbonyl niobium aqueous solution, and polyvinylpyrrolidone was replaced with polylactic acid. The use amounts of ruthenium chloride and carbonyl niobium were changed, and in the glass reactor, a concentration of the ethanol solution of ruthenium chloride was controlled to be 0.8 mol/L, and a solubility of the carbonyl niobium aqueous solution was controlled to be 0.2 mol/L. Calcination conditions of the muffle furnace were: the temperature raising rate was 10 °C/min, a temperature preservation temperature was 400°C, and temperature preservation time was 5 hours.

The doping amount of niobium in the niobium-doped ruthenium oxide nanometer material was 20%. A calculation formula of the doping amount of niobium was N niobium/(N niobium + N ruthenium)=2/10=20%.

See FIG. 7 for a scanning electron microscopy diagram of the obtained niobium-doped ruthenium oxide nanometer material.

### Example 6--Sol-gel method

Referring to the method in Example 1, polyvinylpyrrolidone was replaced with polypyridine. The ethanol solution of niobium chloride was replaced with an ammonium niobium oxalate aqueous solution. Ruthenium chloride was replaced with ruthenium acetylacetone. The use amount of ethylene diamine tetraacetic acid was changed to 60 mg, that is, a concentration of the ligand was controlled to be 1 g/L. Calcination conditions of the muffle furnace were: the temperature raising rate was 10 °C/min, a temperature preservation temperature was 500°C, and temperature preservation time was 6 hours. The doping amount of niobium in the niobium-doped ruthenium oxide nanometer material was 20%.

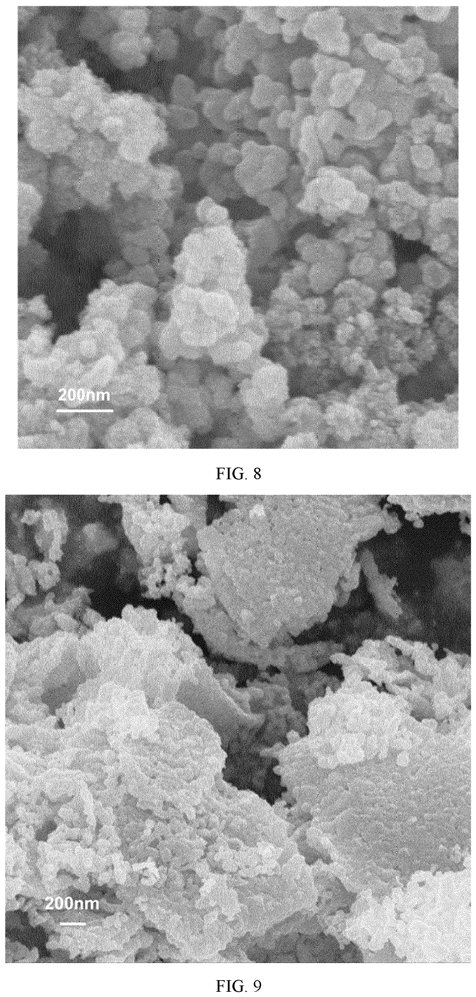

See FIG. 8 for scanning electron microscopy of the obtained niobium-doped ruthenium oxide nanometer material. It can be seen from FIG. 8 that a particle size of the niobium-doped ruthenium oxide nanometer material is small, ranging from 50 nm to 200 nm, and particles are quite uniform and have rough and porous surfaces.

### Example 7--Sol-gel method

Referring to the method in Example 1, the ethanol solution of niobium chloride was changed to a niobium oxalate aqueous solution, and polyvinylpyrrolidone was changed to polyamide. Ruthenium chloride was replaced with ruthenium nitrosylnitrate. The doping amount of niobium in the niobium-doped ruthenium oxide nanometer material was 20%.

See FIG. 9 for scanning electron microscopy of the obtained niobium-doped ruthenium oxide nanometer material. It can be seen from FIG. 9 that a particle size of the niobium-doped ruthenium oxide nanometer material is small, ranging from 50 nm to 200 nm, and particles are quite uniform and have rough and porous surfaces.

### Example 8-Solvothermal method

(1) An aqueous solution of ruthenium chloride and niobium oxalate was placed in a 40 ml hydrothermal reactor, it was controlled to perform ultrasonic for 15 minutes to completely dissolve a precursor, a concentration of the ruthenium chloride was 0.1 mol/L, and a concentration of the niobium oxalate was 0.001mol/L. 4 mol/L of urea was added, the hydrothermal reactor was placed in a constant-temperature 100°C blasting oven, temperature preservation was carried out for 8 hours, the hydrothermal reactor was taken out, after natural cooling to the room temperature, sediment generated by a reaction was taken out, and after centrifugal washing with deionized water many times, a product was placed into an 80°C oven to be dried.
(2) The above dried powder sample was placed into a porcelain boat and the porcelain boat was placed into a muffle furnace: a temperature raising rate was set to be 5 °C/min, a temperature was raised to 400°C, natural cooling was performed after 2 h of temperature preservation to obtain a black powder sample, and thus the niobium-doped ruthenium oxide nanometer material was obtained, wherein a doping amount of niobium was 1%. A calculation formula of the doping amount of niobium was N niobium/(N niobium + N ruthenium)=1/101=1%.

See FIG. 10 for an XRD diagram of the obtained niobium-doped ruthenium oxide nanometer material. It can be seen from FIG. 10 that the niobium element is successfully doped into lattices of the ruthenium oxide. That is, in the niobium-doped ruthenium oxide nanometer material, niobium is doped into the lattices of the ruthenium oxide to replace a position of ruthenium in part of the lattices. Therefore, FIG. 10 proves that a molecular formula of the material is NbₓRu₁₋ₓO₂.

### Example 9-Solvothermal method

(1) An aqueous solution of ruthenium chloride and niobium oxalate was placed in a 40 ml hydrothermal reactor, it was controlled to perform ultrasonic for 15 minutes to completely dissolve a precursor, a concentration of the ruthenium chloride was 1 mol/L, and a concentration of the niobium oxalate was 1 mol/L. 0.1 mol/L of ammonium hydroxide was added, the hydrothermal reactor was placed in a constant-temperature 200°C blasting oven, temperature preservation was carried out for 16 hours, the hydrothermal reactor was taken out, after natural cooling to the room temperature, sediment generated by a reaction was taken out, and after centrifugal washing with deionized water many times, a product was placed into an 80°C oven to be dried.
(2) The above dried powder sample was placed into a porcelain boat and the porcelain boat was placed into a muffle furnace: a temperature raising rate was set to be 10 °C/min, a temperature was raised to 600°C, natural cooling was performed after 8 h of temperature preservation to obtain a black powder sample, and thus the niobium-doped ruthenium oxide nanometer material was obtained, wherein a doping amount of niobium was 50%. A calculation formula of the doping amount of niobium was N niobium/(N niobium + N ruthenium)=1/2=50%.

See FIG. 11 for an XRD diagram of the obtained niobium-doped ruthenium oxide nanometer material. It can be seen from FIG. 11 that the niobium element is successfully doped into lattices of the ruthenium oxide. That is, in the niobium-doped ruthenium oxide nanometer material, niobium is doped into the lattices of the ruthenium oxide to replace a position of ruthenium in part of the lattices. Therefore, FIG. 11 proves that a molecular formula of the material is NbₓRu₁₋ₓO₂.

### Example 10-Ball milling method

Ruthenium oxide and niobium pentoxide were placed into a 40 ml ball milling tank and mixed evenly, the ruthenium oxide was 9 mol, and the niobium pentoxide was 9 mol. Time of ball milling was controlled to be 6 hours each time, ball milling was repeated twice, the above precursor powder sample which was ball-milled uniformly was placed into a porcelain boat and the porcelain boat was placed into a muffle furnace: a temperature raising rate was set to range from 5 °C/min to 10 °C/min, a temperature was raised to 800°C, natural cooling was performed after 6 h of temperature preservation to obtain a black powder sample, and thus the niobium-doped ruthenium oxide nanometer material was obtained, wherein a doping amount of niobium was 50%. A calculation formula of the doping amount of niobium was N niobium/(N niobium + N ruthenium)=9/18=50%.

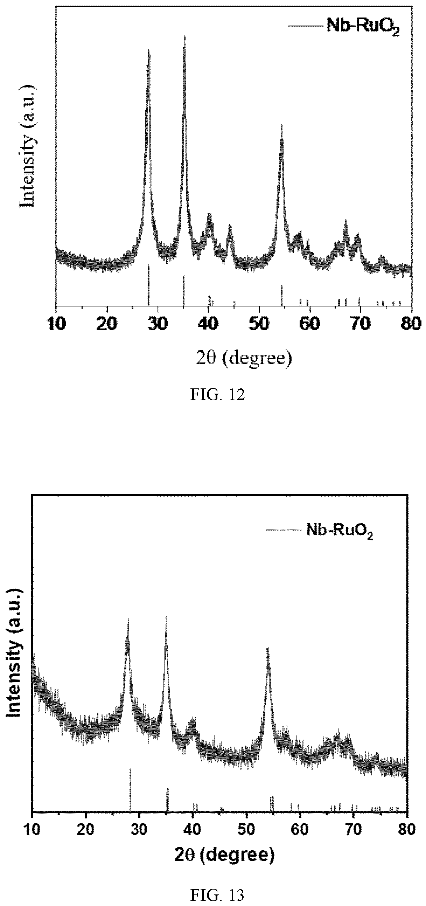

See FIG. 12 for XRD of the obtained niobium-doped ruthenium oxide nanometer material, and it can be seen that its crystal structure is still maintained as a crystal structure of the ruthenium oxide. It is expressed as NbₓRu₁₋ₓO₂.

### Example 11-Ball milling method

Ruthenium oxide and niobium pentoxide were placed into a 40 ml ball milling tank, the ruthenium oxide was 9.9 mol, the niobium pentoxide was 0.1 mol, time of ball milling was controlled to be 3 hours each time, and ball milling was repeated 3 times until a precursor was mixed evenly. The above precursor powder sample which was ball-milled uniformly was placed into a porcelain boat and the porcelain boat was placed into a muffle furnace: a temperature raising rate was set to range from 5 °C/min to 10 °C/min, a temperature was raised to 400°C, natural cooling was performed after 12 h of temperature preservation to obtain a black powder sample, and thus the niobium-doped ruthenium oxide nanometer material was obtained, wherein a doping amount of niobium was 10%. A calculation formula of the doping amount of niobium was N niobium/(N niobium + N ruthenium)=0.1/10=1%.

See FIG. 13 for a scanning electron microscopy diagram of the obtained niobium-doped ruthenium oxide nanometer material, it can be seen that the nanometer material is still porous, and a size ranges from 50 nm to 200 nm.

### Example 12-Titanium-doped ruthenium oxide

Referring to the method in Example 1, the ethanol solution of niobium chloride was replaced with a titanium chloride ethanol solution. In the glass reactor, a concentration of the ethanol solution of ruthenium chloride was controlled to be 1 mol/L, and a solubility of a titanium chloride solution was controlled to be 0.25 mol/L. Calcination conditions of the muffle furnace were: the temperature raising rate was 10 °C/min, a temperature preservation temperature was 400°C, and temperature preservation time was 5 hours.

A doping amount of titanium in a titanium-doped ruthenium oxide nanometer material was 20%. A calculation formula of the doping amount of titanium was N titanium/(N titanium + N ruthenium)=0.25/1.25=20%.

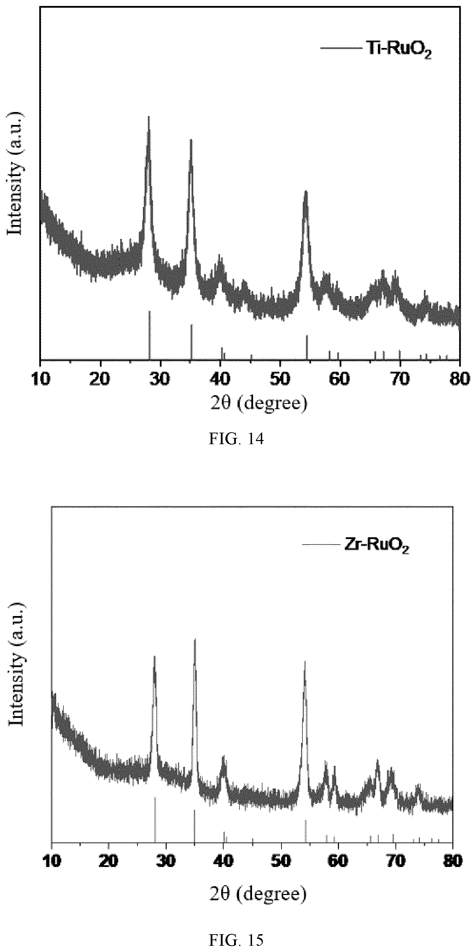

See FIG. 14 for an XRD diagram of the titanium-doped ruthenium oxide nanometer material obtained in Example 12. It can be seen from FIG. 14 that the titanium element is successfully doped into lattices of the ruthenium oxide. That is, in the titanium-doped ruthenium oxide nanometer material, titanium is doped into the lattices of the ruthenium oxide to replace a position of ruthenium in part of the lattices. Therefore, FIG. 14 proves that a molecular formula of the material is TiₓRu₁₋ₓO₂.

### Example 13-Zirconium-doped ruthenium oxide

(1) An aqueous solution of ruthenium chloride and zirconium chloride was placed in a 40 ml hydrothermal reactor,, it was controlled to perform ultrasonic for 15 minutes to completely dissolve a precursor, a concentration of the ruthenium chloride was 1 mol/L, and a concentration of the zirconium chloride was 0.25 mol/L. 0.2 g of ammonium hydroxide was added, the hydrothermal reactor was placed in a constant-temperature 200°C blasting oven, temperature preservation was carried out for 16 hours, the hydrothermal reactor was taken out, after natural cooling to the room temperature, sediment generated by a reaction was taken out, and after centrifugal washing with deionized water many times, a product was placed into an 80°C oven to be dried.
(2) The above dried powder sample was placed into a porcelain boat and the porcelain boat was placed into a muffle furnace: a temperature raising rate was set to be 10 °C/min, a temperature was raised to 600°C, natural cooling was performed after 8 h of temperature preservation to obtain a black powder sample, and thus a zirconium-doped ruthenium oxide nanometer material was obtained, wherein a doping amount of zirconium was 20%. A calculation formula of the doping amount of zirconium was N zirconium/(N zirconium + N ruthenium)=0.25/1.25=20%.

See FIG. 15 for an XRD diagram of the obtained zirconium-doped ruthenium oxide nanometer material. It can be seen from FIG. 15 that the zirconium element is successfully doped into lattices of the ruthenium oxide. That is, in the zirconium-doped ruthenium oxide nanometer material, zirconium is doped into lattices of the ruthenium oxide to replace a position of ruthenium in part of the lattices. Therefore, FIG. 15 proves that a molecular formula of the material is ZrₓRu₁₋ₓO₂.

### Example 14-Hafnium-doped ruthenium oxide

Ruthenium oxide and hafnium oxide were placed into a 40 ml ball milling tank and mixed evenly, the ruthenium oxide was 8 mol, and the hafnium oxide was 2 mol. Time of ball milling was controlled to be 6 hours each time, ball milling was repeated twice, the above precursor powder sample which was ball-milled uniformly was placed into a porcelain boat and the porcelain boat was placed into a muffle furnace: a temperature raising rate was set to range from 5 °C/min to 10 °C/min, a temperature was raised to 800°C, natural cooling was performed after 6 h of temperature preservation to obtain a black powder sample, and thus a hafnium-doped ruthenium oxide nanometer material was obtained, wherein a doping amount of hafnium was 20%. A calculation formula of the doping amount of hafnium was N hafnium/(N hafnium + N ruthenium)=2/10=20%.

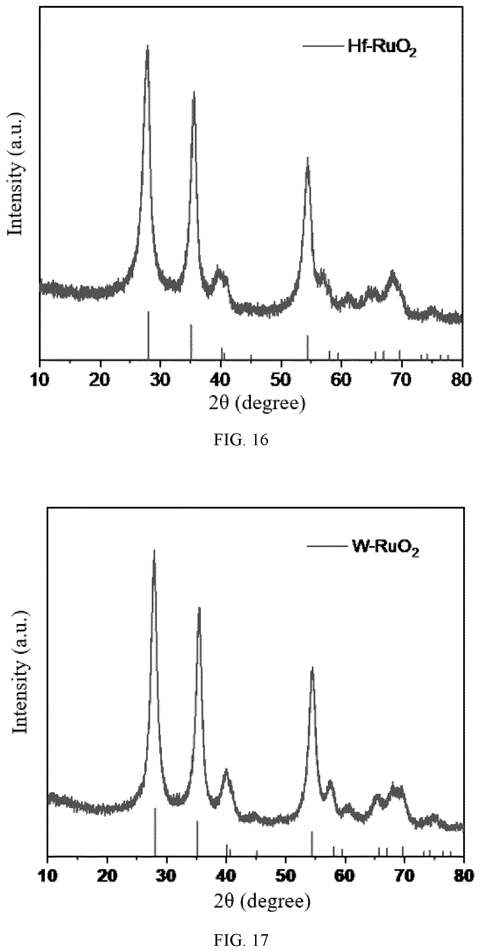

See FIG. 16 for XRD of the obtained hafnium-doped ruthenium oxide nanometer material, and it can be seen that its crystal structure is still maintained as a crystal structure of the ruthenium oxide. It is expressed as HfₓRu₁₋ₓO₂.

### Example 15-Tungsten-doped ruthenium oxide

Ruthenium oxide and tungsten oxide were placed into a 40 ml ball milling tank and mixed evenly, the ruthenium oxide was 8 mol, and the tungsten oxide was 2 mol. Time of ball milling was controlled to be 6 hours each time, ball milling was repeated twice, the above precursor powder sample which was ball-milled uniformly was placed into a porcelain boat and the porcelain boat was placed into a muffle furnace: a temperature raising rate was set to range from 5 °C/min to 10 °C/min, a temperature was raised to 800°C, natural cooling was performed after 6 h of temperature preservation to obtain a black powder sample, and thus a tungsten-doped ruthenium oxide nanometer material was obtained, wherein a doping amount of tungsten was 20%. A calculation formula of the doping amount of tungsten was N tungsten/(N tungsten + N ruthenium)=2/10=20%.

See FIG. 17 for XRD of the obtained tungsten-doped ruthenium oxide nanometer material, and it can be seen that its crystal structure is still maintained as a crystal structure of the ruthenium oxide. It is expressed as WₓRu₁₋ₓO₂.

### Example 16-Molybdenum-doped ruthenium oxide

Referring to the method in Example 1, the ethanol solution of niobium chloride was replaced with a molybdenum chloride ethanol solution. In the glass reactor, a concentration of the ethanol solution of ruthenium chloride was controlled to be 1 mol/L, and a solubility of the molybdenum chloride solution was controlled to be 0.25 mol/L. Calcination conditions of the muffle furnace were: the temperature raising rate was 10 °C/min, a temperature preservation temperature was 400°C, and temperature preservation time was 5 hours.

A doping amount of molybdenum in a molybdenum-doped ruthenium oxide nanometer material was 20%. A calculation formula of the doping amount of molybdenum was N molybdenum/(N molybdenum + N ruthenium)=0.25/1.25=20%.

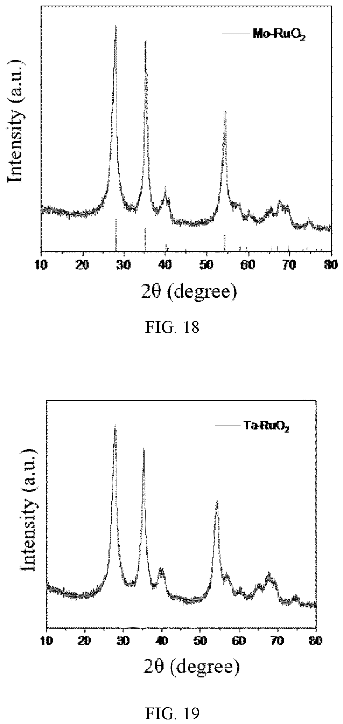

See FIG. 18 for an XRD diagram of the obtained molybdenum-doped ruthenium oxide nanometer material. It can be seen from FIG. 18 that the molybdenum element is successfully doped into lattices of the ruthenium oxide. That is, in the molybdenum-doped ruthenium oxide nanometer material, molybdenum is doped into the lattices of the ruthenium oxide to replace a position of ruthenium in part of the lattices. Therefore, FIG. 18 proves that a molecular formula of the material is MoₓRu₁₋ₓO₂.

### Example 17-Tantalum-doped ruthenium oxide

Referring to the method in Example 1, the ethanol solution of niobium chloride was replaced with a tantalum chloride ethanol solution. In the glass reactor, a concentration of the ethanol solution of ruthenium chloride was controlled to be 1 mol/L, and a solubility of the tantalum chloride solution was controlled to be 0.25 mol/L. Calcination conditions of the muffle furnace were: the temperature raising rate was 10 °C/min, a temperature preservation temperature was 400°C, and temperature preservation time was 5 hours.

A doping amount of tantalum in a tantalum-doped ruthenium oxide nanometer material was 20%. A calculation formula of the doping amount of tantalum was N tantalum/(N tantalum + N ruthenium)=0.25/1.25=20%.

See FIG. 19 for an XRD diagram of the obtained tantalum-doped ruthenium oxide nanometer material. It can be seen from FIG. 19 that the tantalum element is successfully doped into lattices of the ruthenium oxide. That is, in the tantalum-doped ruthenium oxide nanometer material, tantalum is doped into the lattices of the ruthenium oxide to replace a position of ruthenium in part of the lattices. Therefore, FIG. 19 proves that a molecular formula of the material is TaₓRu₁₋ₓO₂.

### Application Example 1

A three-electrode system was used to test water electrolysis oxygen evolution performance of a niobium-doped ruthenium oxide nanometer material of the present invention: a reference electrode was a silver-silver chloride electrode, a counter electrode was a platinum gauze electrode, a working electrode was a niobium-doped ruthenium oxide nanometer material obtained in Examples 1 to 3 or commercial ruthenium dioxide, testing was carried out in a 0.5 mol/L sulfuric acid solution, and obtained polarization curves were as shown in FIG. 20.

It can be seen from FIG. 20 that the niobium-doped ruthenium oxide nanometer material obtained in Examples 1 to 3 has good water electrolysis oxygen evolution performance (curves A-C in FIG. 20), which is obviously superior to the commercial ruthenium dioxide material (a curve D in FIG. 20), and overpotentials under a current density of 10 milliampere per square centimeter are 196 millivolts, 219 millivolts and 240 millivolts in sequence, which are lower than 320 millivolts of the commercial ruthenium dioxide.

### Application Example 2

FIG. 21 is stability curves of a niobium-doped ruthenium oxide material obtained in Example 1 and Example 2 of the present invention as an oxygen evolution anode material in a 0.5 mol/L H₂SO₄ solution, in which a curve A is a stability curve of the niobium-doped ruthenium oxide material obtained in Example 1 under a current density of 100 milliampere per square centimeter, a curve B is a stability curve of the niobium-doped ruthenium oxide material obtained in Example 2 under a current density of 100 milliampere per square centimeter, a curve C is a stability curve of the niobium-doped ruthenium oxide material obtained in Example 1 under a current density of 200 milliampere per square centimeter, and a curve D is a stability curve of the niobium-doped ruthenium oxide material obtained in Example 2 under a current density of 200 milliampere per square centimeter.

It can be seen from FIG. 21 that, by being kept for 360 hours under the current densities of 100 and 200 milliampere per square centimeter, the niobium-doped ruthenium oxide nanometer material obtained in Example 1 and Example 2 barely attenuates in current, indicating that the niobium-doped ruthenium oxide nanometer material has extremely high stability under a large current density when used as an oxygen evolving reaction anode material.

### Application Example 3

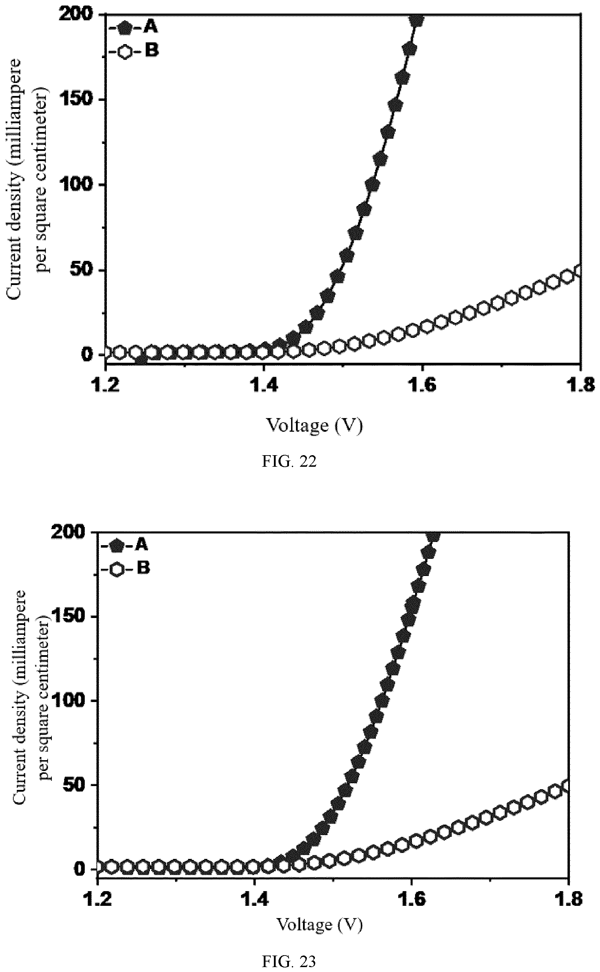

A three-electrode system was used to test water electrolysis oxygen evolution performance of a niobium-doped ruthenium oxide nanometer material of the present invention: a reference electrode was a silver-silver chloride electrode, a counter electrode was a platinum gauze electrode, a working electrode was a niobium-doped ruthenium oxide nanometer material obtained in Example 5 or commercial ruthenium dioxide, testing was carried out in a 0.5 mol/L sulfuric acid solution, and obtained polarization curves were as shown in FIG. 22.

It can be seen from FIG. 22 that an overpotential of the niobium-doped ruthenium oxide nanometer material prepared in Example 5 under 10 milliampere per square centimeter in an oxygen evolving reaction is 200 millivolts (a curve A in FIG. 22), which is obviously lower than 320 millivolts of the commercial ruthenium dioxide (a curve B in FIG. 22), and it proves that the niobium-doped ruthenium oxide obtained in Example 5 has the better oxygen evolving reaction activity than the commercial ruthenium dioxide.

### Application Example 4

A three-electrode system was used to test water electrolysis oxygen evolving reaction activity of a niobium-doped ruthenium oxide nanometer material of the present invention: a reference electrode was a silver/silver chloride electrode, a counter electrode was a platinum gauze electrode, and a working electrode was an acid-insoluble metal oxide doped ruthenium oxide nanometer material obtained in Examples 6, 7, 8, 10 and 12 to 17 or commercial ruthenium dioxide.

A two-electrode system was used to test water electrolysis oxygen evolving reaction stability of an acid-insoluble metal oxide doped ruthenium oxide nanometer material of the present invention: an anode was an acid-insoluble metal oxide doped ruthenium oxide nanometer material obtained in Examples 6, 7, 8, 10 and 12 to 17 or commercial ruthenium oxide, and a cathode was a platinum gauze electrode.

FIG. 23 is polarization curves obtained by testing a niobium-doped ruthenium oxide nanometer material obtained in Example 6 and commercial ruthenium dioxide in a 0.5 mol/L sulfuric acid solution. It can be seen from FIG. 23 that an overpotential of the niobium-doped ruthenium oxide nanometer material prepared in Example 6 under 10 milliampere per square centimeter in an oxygen evolving reaction is 226 millivolts (a curve A in FIG. 23), which is lower than 320 millivolts of the commercial ruthenium dioxide (a curve B in FIG. 23), and it proves that the niobium-doped ruthenium oxide prepared in Example 6 has the better oxygen evolving reaction activity.

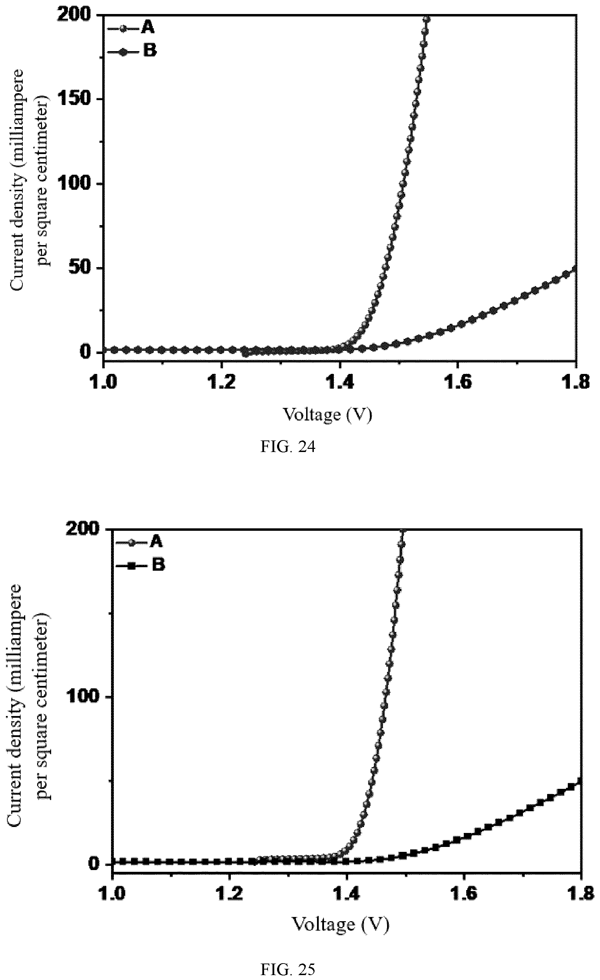

FIG. 24 is polarization curves obtained by testing a niobium-doped ruthenium oxide material obtained in Example 7 and commercial ruthenium dioxide in a 0.5 mol/L sulfuric acid solution. It can be seen from FIG. 24 that an overpotential of the niobium-doped ruthenium oxide nanometer material prepared in Example 7 under 10 milliampere per square centimeter in an oxygen evolving reaction is 210 millivolts (a curve A in FIG. 24), which is lower than 320 millivolts of the commercial ruthenium dioxide (a curve B in FIG. 24), and it proves that the niobium-doped ruthenium oxide prepared in Example 7 has the better oxygen evolving reaction activity.

FIG. 25 is polarization curves obtained by testing a niobium-doped ruthenium oxide material obtained in Example 8 and commercial ruthenium dioxide in a 0.5 mol/L sulfuric acid solution. It can be seen from FIG. 25 that an overpotential of the niobium-doped ruthenium oxide nanometer material prepared in Example 8 under 10 milliampere per square centimeter in an oxygen evolving reaction is 170 millivolts (a curve A in FIG. 25), which is lower than 320 millivolts of the commercial ruthenium dioxide (a curve B in FIG. 25), and it proves that the niobium-doped ruthenium oxide prepared in Example 8 has the better oxygen evolving reaction activity.

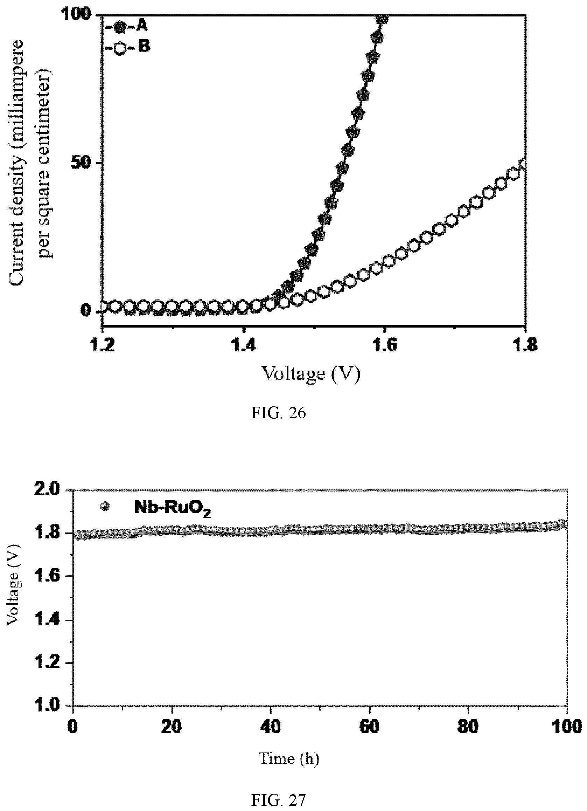

FIG. 26 is polarization curves obtained by testing a niobium-doped ruthenium oxide material obtained in Example 10 and commercial ruthenium dioxide in a 0.5 mol/L sulfuric acid solution. It can be seen from FIG. 26 that an overpotential of the niobium-doped ruthenium oxide nanometer material prepared in Example 10 under 10 milliampere per square centimeter in an oxygen evolving reaction is 240 millivolts (a curve A in FIG. 26), which is lower than 320 millivolt of the commercial ruthenium dioxide (a curve B in FIG. 26), and it proves that the niobium-doped ruthenium oxide prepared in Example 10 has the better oxygen evolving reaction activity.

FIG. 27 is a stability curve obtained from the niobium-doped ruthenium oxide material obtained in Example 5 under a current density of 100 milliampere per square centimeter. It can be seen from FIG. 27 that, by being kept for 100 hours under the current density of 100 milliampere per square centimeter, the niobium-doped ruthenium oxide nanometer material obtained in Example 5 barely attenuates in current, indicating that the niobium-doped ruthenium oxide nanometer material has extremely high stability under a large current density when used as an oxygen evolving reaction anode material.

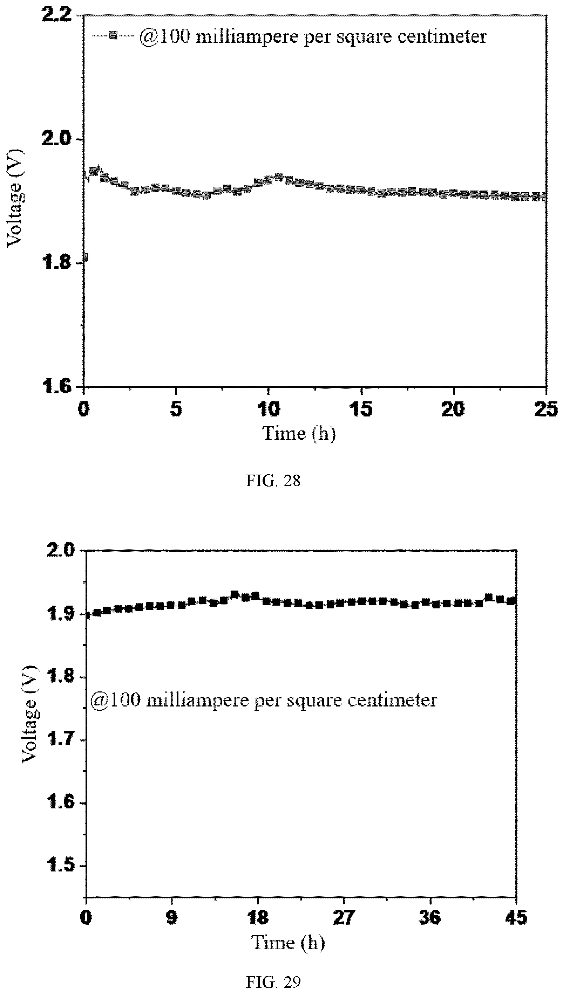

FIG. 28 is a stability curve obtained from the niobium-doped ruthenium oxide material obtained in Example 7 under a current density of 100 milliampere per square centimeter. It can be seen from FIG. 28 that, by being kept for 25 hours under the current density of 100 milliampere per square centimeter, the niobium-doped ruthenium oxide nanometer material obtained in Example 7 barely attenuates in current, indicating that the niobium-doped ruthenium oxide nanometer material has extremely high stability under a large current density when used as an oxygen evolving reaction anode material.

FIG. 29 is a stability curve obtained from the niobium-doped ruthenium oxide material obtained in Example 8 under a current density of 100 milliampere per square centimeter. It can be seen from FIG. 29 that, by being kept for 45 hours under the current density of 100 milliampere per square centimeter, the niobium-doped ruthenium oxide nanometer material obtained in Example 8 barely attenuates in current, indicating that the niobium-doped ruthenium oxide nanometer material has extremely high stability under a large current density when used as an oxygen evolving reaction anode material.

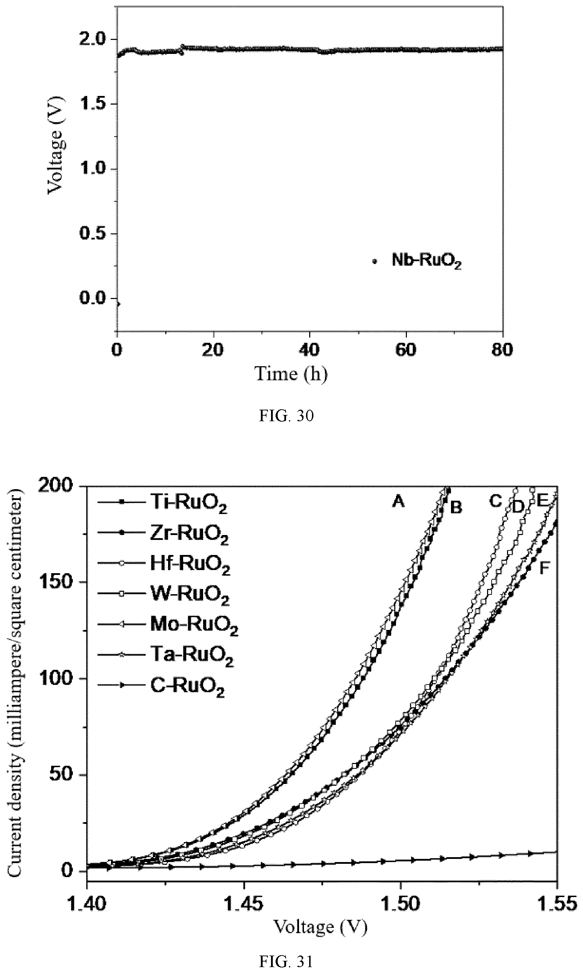

FIG. 30 is a stability curve obtained from the niobium-doped ruthenium oxide material obtained in Example 10 under a current density of 100 milliampere per square centimeter. It can be seen from FIG. 30 that, by being kept for 80 hours under the current density of 100 milliampere per square centimeter, the niobium-doped ruthenium oxide nanometer material obtained in Example 10 barely attenuates in current, indicating that the niobium-doped ruthenium oxide nanometer material has extremely high stability under a large current density when used as an oxygen evolving reaction anode material.

FIG. 31 is polarization curves obtained by testing metal-doped ruthenium oxide materials obtained in Examples 12 to 17 in a 0.5 mol/L sulfuric acid solution. It can be seen from FIG. 31 that, an overpotential of a titanium-doped ruthenium oxide nanometer material prepared in Example 12 under 10 milliampere per square centimeter in an oxygen evolving reaction is 194 millivolts (a curve B in FIG. 31), an overpotential of a zirconium-doped ruthenium oxide nanometer material prepared in Example 13 under 10 milliampere per square centimeter in an oxygen evolving reaction is 200 millivolts (a curve F in FIG. 31), an overpotential of a hafnium-doped ruthenium oxide nanometer material prepared in Example 14 under 10 milliampere per square centimeter in an oxygen evolving reaction is 210 millivolts (a curve C in FIG. 31), an overpotential of a tungsten-doped ruthenium oxide nanometer material prepared in Example 15 under 10 milliampere per square centimeter in an oxygen evolving reaction is 214 millivolts (a curve D in FIG. 31), an overpotential of a molybdenum-doped ruthenium oxide nanometer material prepared in Example 16 under 10 milliampere per square centimeter in an oxygen evolving reaction is 194 millivolts (a curve A in FIG. 31), and an overpotential of a tantalum-doped ruthenium oxide nanometer material prepared in Example 17 under 10 milliampere per square centimeter in an oxygen evolving reaction is 209 millivolts (a curve E in FIG. 31), which are all lower than 320 millivolts of the commercial ruthenium dioxide (the curve B in FIG. 26), and it proves that the metal-doped ruthenium oxide prepared in Examples 12 to 17 has the better oxygen evolving reaction activity.

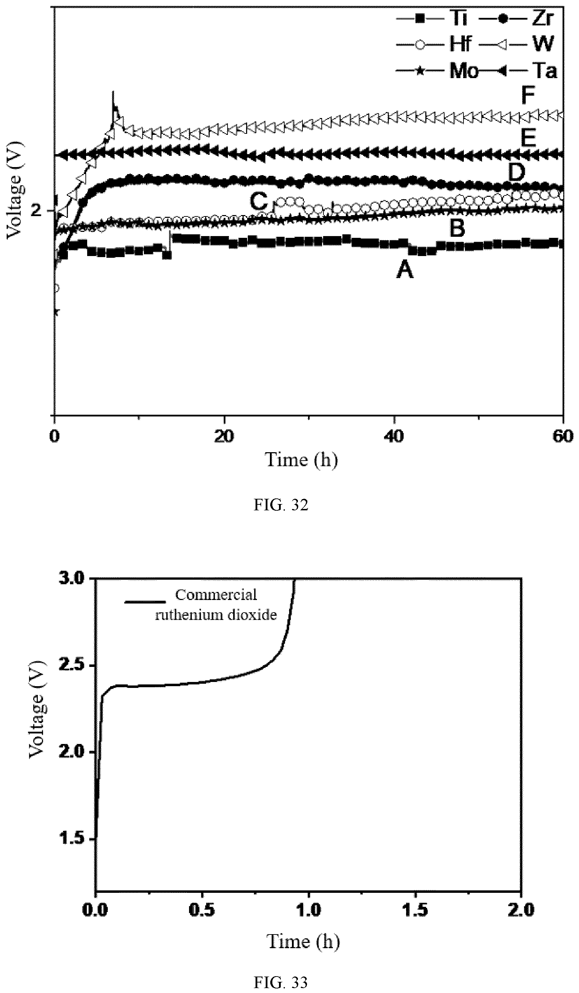

FIG. 32 is stability curves obtained from the metal-doped ruthenium oxide materials obtained in Examples 12 to 17 under a current density of 100 milliampere per square centimeter. A is a stability curve of the titanium-doped ruthenium oxide prepared in Example 12, D is a stability curve of the zirconium-doped ruthenium oxide prepared in Example 13, C is a stability curve of the hafnium-doped ruthenium oxide prepared in Example 14, F is a stability curve of the tungsten-doped ruthenium oxide prepared in Example 15, B is a stability curve of the molybdenum-doped ruthenium oxide prepared in Example 16, and E is a stability curve of the tantalum-doped ruthenium oxide prepared in Example 17. It can be seen from FIG. 32 that, by being kept for 60 hours under the current density of 100 milliampere per square centimeter, the metal-doped ruthenium oxide nanometer materials obtained in Examples 12 to 17 barely attenuate in current, indicating that the above metal-doped ruthenium oxide nanometer materials have extremely high stability under a large current density when used as an oxygen evolving reaction anode material.

FIG. 33 is a constant current test curve of commercial ruthenium dioxide under a current density of 100 milliampere per square centimeter, and a current is attenuated by 500 millivolts or above after 1 hour of testing.

FIG. 19 to FIG. 34 show that the niobium-doped ruthenium oxide nanometer material of the present invention is excellent in activity and stability of water electrolysis oxygen evolution, which are both superior to the commercial ruthenium dioxide material.

The above sufficiently proves that niobium may be doped into the lattices of the ruthenium oxide through a simple method, namely the niobium-doped ruthenium oxide nanometer material. The niobium-doped ruthenium oxide nanometer material has rough nanometer structures on the surface, and has excellent electrochemical oxygen evolving reaction performance.

### Comparative Example 1

In order to highlight the stability of an acid-insoluble metal doped catalyst, referring to the preparation method in Example 1, niobium chloride was changed to iron chloride, and an iron-doped ruthenium oxide nanometer material was prepared.

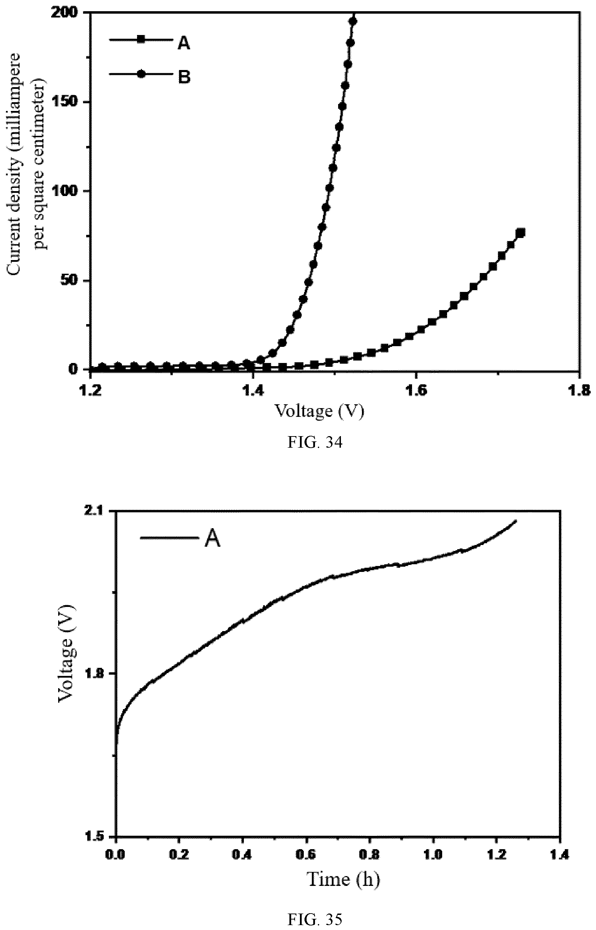

The iron-doped ruthenium oxide nanometer material was tested as an oxygen evolving reaction anode material, and its polarization curve and stability curve were tested, as shown in FIG. 34 and FIG. 35.

As shown in FIG. 34, a curve A is an oxygen evolving reaction polarization curve of the iron-doped ruthenium oxide nanometer material obtained in Comparative Example 1, and a curve B is an oxygen evolving reaction polarization curve of the niobium-doped ruthenium oxide nanometer material obtained in Example 1. It can be seen from FIG. 34 that: an overpotential of the niobium-doped ruthenium oxide under 10 milliampere per square centimeter is 196 millivolts, while an overpotential of the iron-doped ruthenium oxide is 320 millivolts. Therefore, the niobium-doped ruthenium oxide has the higher oxygen evolving reaction activity.

FIG. 35 is a stability curve of the iron-doped ruthenium oxide obtained in Comparative Example 1 under a current density of 100 milliampere per square centimeter. It can be seen from FIG. 35 that, after 1 hour, the stability curve is attenuated by 300 millivolts or above, and the stability of the iron-doped ruthenium oxide nanometer material is poor. Therefore, there is a significant difference in stability between the iron-doped ruthenium oxide nanometer material in Comparative Example 1 and the niobium-doped ruthenium oxide obtained in Example 1, which further indicates that the niobium-doped ruthenium oxide is extremely good in stability in oxygen evolving reaction.

### Example 18-Three-metal-doped ruthenium oxide

Referring to the method in Example 1, the ethanol solution of niobium chloride was replaced with a molybdenum chloride, titanium chloride and niobium chloride ethanol solution. In the glass reactor, a concentration of the ethanol solution of ruthenium chloride was controlled to be 1 mol/L, and a total solubility of the molybdenum chloride, titanium chloride and niobium chloride solution was controlled to be 0.25 mol/L (specifically: molybdenum chloride, titanium chloride and niobium chloride were all 0.083 mol). Calcination conditions of the muffle furnace were: the temperature raising rate was 10 °C/min, a temperature preservation temperature was 400°C, and temperature preservation time was 5 hours.

A doping amount of molybdenum in a molybdenum-doped ruthenium oxide nanometer material was 20%. A calculation formula of the doping amount of molybdenum was (N molybdenum + N titanium + N niobium)/(N molybdenum + N titanium + N niobium + N ruthenium)=0.25/1.25=20%.

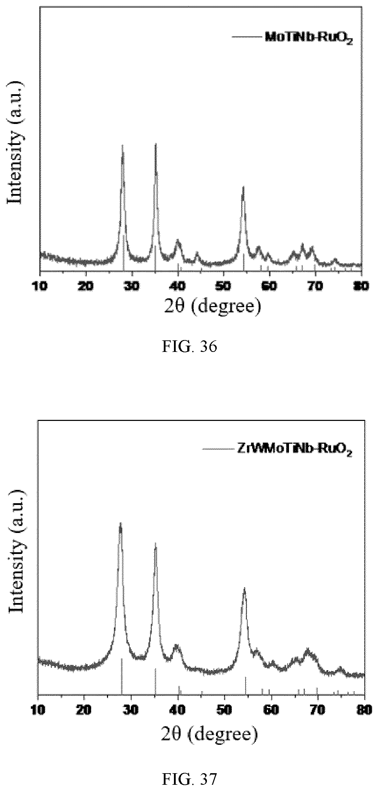

See FIG. 36 for an XRD diagram of the obtained three-metal-doped ruthenium oxide nanometer material. It can be seen from FIG. 36 that the three elements of molybdenum, titanium and niobium are successfully doped into lattices of the ruthenium oxide. That is, in the molybdenum-doped ruthenium oxide nanometer material, molybdenum, titanium and niobium are doped into the lattices of the ruthenium oxide to replace a position of ruthenium in part of the lattices. Therefore, FIG. 36 proves that a molecular formula of the material is (TiNbMo)ₓRu₁₋ₓO₂.

### Example 19-Five-metal-doped ruthenium oxide

(1) An aqueous solution of ruthenium chloride, zirconium chloride, niobium chloride, titanium chloride, molybdenum chloride and tungsten chloride was placed in a 40 ml hydrothermal reactor, in a glass reactor, it was controlled to perform ultrasonic for 15 minutes to completely dissolve a precursor, a concentration of the ruthenium chloride was 1 mol/L, and a total concentration of the zirconium chloride, the niobium chloride, the titanium chloride, the molybdenum chloride and the tungsten chloride was 0.25 mol/L (specifically: the zirconium chloride, the niobium chloride, the titanium chloride, the molybdenum chloride and the tungsten chloride were all 0.05 mol). 0.2 g of ammonium hydroxide was added, the hydrothermal reactor was placed in a constant-temperature 200°C blasting oven, temperature preservation was carried out for 16 hours, the hydrothermal reactor was taken out, after natural cooling to the room temperature, sediment generated by a reaction was taken out, and after centrifugal washing with deionized water many times, a product was placed into an 80°C oven to be dried.
(2) The above dried powder sample was placed into a porcelain boat and the porcelain boat was placed into a muffle furnace: a temperature raising rate was set to be 10 °C/min, a temperature was raised to 600°C, natural cooling was performed after 8 h of temperature preservation to obtain a black powder sample, and thus a zirconium-doped ruthenium oxide nanometer material was obtained, wherein a doping amount of metal was 20%. A calculation formula of the doping amount of zirconium was (N zirconium + N niobium + N titanium + N molybdenum + N tungsten)/(N zirconium + N niobium + N titanium + N molybdenum + N tungsten + N ruthenium)=0.25/1.25=20%.

See FIG. 37 for an XRD diagram of the obtained five-metal-doped ruthenium oxide nanometer material. It can be seen from FIG. 37 that the five elements are successfully doped into lattices of the ruthenium oxide. That is, in the five-metal-doped ruthenium oxide nanometer material, the five metals are doped into the lattices of the ruthenium oxide to replace a position of ruthenium in part of the lattices. Therefore, FIG. 37 proves that a molecular formula of the material is (NbZrTiMoW)ₓRu₁₋ₓO₂.

### Example 20-Seven-metal-doped ruthenium oxide

Ruthenium oxide, titanium oxide, niobium oxide, tantalum oxide, zirconium oxide, hafnium oxide, molybdenum oxide and tungsten oxide were placed in a 40 ml ball milling tank and mixed evenly, the ruthenium oxide was 8 mol, and the titanium oxide, the niobium oxide, the tantalum oxide, the zirconium oxide, the hafnium oxide, the molybdenum oxide and the tungsten oxide were 2 mol in total (specifically: the titanium oxide, the niobium oxide, the tantalum oxide, the zirconium oxide, the hafnium oxide, the molybdenum oxide and the tungsten oxide were all 0.0355 mol). Time of ball milling was controlled to be 6 hours each time, ball milling was repeated twice, the above precursor powder sample which was ball-milled uniformly was placed into a porcelain boat and the porcelain boat was placed into a muffle furnace: a temperature raising rate was set to range from 5 °C/min to 10 °C/min, a temperature was raised to 800°C, natural cooling was performed after 6 h of temperature preservation to obtain a black powder sample, and thus a tungsten-doped ruthenium oxide nanometer material was obtained, wherein a doping amount of tungsten was 20%. A calculation formula of the doping amount of tungsten was (N zirconium + N niobium + N titanium + N molybdenum + N tungsten + N hafnium + N tantalum)/(N zirconium + N niobium + N titanium + N molybdenum + N tungsten + N hafnium + N tantalum + N ruthenium)=2/10=20%.

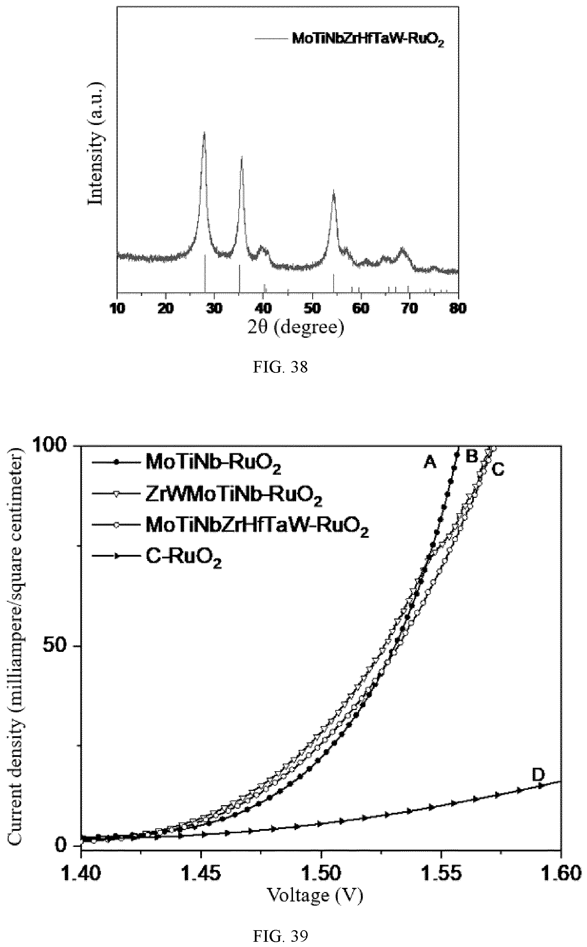

See FIG. 38 for XRD of the obtained seven-metal-doped ruthenium oxide nanometer material, and it can be seen that its crystal structure is still maintained as a crystal structure of the ruthenium oxide. It is expressed as (TiHfZrNbTaWMo)ₓRu₁₋ₓO₂.

Refer to Examples 18, 19 or 20 for preparation of other two-metal, four-metal or six-metal doped ruthenium oxide nanometer materials.

### Application Example 5

FIG. 39 is polarization curves obtained by testing metal-doped ruthenium oxide materials obtained in Examples 18 to 20 in a 0.5 mol/L sulfuric acid solution. It can be seen from FIG. 39 that, an overpotential of a three-metal-doped ruthenium oxide nanometer material prepared in Example 18 under 10 milliampere per square centimeter in an oxygen evolving reaction is 242 millivolts (a curve A in FIG. 39), an overpotential of a zirconium-doped ruthenium oxide nanometer material prepared in Example 19 under 10 milliampere per square centimeter in an oxygen evolving reaction is 231 millivolts (a curve B in FIG. 39), and an overpotential of a hafnium-doped ruthenium oxide nanometer material prepared in Example 20 under 10 milliampere per square centimeter in an oxygen evolving reaction is 235 millivolts (a curve C in FIG. 39), which are all lower than 320 millivolts of the commercial ruthenium dioxide (a curve D in FIG. 39), and it proves that the metal-doped ruthenium oxide prepared in Examples 18 to 20 has the better oxygen evolving reaction activity.

### Application Example 6

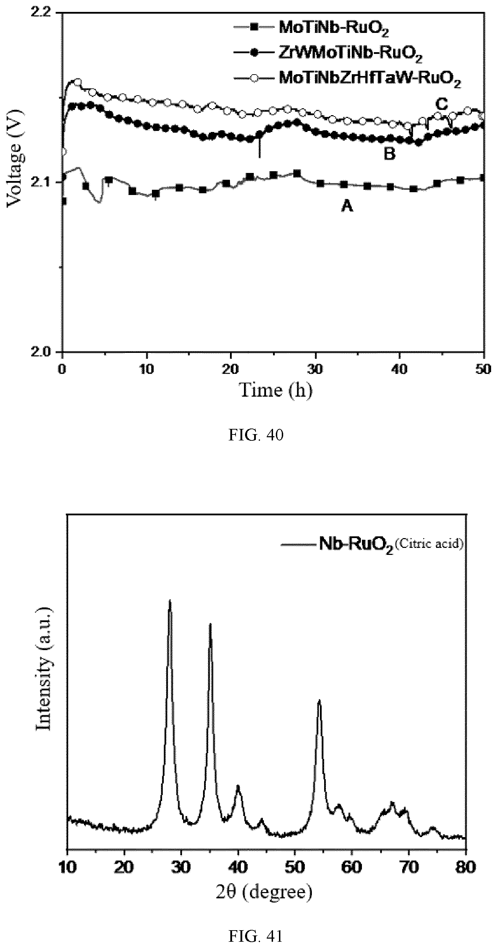

FIG. 40 is stability curves obtained from the metal-doped ruthenium oxide materials obtained in Examples 18 to 20 under a current density of 100 milliampere per square centimeter. A is a stability curve of molybdenum-titanium-niobium doped ruthenium oxide prepared in Example 18, B is a stability curve of zirconium-tungsten-molybdenum-titanium-niobium doped ruthenium oxide prepared in Example 19, and C a stability curve of molybdenum-titanium-niobium-zirconium-hafnium-tantalum-tungsten doped ruthenium oxide prepared in Example 20. It can be seen from FIG. 40 that, by being kept for 50 hours under the current density of 100 milliampere per square centimeter, the metal-doped ruthenium oxide nanometer materials obtained in Examples 18 to 20 barely attenuate in current, indicating that the above metal-doped ruthenium oxide nanometer materials have extremely high stability under a large current density when used as an oxygen evolving reaction anode material.

### Comparative Example 2

In order to highlight the role of a high-molecular polymer multidentate ligand in synthesis of an acid-insoluble metal oxide doped ruthenium oxide nanometer material, referring to the preparation method in Example 1, polyvinylpyrrolidone was replaced with citric acid, and a niobium-doped ruthenium oxide nanometer material was also prepared. See FIG. 41 for an XRD diagram of the obtained niobium-doped ruthenium oxide nanometer material.

It can be seen from FIG. 41 that the niobium element is successfully doped into lattices of the ruthenium oxide. That is, in the niobium-doped ruthenium oxide nanometer material, niobium is doped into the lattices of the ruthenium oxide to replace a position of ruthenium in part of the lattices. Therefore, FIG. 41 proves that a molecular formula of the material is (TiNbMo)ₓRu₁₋ₓO₂.

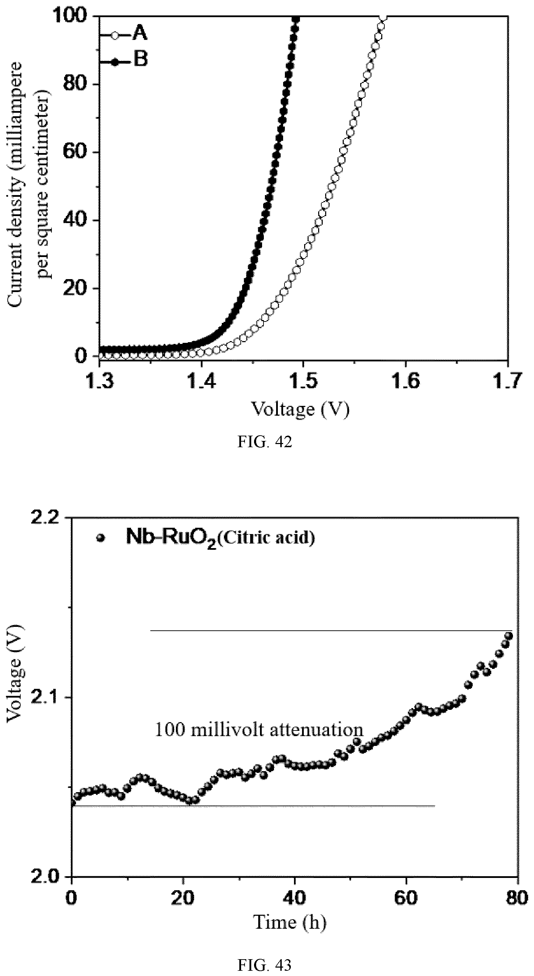

The niobium-doped ruthenium oxide nanometer material prepared in Comparative Example 2 was tested as an oxygen evolving reaction anode material in a 0.5 mol/L sulfuric acid solution, and its polarization curve and stability curve were tested, as shown in FIG. 42 and FIG. 43.

As shown in FIG. 42, a curve A is an oxygen evolving reaction polarization curve of the niobium-doped ruthenium oxide nanometer material obtained in Comparative Example 2, and a curve B is an oxygen evolving reaction polarization curve of the niobium-doped ruthenium oxide nanometer material obtained in Example 1. It can be seen from FIG. 42 that: an overpotential of the niobium-doped ruthenium oxide obtained in Example 1 under 10 milliampere per square centimeter is 196 millivolts, while an overpotential of the niobium-doped ruthenium oxide obtained in Comparative Example 2 is 228 millivolts. Therefore, the niobium-doped ruthenium oxide obtained from the high-molecular polymer multidentate ligand has the higher oxygen evolving reaction activity.

FIG. 43 is a stability curve of the niobium-doped ruthenium oxide obtained in Comparative Example 2 under a current density of 100 milliampere per square centimeter. It can be seen from FIG. 43 that, after 80 hours, the stability curve is attenuated by 100 millivolts or above. The comparison between FIG. 43 and FIG. 21 proves that: the oxygen evolving reaction stability of the niobium-doped ruthenium oxide nanometer material obtained with the citric acid as a ligand is lower than the stability of the niobium-doped ruthenium oxide nanometer material obtained from the polyvinylpyrrolidone. Therefore, there is a significant difference in stability between the niobium-doped ruthenium oxide nanometer material in Comparative Example 2 and the niobium-doped ruthenium oxide obtained in Example 1. This further indicates that, the acid-insoluble metal oxide doped ruthenium oxide nanometer material prepared from the high-molecular polymer multidentate ligand is extremely good in oxygen evolving reaction stability.

In the following experiments, the water electrolysis oxygen evolution activity of a transition metal doped ruthenium oxide nanometer material of the present invention is tested using a three-electrode system to obtain polarization curves. Three-electrode system: a reference electrode is a calomel electrode, a counter electrode is a platinum gauze electrode, and a working electrode is the transition metal doped ruthenium oxide nanometer material obtained in the examples. When comparison is required, other specific materials below are used for comparison by the working electrode.

In the following experiments, the water electrolysis oxygen evolution stability of a transition metal doped ruthenium oxide nanometer material of the present invention is tested using a two-electrode system to obtain stability curves. Two-electrode system: a cathode is a platinum gauze electrode, and an anode is the transition metal doped ruthenium oxide nanometer material obtained in the examples. When comparison is required, other specific materials below are used for comparison by the working electrode.

### Example 21-Hydrothermal method

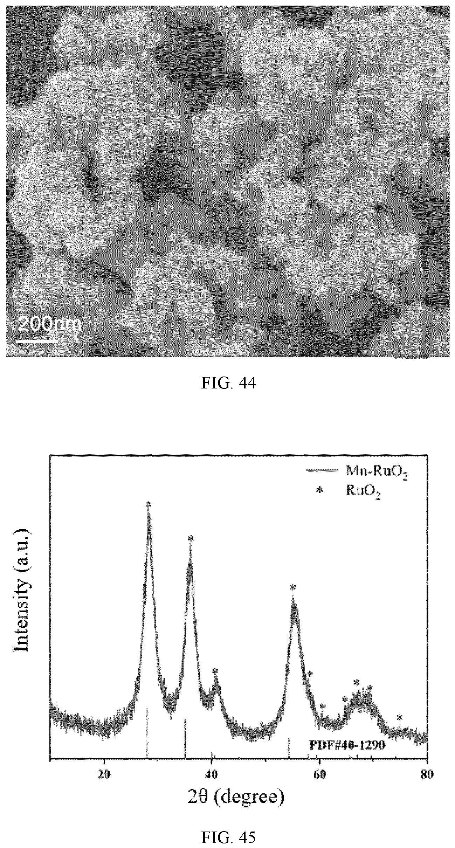

A preparation method of a manganese-doped ruthenium oxide nanometer material included the following steps:
(1) a ruthenium chloride aqueous solution was placed in a beaker, and then a potassium permanganate solution and a manganese chloride tetrahydrate solution which were uniform by ultrasonic were added in sequence, such that divalent manganese ions were located in a fully-oxidized liquid environment. All reaction liquids were added and then fully stirred for 0.5 h. In the beaker, a concentration of ruthenium chloride was controlled to be 0.4 mol/L, and a concentration of manganese chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a manganese-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the manganese-doped ruthenium oxide nanometer material, wherein a doping amount of manganese was 20%. A calculation formula of the doping amount of manganese was N manganese/(N manganese + N ruthenium)=0.1/0.5=20%. The manganese-doped ruthenium oxide nanometer material is represented:
   see FIG. 44 for a scanning electron microscopy diagram of the obtained manganese-doped ruthenium oxide nanometer material, and see FIG. 45 for its XRD spectrogram. It can be seen from FIG. 44 that the manganese-doped ruthenium oxide nanometer material is spherical particles with a size ranging from 70 nm to 200 nm, and the surface is rough.

See FIG. 45 for the XRD spectrogram of the obtained manganese-doped ruthenium oxide nanometer material. It can be seen from FIG. 45 that the manganese-doped ruthenium oxide nanometer material exhibits a characteristic peak of rutile-phase ruthenium oxide, and compared to a standard card of the rutile-phase ruthenium oxide, a diffraction peak of a manganese-doped ruthenium oxide moves towards a high angle without a diffraction peak of any manganese oxide, indicating that the manganese element is successfully doped into crystals of the ruthenium oxide without producing a split phase. That is, in the manganese-doped ruthenium oxide nanometer material, manganese is doped into the crystals of the ruthenium oxide to replace a position of ruthenium in part of the lattices.

Therefore, FIG. 45 proves that a molecular formula of the material is MnₓRu₁₋ₓO₂.

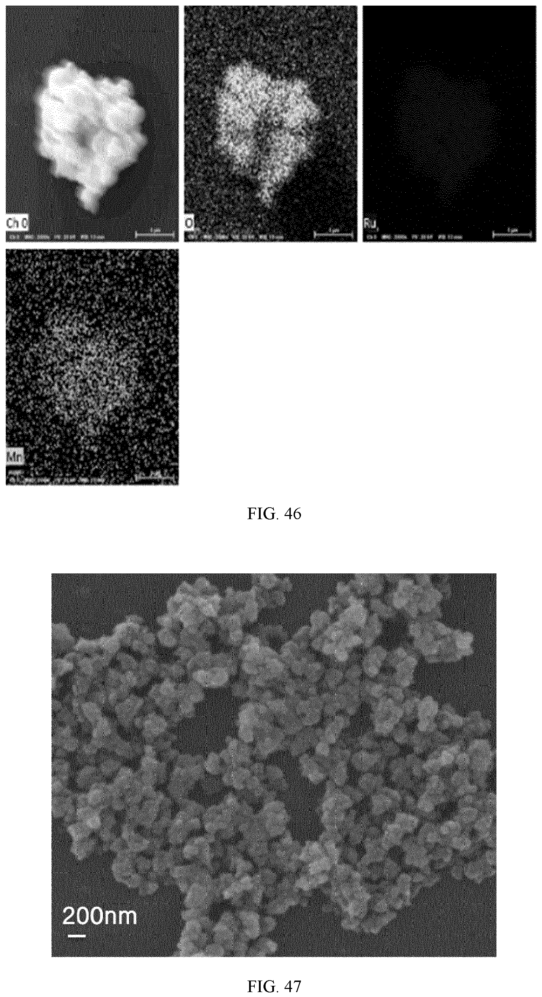

An element distribution diagram of the obtained manganese-doped ruthenium oxide nanometer material is as shown in FIG. 46. It can be seen from FIG. 46 that the manganese-doped ruthenium oxide nanometer material has uniform element distribution, indicating that manganese is uniformly dispersed within the crystals of the ruthenium oxide. Therefore, manganese and ruthenium are both uniformly dispersed in the manganese-doped ruthenium oxide nanometer material.

### Example 22-Hydrothermal method

Referring to the method in Example 21, polyvinylpyrrolidone was replaced with polyvinyl alcohol. In the beaker, a concentration of a ruthenium chloride solution was controlled to be 1 mol/L, a solubility of a manganese chloride solution was controlled to be 0.01 mol/L, and a concentration of the polyvinyl alcohol in the beaker was controlled to be 50 g/L. Calcination conditions of the muffle furnace were: the temperature raising rate was 10 °C/min, a temperature preservation temperature was 400°C, and temperature preservation time was 3 h.

A doping amount of manganese in the manganese-doped ruthenium oxide nanometer material was 1%. A calculation formula of the doping amount of manganese was N manganese/(N manganese + N ruthenium)=0.01/(1+0.01)=1%.

### Example 23-Hydrothermal method

Referring to the method in Example 21, polyvinylpyrrolidone was replaced with polyethylene diamine. In the beaker, a concentration of a ruthenium chloride solution was controlled to be 1 mol/L, a solubility of a manganese chloride solution was controlled to be 1 mol/L, and a concentration of the polyethylene diamine in the beaker was controlled to be 50 g/L. Calcination conditions of the muffle furnace were: the temperature raising rate was 10 °C/min, a temperature preservation temperature was 400°C, and temperature preservation time was 3 h.

A doping amount of manganese in the manganese-doped ruthenium oxide nanometer material was 50%. A calculation formula of the doping amount of manganese was N manganese/(N manganese + N ruthenium)=1/(1+1)=50%.

### Example 24-Hydrothermal method

Referring to the method in Example 21, in the beaker, a concentration of a ruthenium chloride solution was controlled to be 0.4 mol/L, a solubility of a manganese chloride solution was controlled to be 0.1 mol/L, and a concentration of the polyvinylpyrrolidone in the beaker was controlled to be 1 g/L. Calcination conditions of the muffle furnace were: the temperature raising rate was 10 °C/min, a temperature preservation temperature was 400°C, and temperature preservation time was 3 h.

A doping amount of manganese in the manganese-doped ruthenium oxide nanometer material was 20%. A calculation formula of the doping amount of manganese was N manganese/(N manganese + N ruthenium)=0.1/(0.4+0.1)=20%.

### Example 25-Hydrothermal method

Referring to the method in Example 1, polyvinylpyrrolidone was replaced with polylactic acid. In the beaker, a concentration of a ruthenium chloride solution was controlled to be 0.4 mol/L, a solubility of a manganese chloride solution was controlled to be 0.1 mol/L, and a concentration of the polylactic acid in the beaker was controlled to be 1 g/L. Calcination conditions of the muffle furnace were: the temperature raising rate was 10 °C/min, a temperature preservation temperature was 400°C, and temperature preservation time was 3 h.

A doping amount of manganese in the manganese-doped ruthenium oxide nanometer material was 20%. A calculation formula of the doping amount of manganese was N manganese/(N manganese + N ruthenium)=0.1/(0.4+0.1)=20%.

### Comparative Example 3-Hydrothermal method

Those skilled in the art generally considered that the existence of a ligand could promote doping of transition metal manganese into lattices of ruthenium oxide and improve the stability of a catalyst at the same time.

This comparative example took a ligand ammonium citrate as an example for performing the following experiment:
referring to the preparation method in Example 21, the difference with Example 21 was only in that the polyvinylpyrrolidone with a plurality of coordination sites was replaced with ammonium citrate, i.e.: before a reaction liquid was transferred into a hydrothermal reactor, ammonium citrate was added into the reaction liquid, and a concentration of the ammonium citrate was controlled to be 50 g/L. Ammonium hydroxide was then added to adjust pH to be neutral. In a stirring process, an ammonium citrate solution was mixed with the reaction liquid, and after full stirring, the manganese-doped ruthenium oxide nanometer material was obtained, wherein a doping amount of manganese was 20%. A calculation formula of the doping amount of manganese was N manganese/(N manganese + N ruthenium)=0.1/0.5=20%.

### Comparative Example 4-Hydrothermal method

This comparative example took manganese chloride tetrahydrate and potassium permanganate as an example for performing the following experiment:
referring to the preparation method in Example 21, the difference with Example 21 was only in that polyvinylpyrrolidone with a plurality of coordination sites was not added, and after full stirring and a reaction, the manganese-doped ruthenium oxide nanometer material was obtained, wherein a doping amount of manganese was 20%. A calculation formula of the doping amount of manganese was N manganese/(N manganese + N ruthenium)=1/5=20%.

### Example 26-Hydrothermal method

A preparation method of a chromium-doped ruthenium oxide nanometer material included the following steps:
(1) a ruthenium chloride aqueous solution was placed in a beaker, and then a potassium dichromate solution and a chromium chloride solution which were uniform by ultrasonic were added in sequence, such that trivalent chromium ions were located in a fully-oxidized liquid environment. All reaction liquids were added and then fully stirred for 0.5 h. In the beaker, a concentration of ruthenium chloride was controlled to be 0.4 mol/L, and a concentration of chromium chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a chromium-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
**(2) The** metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the chromium-doped ruthenium oxide nanometer material, wherein a doping amount of chromium was 20%. A calculation formula of the doping amount of chromium was N chromium/(N chromium + N ruthenium)=0.1/0.5=20%.

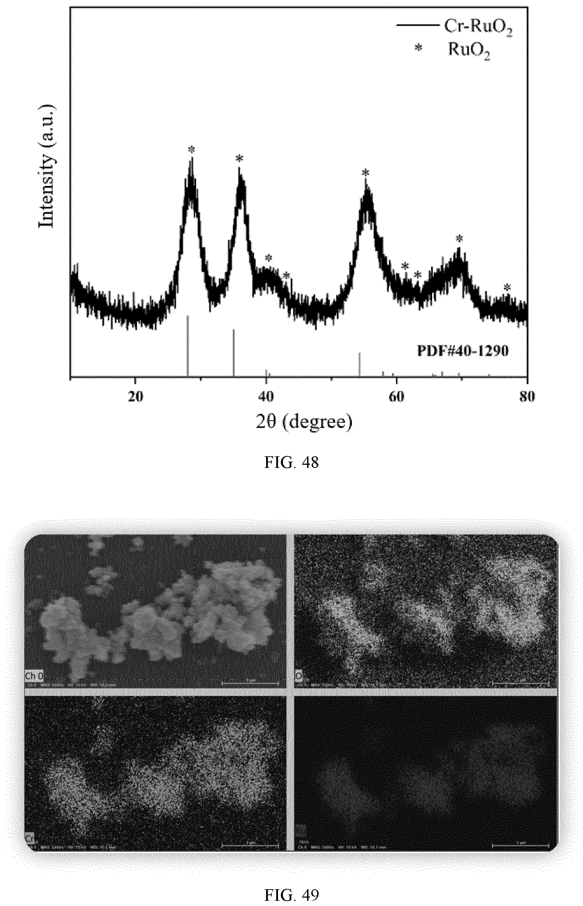

The chromium-doped ruthenium oxide nanometer material is represented:
See FIG. 47 for a scanning electron microscopy diagram of the obtained chromium-doped ruthenium oxide nanometer material, and see FIG. 48 for its XRD spectrogram. It can be seen from FIG. 47 that the chromium-doped ruthenium oxide nanometer material is spherical particles with a size ranging from 70 nm to 200 nm, and the surface is relatively rough.

See FIG. 48 for the XRD spectrogram of the obtained chromium-doped ruthenium oxide nanometer material. It can be seen from FIG. 48 that the chromium-doped ruthenium oxide nanometer material exhibits a characteristic peak of rutile-phase ruthenium oxide, and compared to a standard card of the rutile-phase ruthenium oxide, a diffraction peak of the chromium-doped ruthenium oxide moves towards a high angle without a diffraction peak of any chromium oxide, indicating that the chromium element is successfully doped into crystals of the ruthenium oxide without producing a split phase. That is, in the chromium-doped ruthenium oxide nanometer material, chromium is doped into the crystals of the ruthenium oxide to replace a position of ruthenium in part of the lattices.

Therefore, FIG. 48 proves that a molecular formula of the material is CrₓRu₁₋ₓO₂.

An element distribution diagram of the obtained chromium-doped ruthenium oxide nanometer material is as shown in FIG. 49. It can be seen from FIG. 49 that the chromium-doped ruthenium oxide nanometer material has uniform element distribution, indicating that chromium is uniformly dispersed within the crystals of the ruthenium oxide. Therefore, chromium and ruthenium are both uniformly dispersed in the chromium-doped ruthenium oxide nanometer material.

### Comparative Example 5-Hydrothermal method

Those skilled in the art generally considered that the existence of a ligand could promote doping of transition metal chromium into crystals of ruthenium oxide and improve the stability of a catalyst at the same time.

This comparative example took a ligand ammonium citrate as an example for performing the following experiment:
referring to the preparation method in Example 26, the difference with Example 26 was only in that the polyvinylpyrrolidone with a plurality of coordination sites was replaced with ammonium citrate, i.e.: before a reaction liquid was transferred into a hydrothermal reactor, ammonium citrate was added into the reaction liquid, and a concentration of the ammonium citrate was controlled to be 50 g/L. Ammonium hydroxide was then added to adjust pH to be neutral. In a stirring process, an ammonium citrate solution was mixed with the reaction liquid, and after full stirring, the chromium-doped ruthenium oxide nanometer material was obtained, wherein a doping amount of chromium was 20%. A calculation formula of the doping amount of chromium was N chromium/(N chromium + N ruthenium)=1/5=20%.

### Comparative Example 6-Hydrothermal method

This comparative example took chromium chloride and potassium dichromate as an example for performing the following experiment:
referring to the preparation method in Example 26, the difference with Example 26 was only in that polyvinylpyrrolidone with a plurality of coordination points was not added, and after full stirring and reaction, the chromium-doped ruthenium oxide nanometer material was obtained, wherein a doping amount of chromium was 20%. A calculation formula of the doping amount of chromium was N chromium/(N chromium + N ruthenium)=1/5=20%.

### Example 27-Hydrothermal method

A preparation method of a tin-doped ruthenium oxide nanometer material included the following steps:
(1) a ruthenium chloride aqueous solution was placed in a beaker, then a tin tetrachloride pentahydrate solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of tin chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a tin-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the tin-doped ruthenium oxide nanometer material, wherein a doping amount of tin was 20%. A calculation formula of the doping amount of tin was N tin/(N tin + N ruthenium)=0.1/0.5=20%.

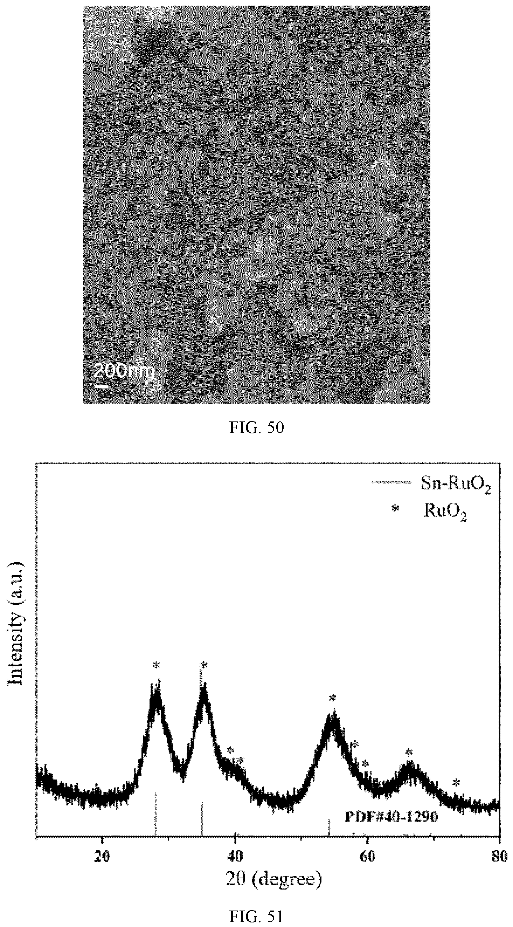

The tin-doped ruthenium oxide nanometer material is represented:
See FIG. 50 for a scanning electron microscopy diagram of the obtained tin-doped ruthenium oxide nanometer material, and see FIG. 51 for its XRD spectrogram. It can be seen from FIG. 51 that the tin-doped ruthenium oxide nanometer material is spherical particles with a size ranging from 70 nm to 200 nm, and the surface is rough.

It can be seen from FIG. 51 that the tin-doped ruthenium oxide nanometer material exhibits a characteristic peak of rutile-phase ruthenium oxide, and compared to a standard card of the rutile-phase ruthenium oxide, a diffraction peak of the tin-doped ruthenium oxide moves towards a high angle without a diffraction peak of any tin oxide, indicating that the tin element is successfully doped into crystals of the ruthenium oxide without producing a split phase. That is, in the tin-doped ruthenium oxide nanometer material, tin is doped into the crystals of the ruthenium oxide to replace a position of ruthenium in part of the lattices.

Therefore, FIG. 51 proves that a molecular formula of the material is SnₓRu₁₋ₓO₂.

An element distribution diagram of the obtained tin-doped ruthenium oxide nanometer material is as shown in FIG. 52. It can be seen from FIG. 52 that the tin-doped ruthenium oxide nanometer material has uniform element distribution, indicating that tin is uniformly dispersed within the crystals of the ruthenium oxide. Therefore, tin and ruthenium are both uniformly dispersed in the tin-doped ruthenium oxide nanometer material.

### Comparative Example 7-Hydrothermal method

Those skilled in the art generally considered that the existence of a ligand could promote doping of transition metal tin into crystals of ruthenium oxide and improve the stability of a catalyst at the same time.

This comparative example took a ligand ammonium citrate as an example for performing the following experiment:
referring to the preparation method in Example 27, the difference with Example 27 was only in that the polyvinylpyrrolidone with a plurality of coordination sites was replaced with ammonium citrate, i.e.: before a reaction liquid was transferred into a hydrothermal reactor, ammonium citrate was added into the reaction liquid, and a concentration of the ammonium citrate was controlled to be 50 g/L. Ammonium hydroxide was then added to adjust pH to be neutral. In a stirring process, an ammonium citrate solution was mixed with the reaction liquid, and after full stirring, the tin-doped ruthenium oxide nanometer material was obtained, wherein a doping amount of tin was 20%. A calculation formula of the doping amount of tin was N tin/(N tin + N ruthenium)=1/5=20%.

### Comparative Example 8-Hydrothermal method

This comparative example took tin tetrachloride pentahydrate as an example for performing the following experiment:
referring to the preparation method in Example 27, the difference with Example 27 was only in that polyvinylpyrrolidone with a plurality of coordination sites was not added, and after full stirring and a reaction, the tin-doped ruthenium oxide nanometer material was obtained, wherein a doping amount of tin was 20%. A calculation formula of the doping amount of tin was N tin/(N tin + N ruthenium)=1/5=20%.

### Example 28-Germanium-doped ruthenium oxide

A preparation method of a germanium-doped ruthenium oxide nanometer material included the following steps:
(1) a ruthenium chloride aqueous solution was placed in a beaker, then a germanium tetrachloride solution which was uniform by ultrasonic was added, and after all reaction liquids were added, mechanical stirring was performed for 1 h. In the beaker, a concentration of ruthenium chloride was controlled to be 0.4 mol/L, and a concentration of germanium chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a germanium-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the germanium-doped ruthenium oxide nanometer material, wherein a doping amount of germanium was 20%. A calculation formula of the doping amount of germanium was N germanium/(N germanium + N ruthenium)=0.1/0.5=20%.

### Example 29-Indium-doped ruthenium oxide

A preparation method of an indium-doped ruthenium oxide nanometer material included the following steps:
(1) a ruthenium chloride aqueous solution was placed in a beaker, then an indium chloride solution which was uniform by ultrasonic was added, and after all reaction liquids were added, mechanical stirring was performed for 0.5 h. In the beaker, a concentration of ruthenium chloride was controlled to be 0.4 mol/L, and a concentration of indium chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain an indium-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the indium-doped ruthenium oxide nanometer material, wherein a doping amount of indium was 20%. A calculation formula of the doping amount of indium was N indium/(N indium + N ruthenium)=0.1/(0.1+0.4)=20%.

### Example 30-Antimony-doped ruthenium oxide

A preparation method of an antimony-doped ruthenium oxide nanometer material included the following steps:
(1) a ruthenium chloride aqueous solution was placed in a beaker, then an antimony trichloride solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of antimony chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain an antimony-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the antimony-doped ruthenium oxide nanometer material, wherein a doping amount of antimony was 20%. A calculation formula of the doping amount of antimony was N antimony/(N antimony + N ruthenium)=0.1/(0.1+0.4)=20%.

### Example 31-Niobium-doped ruthenium oxide

A preparation method of a niobium-doped ruthenium oxide nanometer material included the following steps:
(1) a ruthenium chloride aqueous solution was placed in a beaker, then a niobium pentachloride solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of niobium chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a niobium-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the niobium-doped ruthenium oxide nanometer material, wherein a doping amount of niobium was 20%. A calculation formula of the doping amount of niobium was N niobium/(N niobium + N ruthenium)=0.1/(0.1+0.4)=20%.

### Example 32-Titanium-doped ruthenium oxide

A preparation method of a titanium-doped ruthenium oxide nanometer material included the following steps:
(1) a ruthenium chloride aqueous solution was placed in a beaker, then a titanium chloride solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of titanium chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a titanium-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the titanium-doped ruthenium oxide nanometer material, wherein a doping amount of titanium was 20%. A calculation formula of the doping amount of titanium was N titanium/(N titanium + N ruthenium)=0.1/(0.1+0.4)=20%.

### Example 33-Zirconium-doped ruthenium oxide

A preparation method of a zirconium-doped ruthenium oxide nanometer material included the following steps:
(1) a ruthenium chloride aqueous solution was placed in a beaker, then a zirconium chloride solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of zirconium chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a zirconium-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the zirconium-doped ruthenium oxide nanometer material, wherein a doping amount of zirconium was 20%. A calculation formula of the doping amount of zirconium was N zirconium/(N zirconium + N ruthenium)=0.1/(0.1+0.4)=20%.

### Example 34-Hafnium-doped ruthenium oxide

A preparation method of a hafnium-doped ruthenium oxide nanometer material included the following steps:
(1) a ruthenium chloride aqueous solution was placed in a beaker, then a hafnium oxide solution which was uniform by ultrasonic was added, and after all reaction liquids were added, mechanical stirring was performed for 0.5 h. In the beaker, a concentration of ruthenium chloride was controlled to be 0.4 mol/L, and a concentration of hafnium oxide was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a hafnium-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the hafnium-doped ruthenium oxide nanometer material, wherein a doping amount of hafnium was 20%. A calculation formula of the doping amount of hafnium was N hafnium/(N hafnium + N ruthenium)=0.1/(0.1+0.4)=20%.

### Example 35-Tungsten-doped ruthenium oxide

A preparation method of a tungsten-doped ruthenium oxide nanometer material included the following steps:
(1) a ruthenium chloride aqueous solution was placed in a beaker, then a tungsten oxide solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of tungsten oxide was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a tungsten-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the tungsten-doped ruthenium oxide nanometer material, wherein a doping amount of tungsten was 20%. A calculation formula of the doping amount of tungsten was N tungsten/(N tungsten + N ruthenium)=20%.

### Example 36-Molybdenum-doped ruthenium oxide

A preparation method of a molybdenum-doped ruthenium oxide nanometer material included the following steps:
(1) a ruthenium chloride aqueous solution was placed in a beaker, then a molybdenum chloride solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of molybdenum chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a molybdenum-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the molybdenum-doped ruthenium oxide nanometer material, wherein a doping amount of molybdenum was 20%. A calculation formula of the doping amount of molybdenum was N molybdenum/(N molybdenum + N ruthenium)=20%.

### Example 37-Tantalum-doped ruthenium oxide

A preparation method of a tantalum-doped ruthenium oxide nanometer material included the following steps:
(1) a ruthenium chloride aqueous solution was placed in a beaker, then a tantalum pentachloride solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of tantalum chloride was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a tantalum-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the tantalum-doped ruthenium oxide nanometer material, wherein a doping amount of tantalum was 20%. A calculation formula of the doping amount of tantalum was N tantalum/(N tantalum + N ruthenium)=20%.

### Example 38-Platinum-doped ruthenium oxide

A preparation method of a platinum-doped ruthenium oxide nanometer material included the following steps:
(1) a ruthenium chloride aqueous solution was placed in a beaker, then a chloroplatinic acid solution which was uniform by ultrasonic was added, and after all reaction liquids were added, the beaker was placed in ultrasonic to be subjected to sufficient ultrasonic for 1 h. In the beaker, a concentration of ruthenium chloride was controlled to be 0.4 mol/L, and a concentration of chloroplatinic acid was controlled to be 0.1 mol/L. Polyvinylpyrrolidone powder was then added into this solution, a concentration of polyvinylpyrrolidone in the beaker was controlled to be 50 g/L, and stirring was continued for 1 h to obtain a platinum-ruthenium oxide solution with a uniform color.
   A reaction liquid in the beaker was then transferred into a hydrothermal reactor, and the hydrothermal reactor was placed in a blasting oven and subjected to temperature preservation for 10 h at a constant temperature of 180°C. The hydrothermal reactor was taken out, after the hydrothermal reactor was naturally cooled to the room temperature, the reaction liquid in the reactor was centrifuged and washed alternately with deionized water and anhydrous ethanol many times, and then a product was placed in an 80°C oven to be dried to obtain a metal powder precursor with a uniform color.
(2) The metal powder precursor obtained in step (1) was placed in a porcelain boat, and then the porcelain boat containing the metal powder precursor was placed in a muffle furnace; and a temperature raising rate was set to be 10 °C/min, a temperature was raised to 400°C, and natural cooling was performed after temperature preservation of 3 h to obtain the platinum-doped ruthenium oxide nanometer material, wherein a doping amount of platinum was 20%. A calculation formula of the doping amount of platinum was N platinum/(N platinum + N ruthenium)=20%.

### Example 39-Manganese-doped ruthenium oxide

Referring to the method in Example 21, in the beaker, a concentration of a ruthenium chloride solution was controlled to be 0.4 mol/L, a solubility of a manganese chloride solution was controlled to be 0.1 mol/L, and a concentration of the polyvinylpyrrolidone in the beaker was controlled to be 50 g/L. Reaction conditions in the oven were: a temperature preservation temperature was 100°C, and temperature preservation time was 4 h. Calcination conditions of the muffle furnace were: the temperature raising rate was 10 °C/min, a temperature preservation temperature was 400°C, and temperature preservation time was 3 h.

A doping amount of manganese in the manganese-doped ruthenium oxide nanometer material was 20%. A calculation formula of the doping amount of manganese was N manganese/(N manganese + N ruthenium)=20%.

### Example 40-Manganese-doped ruthenium oxide

Referring to the method in Example 21, in the beaker, a concentration of a ruthenium chloride solution was controlled to be 0.4 mol/L, a solubility of a manganese chloride solution was controlled to be 0.1 mol/L, and a concentration of the polyvinylpyrrolidone in the beaker was controlled to be 50 g/L. Reaction conditions in the oven were: a temperature preservation temperature was 180 °C, and temperature preservation time was 4 h. Calcination conditions of the muffle furnace were: the temperature raising rate was 10 °C/min, a temperature preservation temperature was 400°C, and temperature preservation time was 3 h.

A doping amount of manganese in the manganese-doped ruthenium oxide nanometer material was 20%. A calculation formula of the doping amount of manganese was N manganese/(N manganese + N ruthenium)=20%.

### Example 41-Manganese-doped ruthenium oxide

Referring to the method in Example 21, in the beaker, a concentration of a ruthenium chloride solution was controlled to be 0.4 mol/L, a solubility of a manganese chloride solution was controlled to be 0.1 mol/L, and a concentration of the polyvinylpyrrolidone in the beaker was controlled to be 50 g/L. Reaction conditions in the oven were: a temperature preservation temperature was 100°C, and temperature preservation time was 10 h. Calcination conditions of the muffle furnace were: the temperature raising rate was 10 °C/min, a temperature preservation temperature was 400°C, and temperature preservation time was 3 h.

A doping amount of manganese in the manganese-doped ruthenium oxide nanometer material was 20%. A calculation formula of the doping amount of manganese was N manganese/(N manganese + N ruthenium)=20%.

### Example 42-Manganese-doped ruthenium oxide

Referring to the method in Example 21, in the beaker, a concentration of a ruthenium chloride solution was controlled to be 0.4 mol/L, a solubility of a manganese chloride solution was controlled to be 0.1 mol/L, and a concentration of the polyvinylpyrrolidone in the beaker was controlled to be 50 g/L. Reaction conditions in the oven were: a temperature preservation temperature was 180 °C, and temperature preservation time was 10 h. Calcination conditions of the muffle furnace were: the temperature raising rate was 1 °C/min, a temperature preservation temperature was 300 °C, and temperature preservation time was 3 h.

A doping amount of manganese in the manganese-doped ruthenium oxide nanometer material was 20%. A calculation formula of the doping amount of manganese was N manganese/(N manganese + N ruthenium)=20%.

### Example 43-Manganese-doped ruthenium oxide

Referring to the method in Example 21, in the beaker, a concentration of a ruthenium chloride solution was controlled to be 0.4 mol/L, a solubility of a manganese chloride solution was controlled to be 0.1 mol/L, and a concentration of the polyvinylpyrrolidone in the beaker was controlled to be 50 g/L. Reaction conditions in the oven were: a temperature preservation temperature was 180 °C, and temperature preservation time was 10 h. Calcination conditions of the muffle furnace were: the temperature raising rate was 10 °C/min, a temperature preservation temperature was 500 °C, and temperature preservation time was 5 h.

A doping amount of manganese in the manganese-doped ruthenium oxide nanometer material was 20%. A calculation formula of the doping amount of manganese was N manganese/(N manganese + N ruthenium)=20%.

### Application Example 7-Activity test

A three-electrode system was used to test water electrolysis oxygen evolution performance of a manganese-doped ruthenium oxide nanometer material of the present invention: a reference electrode was a calomel electrode, a counter electrode was a platinum gauze electrode, a working electrode was a manganese-doped ruthenium oxide nanometer material obtained in Examples 21 to 25 and commercial ruthenium dioxide, testing was carried out in a 0.5 mol/L H₂SO₄ solution, and obtained polarization curves were as shown in FIG. 53.

It can be seen from FIG. 53 that the manganese-doped ruthenium oxide nanometer material obtained in Examples 21 to 25 has good water electrolysis oxygen evolution performance (curves A-E in FIG. 53), which is obviously superior to the commercial ruthenium dioxide material (a curve F in FIG. 53), and overpotentials under a current density of 10 milliampere per square centimeter are 170 millivolts, 300 millivolts, 250 millivolts, 190 millivolts and 160 millivolts respectively, which are all lower than 320 millivolts of the commercial ruthenium dioxide.

### Application Example 8-Stability test

A two-electrode system was used to test water electrolysis oxygen evolving reaction stability of a manganese-doped ruthenium oxide nanometer material of the present invention: an anode was a manganese-doped ruthenium oxide nanometer material obtained in Examples 21, 24 and 25 or commercial ruthenium dioxide, and a cathode was a platinum gauze electrode.

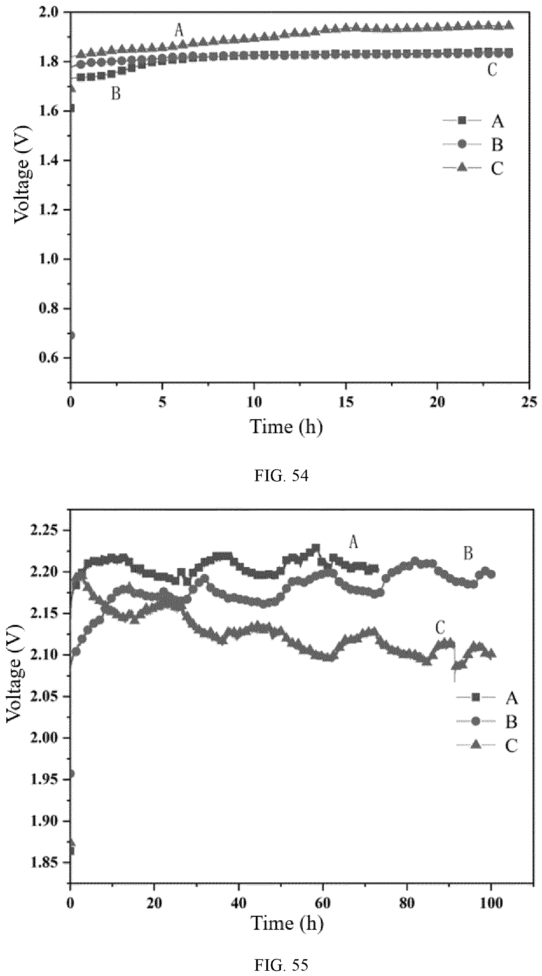

FIG. 54 is stability curves of the manganese-doped ruthenium oxide material obtained in Examples 21, 24 and 25 of the present invention as an oxygen evolution anode material in a 0.5 mol/L H₂SO₄ solution under a current density of 100 milliampere per square centimeter; and FIG. 55 is stability curves of the manganese-doped ruthenium oxide material obtained in Examples 21, 24 and 25 of the present invention as an oxygen evolution anode material in a 0.5 mol/L H₂SO₄ solution under a current density of 200 milliampere per square centimeter.

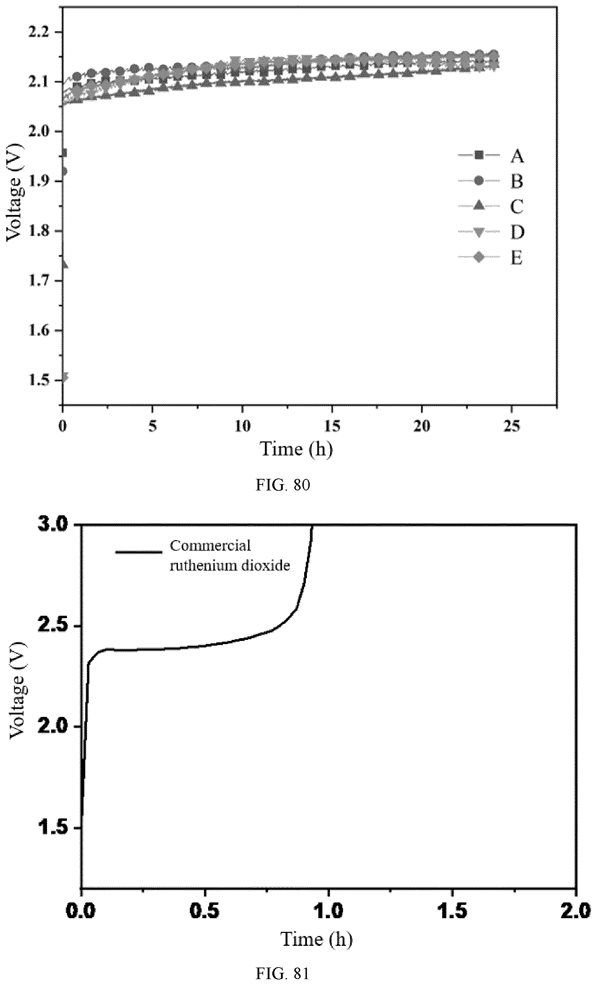

It can be seen from FIG. 54 and FIG. 55 that, by being kept for 24 hours and 80-100 hours under the current densities of 100 and 200 milliampere per square centimeter respectively, the manganese-doped ruthenium oxide nanometer material obtained in Examples 21, 24 and 25 barely attenuates in current, as shown in FIG. 81, and the stability of this catalytic material under the large current density is obviously superior to the commercial ruthenium dioxide; and it indicates that the manganese-doped ruthenium oxide nanometer material obtained in Examples 21, 24 and 25 has high stability under a large current density when used as the oxygen evolving reaction anode material.

### Application Example 9-Activity test

A three-electrode system was used to test water electrolysis oxygen evolution performance of a manganese-doped ruthenium oxide nanometer material of the present invention: a reference electrode was a calomel electrode, a counter electrode was a platinum gauze electrode, a working electrode was a manganese-doped ruthenium oxide nanometer material obtained in Example 21 and Comparative Example 3 and commercial ruthenium dioxide, testing was carried out in a 0.5 mol/L H₂SO₄ solution, and obtained polarization curves were as shown in FIG. 56.

It can be seen from FIG. 56 that the manganese-doped ruthenium oxide nanometer material obtained in Example 21 and Comparative Example 3 has good water electrolysis oxygen evolution performance (curves A and B in FIG. 56), which is obviously superior to the commercial ruthenium dioxide material (a curve C in FIG. 56), and overpotentials under a current density of 10 milliampere per square centimeter are 170 millivolts and 220 millivolts respectively, which are both lower than 320 millivolts of the commercial ruthenium dioxide.

### Application Example 10-Stability test

A two-electrode system was used to test water electrolysis oxygen evolving reaction stability of a manganese-doped ruthenium oxide nanometer material of the present invention: an anode was a manganese-doped ruthenium oxide nanometer material obtained in Example 21 and Comparative Example 3 or commercial ruthenium dioxide, and a cathode was a platinum gauze electrode.

FIG. 57 is a stability curve of the manganese-doped ruthenium oxide material obtained in Comparative Example 3 of the present invention as an oxygen evolution anode material in a 0.5 mol/L H₂SO₄ solution under a current density of 100 milliampere per square centimeter; and FIG. 58 is a stability curve of the manganese-doped ruthenium oxide material obtained in Comparative Example 3 of the present invention as an oxygen evolution anode material in a 0.5 mol/L H₂SO₄ solution under a current density of 200 milliampere per square centimeter.

It can be seen from FIG. 57 and FIG. 58 that, by being kept for 24 hours and 100 hours under the current densities of 100 and 200 milliampere per square centimeter respectively, the manganese-doped ruthenium oxide nanometer material obtained in Comparative Example 3 quickly attenuates in current under the large current density of 200 milliampere per square centimeter; and it indicates that the stability of the manganese-doped ruthenium oxide nanometer material obtained after the ammonium citrate is added under the large current density when used as the oxygen evolving reaction anode material is inferior to the manganese-doped ruthenium oxide nanometer material obtained in Example 21.

Therefore, it is found in the present application example that, when the manganese-doped ruthenium oxide nanometer material formed by adding the multi-coordination-site high-molecular polymer is used as the oxygen evolving reaction anode material, compared to the manganese-doped ruthenium oxide nanometer material formed by adding the ammonium citrate as the ligand, both the activity and the stability are improved obviously.

### Application Example 11-Activity and stability test

A three-electrode system was used to test water electrolysis oxygen evolution performance of a manganese-doped ruthenium oxide nanometer material of the present invention: a reference electrode was a calomel electrode, a counter electrode was a platinum gauze electrode, a working electrode was a manganese-doped ruthenium oxide nanometer material obtained in Example 21 and Comparative Example 4 and commercial ruthenium dioxide, testing was carried out in a 0.5 mol/L H₂SO₄ solution, and obtained polarization curves were as shown in FIG. 59.

A two-electrode system was used to test water electrolysis oxygen evolving reaction stability of a manganese-doped ruthenium oxide nanometer material of the present invention: an anode was the manganese-doped ruthenium oxide nanometer material obtained in Example 21 and Comparative Example 4 or the commercial ruthenium dioxide, and a cathode was the platinum gauze electrode.

It can be seen from FIG. 59 that the manganese-doped ruthenium oxide nanometer material obtained in Example 21 and Comparative Example 4 has good water electrolysis oxygen evolution performance (curves B and A in FIG. 59), which is obviously superior to the commercial ruthenium dioxide material (a curve C in FIG. 59), and overpotentials under a current density of 10 milliampere per square centimeter are 170 millivolts and 190 millivolts respectively, which are both lower than 320 millivolts of the commercial ruthenium dioxide. The electrocatalytic activity of the manganese-doped ruthenium oxide nanometer material obtained in Example 21 used as the oxygen evolving reaction anode material is superior to the manganese-doped ruthenium oxide nanometer material obtained in Comparative Example 4.

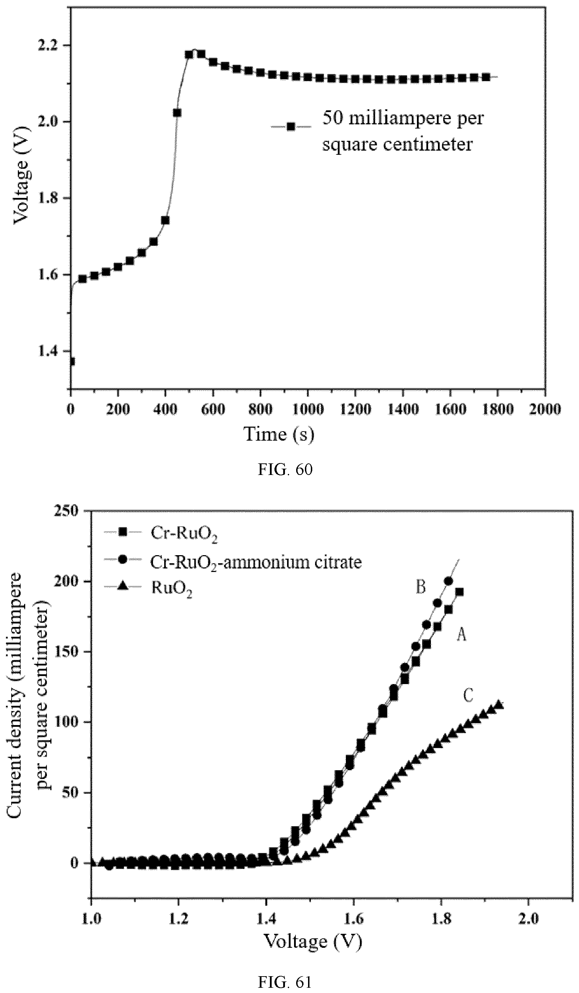

FIG. 60 is a stability curve of the manganese-doped ruthenium oxide material obtained in Comparative Example 4 of the present invention as an oxygen evolution anode material in a 0.5 mol/L H₂SO₄ solution under a current density of 50 milliampere per square centimeter.

It can be seen from FIG. 60 that, by being kept for half an hour under the current density of 50 milliampere per square centimeter, the stability curve of the manganese-doped ruthenium oxide nanometer material obtained in Comparative Example 4 quickly attenuates in 400 seconds, that is, this catalytic material has the extremely poor stability under the small current density; and it indicates that the stability of the manganese-doped ruthenium oxide nanometer material obtained in Comparative Example 4 under the large current density when used as the oxygen evolving reaction anode material is far inferior to the manganese-doped ruthenium oxide nanometer material obtained in Example 21. This proves that, compared to Example 21, both the electrocatalytic activity and the stability of the material prepared without adding the multi-coordination-site polymer polyvinylpyrrolidone are lowered greatly.

Therefore, it is found in the present application example that, when the manganese-doped ruthenium oxide nanometer material formed by adding the multi-coordination-site high-molecular polymer is used as the oxygen evolving reaction anode material, compared to the manganese-doped ruthenium oxide nanometer material formed without adding the multi-coordination-site high-molecular polymer, both the electrochemical activity and the stability are improved obviously.

### Application Example 12-Activity test

A three-electrode system was used to test water electrolysis oxygen evolution performance of a chromium-doped ruthenium oxide nanometer material of the present invention: a reference electrode was a calomel electrode, a counter electrode was a platinum gauze electrode, a working electrode was a chromium-doped ruthenium oxide nanometer material obtained in Example 26 and Comparative Example 5 and commercial ruthenium dioxide, testing was carried out in a 0.5 mol/L H₂SO₄ solution, and obtained polarization curves were as shown in FIG. 61.

It can be seen from FIG. 61 that an overpotential of the chromium-doped ruthenium oxide nanometer material prepared in Example 26 and Comparative Example 5 under 10 milliampere per square centimeter in an oxygen evolving reaction is 180 millivolts (a curve A and a curve B in FIG. 61), which is obviously superior to 320 millivolts of the commercial ruthenium dioxide material (a curve C in FIG. 61). The nanometer materials obtained in Example 26 and Comparative Example 5 are equivalent in electrochemical activity.

### Application Example 13-Stability test

A two-electrode system was used to test water electrolysis oxygen evolving reaction stability of a chromium-doped ruthenium oxide nanometer material of the present invention: an anode was a chromium-doped ruthenium oxide nanometer material obtained in Example 26 and Comparative Example 5 or commercial ruthenium dioxide, and a cathode was a platinum gauze electrode.

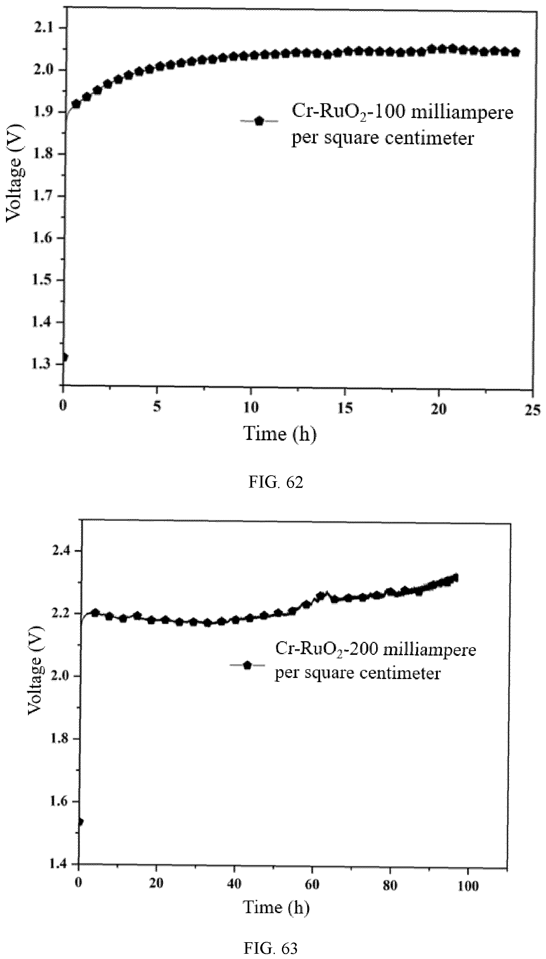

FIG. 62 is a stability curve of the chromium-doped ruthenium oxide material obtained in Example 26 of the present invention as an oxygen evolution anode material in a 0.5 mol/L H₂SO₄ solution under a current density of 100 milliampere per square centimeter; and FIG. 63 is a stability curve of the chromium-doped ruthenium oxide material obtained in Example 26 of the present invention as an oxygen evolution anode material in a 0.5 mol/L H₂SO₄ solution under a current density of 200 milliampere per square centimeter.

It can be seen from FIG. 62 and FIG. 63 that, by being kept for 24 hours and 100 hours under the current densities of 100 and 200 milliampere per square centimeter respectively, the chromium-doped ruthenium oxide nanometer material obtained in Example 26 barely attenuates in current, as shown in FIG. 81, and the stability of this catalytic material under the large current density is obviously superior to the commercial ruthenium dioxide; and it indicates that the chromium-doped ruthenium oxide nanometer material obtained in Example 26 has high stability under a large current density when used as the oxygen evolving reaction anode material.

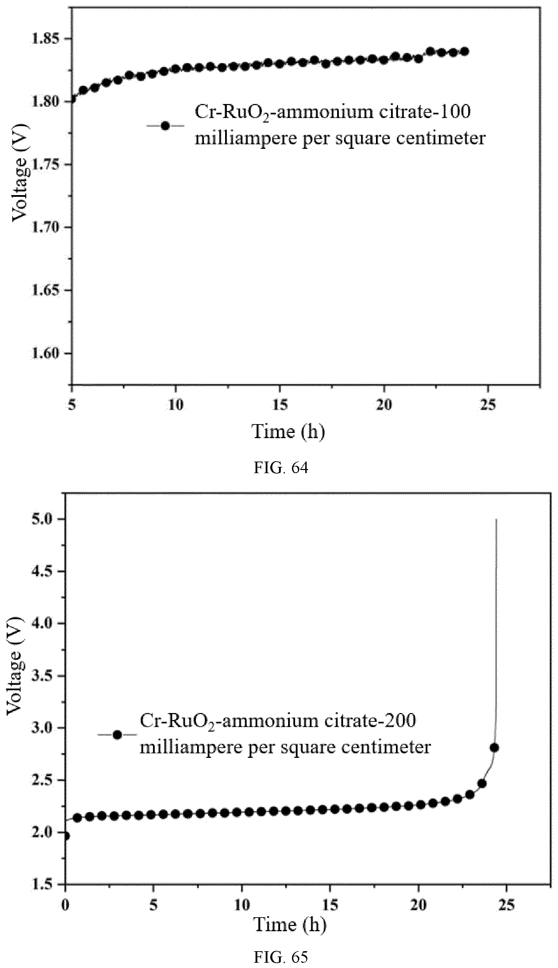

FIG. 64 is a stability curve of the chromium-doped ruthenium oxide material obtained in Comparative Example 5 of the present invention as an oxygen evolution anode material in a 0.5 mol/L H₂SO₄ solution under a current density of 100 milliampere per square centimeter; and FIG. 65 is a stability curve of the chromium-doped ruthenium oxide material obtained in Comparative Example 5 of the present invention as an oxygen evolution anode material in a 0.5 mol/L H₂SO₄ solution under a current density of 200 milliampere per square centimeter.

It can be seen from FIG. 64 and FIG. 65 that, by being kept for 24 hours and 100 hours under the current densities of 100 and 200 milliampere per square centimeter respectively, the chromium-doped ruthenium oxide nanometer material obtained in Comparative Example 5 quickly attenuates in current under the large current density of 200 milliampere per square centimeter; and it indicates that the stability of the chromium-doped ruthenium oxide nanometer material obtained after the ammonium citrate is added under the large current density when used as the oxygen evolving reaction anode material is inferior to the chromium-doped ruthenium oxide nanometer material obtained in Example 26.

Therefore, it is found in the present application example that, when the chromium-doped ruthenium oxide nanometer material formed by adding the multi-coordination-site high-molecular polymer is used as the oxygen evolving reaction anode material, compared to the chromium-doped ruthenium oxide nanometer material formed by adding the ammonium citrate as the ligand, the stability is improved obviously.

### Application Example 14-Activity and stability test

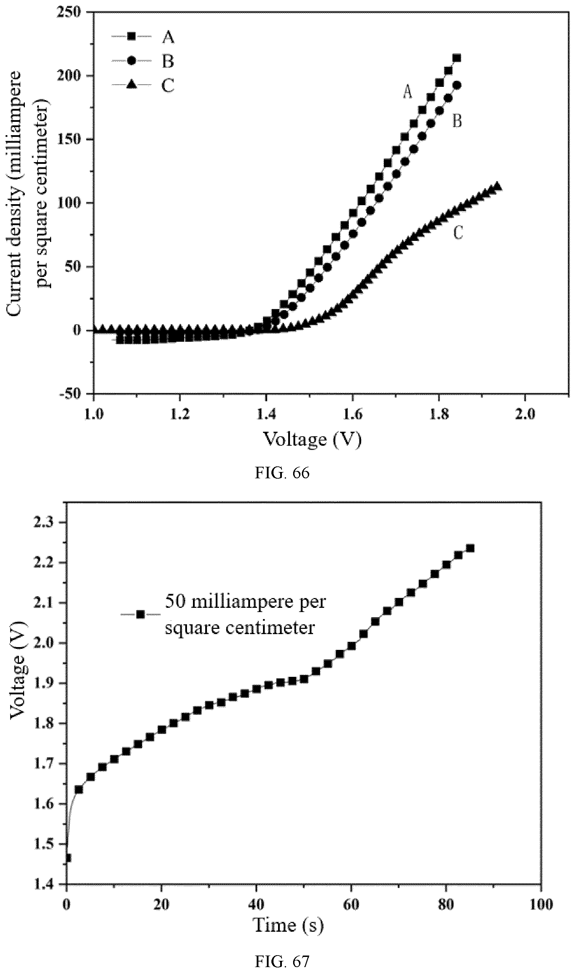

A three-electrode system was used to test water electrolysis oxygen evolution performance of a chromium-doped ruthenium oxide nanometer material of the present invention: a reference electrode was a calomel electrode, a counter electrode was a platinum gauze electrode, a working electrode was a chromium-doped ruthenium oxide nanometer material obtained in Example 26 and Comparative Example 6 and commercial ruthenium dioxide, testing was carried out in a 0.5 mol/L H₂SO₄ solution, and obtained polarization curves were as shown in FIG. 66.

A two-electrode system was used to test water electrolysis oxygen evolving reaction stability of the chromium-doped ruthenium oxide nanometer material of the present invention: an anode was the chromium-doped ruthenium oxide nanometer material obtained in Example 26 and Comparative Example 6 or the commercial ruthenium dioxide, and a cathode was the platinum gauze electrode.

It can be seen from FIG. 66 that the chromium-doped ruthenium oxide nanometer material obtained in Example 26 and Comparative Example 6 has good water electrolysis oxygen evolution performance (curves B and A in FIG. 66), which is obviously superior to the commercial ruthenium dioxide material (a curve C in FIG. 66), and an overpotential under a current density of 10 milliampere per square centimeter is 170 millivolts, which is lower than 320 millivolts of the commercial ruthenium dioxide. The electrocatalytic activity of the chromium-doped ruthenium oxide nanometer material obtained in Example 26 used as an oxygen evolving reaction anode material is equivalent to the chromium-doped ruthenium oxide nanometer material obtained in Comparative Example 6.

FIG. 67 is a stability curve of the chromium-doped ruthenium oxide material obtained in Comparative Example 6 of the present invention as an oxygen evolution anode material in a 0.5 mol/L H₂SO₄ solution under a current density of 50 milliampere per square centimeter.

It can be seen from FIG. 67 that, by being kept for half an hour under the current density of 50 milliampere per square centimeter, the stability curve of the chromium-doped ruthenium oxide nanometer material obtained in Comparative Example 6 quickly attenuates in 80 seconds, that is, this catalytic material has the extremely poor stability under the small current density; and it indicates that the stability of the chromium-doped ruthenium oxide nanometer material obtained in Comparative Example 6 under the large current density when used as the oxygen evolving reaction anode material is far inferior to the chromium-doped ruthenium oxide nanometer material obtained in Example 26.

Therefore, it is found in the present application example that, when the chromium-doped ruthenium oxide nanometer material formed by adding the multi-coordination-site high-molecular polymer is used as the oxygen evolving reaction anode material, compared to the manganese-doped ruthenium oxide nanometer material formed without adding the multi-coordination-site high-molecular polymer, the stability is improved obviously.

### Application Example 15-Activity test

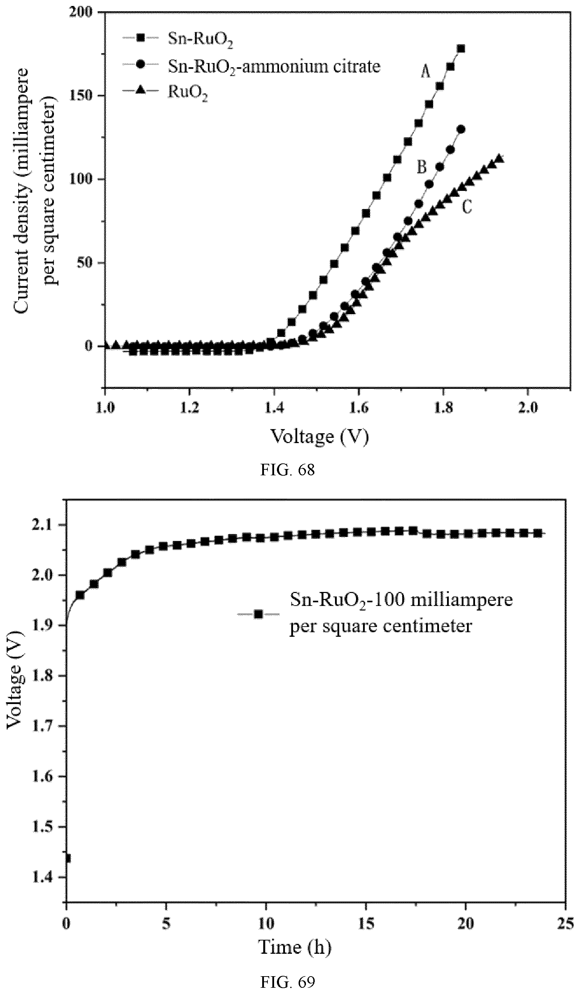

A three-electrode system was used to test water electrolysis oxygen evolution performance of a tin-doped ruthenium oxide nanometer material of the present invention: a reference electrode was a calomel electrode, a counter electrode was a platinum gauze electrode, a working electrode was a tin-doped ruthenium oxide nanometer material obtained in Example 27 and Comparative Example 7 and commercial ruthenium dioxide, testing was carried out in a 0.5 mol/L H₂SO₄ solution, and obtained polarization curves were as shown in FIG. 68.

It can be seen from FIG. 68 that the tin-doped ruthenium oxide nanometer material obtained in Example 27 has good water electrolysis oxygen evolution performance (a curve A in FIG. 68), which is obviously superior to the tin-doped ruthenium oxide nanometer material obtained in Comparative Example 7 (a curve B in FIG. 68) and the commercial ruthenium dioxide material (a curve C in FIG. 68), and an overpotential under a current density of 10 milliampere per square centimeter is 170 millivolts, which is obviously lower than 220 millivolts of the material obtained in Comparative Example 7 and 320 millivolts of the commercial ruthenium dioxide. It proves that the tin-doped ruthenium oxide nanometer material obtained in Example 27 has the better oxygen evolving reaction activity than the tin-doped ruthenium oxide nanometer material containing the ammonium citrate in Comparative Example 7 and the commercial ruthenium dioxide.

### Application Example 16-Stability test

A two-electrode system was used to test water electrolysis oxygen evolving reaction stability of a tin-doped ruthenium oxide nanometer material of the present invention: an anode was a tin-doped ruthenium oxide nanometer material obtained in Example 27 or commercial ruthenium dioxide, and a cathode was a platinum gauze electrode.

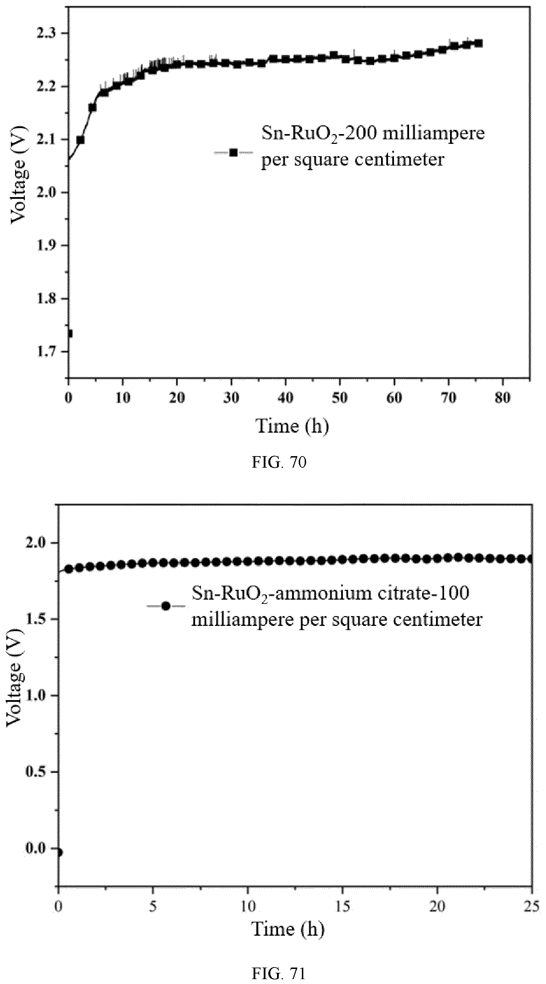

FIG. 69 is a stability curve of the tin-doped ruthenium oxide material obtained in Example 27 of the present invention as an oxygen evolution anode material in a 0.5 mol/L H₂SO₄ solution under a current density of 100 milliampere per square centimeter; and FIG. 70 is a stability curve of the tin-doped ruthenium oxide material obtained in Example 27 of the present invention as an oxygen evolution anode material in a 0.5 mol/L H₂SO₄ solution under a current density of 200 milliampere per square centimeter.

It can be seen from FIG. 69 and FIG. 70 that, by being kept for 24 hours and 80 hours under the current densities of 100 and 200 milliampere per square centimeter respectively, the tin-doped ruthenium oxide nanometer material obtained in Example 27 barely attenuates in current, as shown in FIG. 81, and the stability of this catalytic material under the large current density is obviously superior to the commercial ruthenium dioxide; and it indicates that the tin-doped ruthenium oxide nanometer material obtained in Example 27 has high stability under a large current density when used as the oxygen evolving reaction anode material.

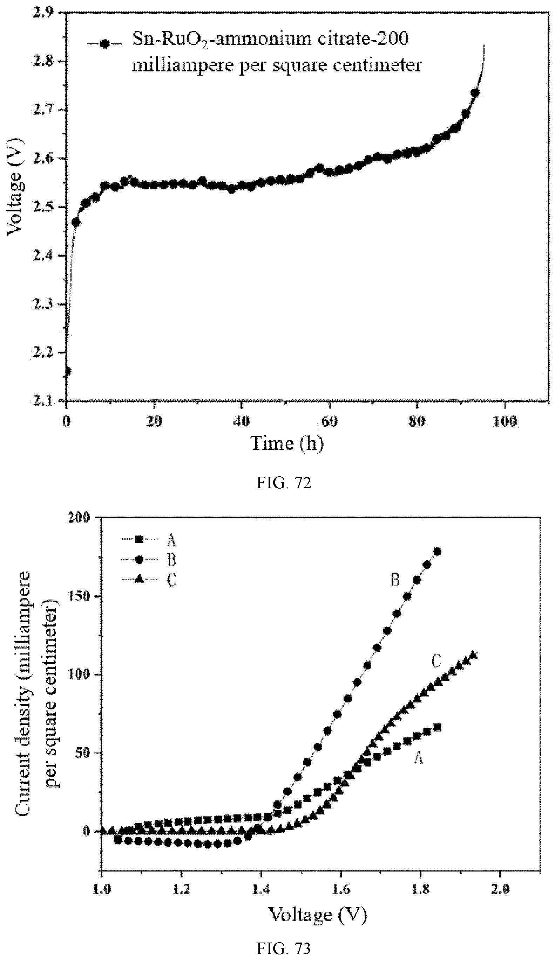

FIG. 71 is a stability curve of the tin-doped ruthenium oxide material obtained in Comparative Example 7 of the present invention as an oxygen evolution anode material in a 0.5 mol/L H₂SO₄ solution under a current density of 100 milliampere per square centimeter; and FIG. 72 is a stability curve of the tin-doped ruthenium oxide material obtained in Comparative Example 7 of the present invention as an oxygen evolution anode material in a 0.5 mol/L H₂SO₄ solution under a current density of 200 milliampere per square centimeter.

It can be seen from FIG. 71 and FIG. 72 that, by being kept for 24 hours and 100 hours under the current densities of 100 and 200 milliampere per square centimeter respectively, the tin-doped ruthenium oxide nanometer material obtained in Comparative Example 7 obviously attenuates in current under the large current density of 200 milliampere per square centimeter; as shown in FIG. 81, the stability of this catalytic material under the large current density is obviously superior to the commercial ruthenium dioxide; and it indicates that the stability of the tin-doped ruthenium oxide nanometer material obtained after the ammonium citrate is added under the large current density when used as the oxygen evolving reaction anode material is superior to the commercial ruthenium dioxide but inferior to the tin-doped ruthenium oxide nanometer material obtained in Example 27.

Therefore, it is found in the present application example that, when the tin-doped ruthenium oxide nanometer material formed by adding the multi-coordination-site high-molecular polymer is used as the oxygen evolving reaction anode material, compared to the tin-doped ruthenium oxide nanometer material formed by adding the ammonium citrate as the ligand, both the activity and the stability are improved obviously.

### Application Example 17-Activity and stability test

A three-electrode system was used to test water electrolysis oxygen evolution performance of a tin-doped ruthenium oxide nanometer material of the present invention: a reference electrode was a calomel electrode, a counter electrode was a platinum gauze electrode, a working electrode was a tin-doped ruthenium oxide nanometer material obtained in Example 27 and Comparative Example 8 and commercial ruthenium dioxide, testing was carried out in a 0.5 mol/L H₂SO₄ solution, and obtained polarization curves were as shown in FIG. 73.

A two-electrode system was used to test water electrolysis oxygen evolving reaction stability of the tin-doped ruthenium oxide nanometer material of the present invention: an anode was the tin-doped ruthenium oxide nanometer material obtained in Example 27 and Comparative Example 8 or commercial ruthenium dioxide, and a cathode was the platinum gauze electrode.

It can be seen from FIG. 73 that the tin-doped ruthenium oxide nanometer material obtained in Example 27 and Comparative Example 8 has good water electrolysis oxygen evolution performance (curves B and A in FIG. 73), which is obviously superior to the commercial ruthenium dioxide material (a curve C in FIG. 73), and overpotentials under a current density of 10 milliampere per square centimeter are 146 millivolts and 190 millivolts respectively, which are both lower than 320 millivolts of the commercial ruthenium dioxide. However, the electrocatalytic activity of the tin-doped ruthenium oxide nanometer material obtained in Example 27 used as the oxygen evolving reaction anode material is obviously superior to the tin-doped ruthenium oxide nanometer material obtained in Comparative Example 8.

FIG. 74 is a stability curve of the tin-doped ruthenium oxide material obtained in Comparative Example 8 of the present invention as an oxygen evolution anode material in a 0.5 mol/L H₂SO₄ solution under a current density of 100 milliampere per square centimeter.

It can be seen from FIG. 74 that, by being kept for 24 hours under the current density of 100 milliampere per square centimeter, the stability curve of the tin-doped ruthenium oxide nanometer material obtained in Comparative Example 8 attenuates by 175 millivolts in 24 hours, that is, this catalytic material has the extremely poor stability under the large current density; and it indicates that the stability of the tin-doped ruthenium oxide nanometer material obtained in Comparative Example 8 under the large current density when used as the oxygen evolving reaction anode material is far inferior to the tin-doped ruthenium oxide nanometer material obtained in Example 27.

Therefore, it is found in the present application example that, when the tin-doped ruthenium oxide nanometer material formed by adding the multi-coordination-site high-molecular polymer is used as the oxygen evolving reaction anode material, compared to the tin-doped ruthenium oxide nanometer material formed without adding the multi-coordination-site high-molecular polymer, both the activity and the stability are improved obviously.

### Application Example 18-Activity and stability test

A three-electrode system was used to test water electrolysis oxygen evolving reaction activity of germanium, indium, antimony, niobium, titanium, zirconium, hafnium, tungsten, molybdenum, tantalum and platinum-doped ruthenium oxide nanometer materials of the present invention: a reference electrode was a calomel electrode, a counter electrode was a platinum gauze electrode, and a working electrode was a transition metal doped ruthenium oxide nanometer material obtained in Examples 28 to 38 and commercial ruthenium dioxide.

A two-electrode system was used to test water electrolysis oxygen evolving reaction stability of the transition metal doped ruthenium oxide nanometer material of the present invention: an anode was the transition metal doped ruthenium oxide nanometer material obtained in Examples 28 to 38 or the commercial ruthenium dioxide, and a cathode was the platinum gauze electrode.

FIG. 75 is polarization curves obtained by testing transition metal doped ruthenium oxide materials obtained in Examples 28 to 32 in a 0.5 mol/L sulfuric acid solution. It can be seen from FIG. 75 that, an overpotential of a germanium-doped ruthenium oxide nanometer material prepared in Example 28 under 10 milliampere per square centimeter in an oxygen evolving reaction is 180 millivolts (a curve A in FIG. 75), an overpotential of an indium-doped ruthenium oxide nanometer material prepared in Example 29 under 10 milliampere per square centimeter in an oxygen evolving reaction is 200 millivolts (a curve B in FIG. 75), an overpotential of an antimony-doped ruthenium oxide nanometer material prepared in Example 30 under 10 milliampere per square centimeter in an oxygen evolving reaction is 180 millivolts (a curve C in FIG. 75), an overpotential of a niobium-doped ruthenium oxide nanometer material prepared in Example 31 under 10 milliampere per square centimeter in an oxygen evolving reaction is 180 millivolts (a curve D in FIG. 75), an overpotential of a titanium-doped ruthenium oxide nanometer material prepared in Example 32 under 10 milliampere per square centimeter in an oxygen evolving reaction is 250 millivolts (a curve E in FIG. 75), and it proves that the oxygen evolving reaction activity of the transition metal doped ruthenium oxide nanometer materials prepared in Examples 28 to 32 is obviously superior to the commercial ruthenium dioxide (a curve F in FIG. 75).

FIG. 76 is polarization curves obtained by testing transition metal doped ruthenium oxide materials obtained in Examples 33 to 38 in a 0.5 mol/L H₂SO₄ solution. An overpotential of a zirconium-doped ruthenium oxide nanometer material prepared in Example 33 under 10 milliampere per square centimeter in an oxygen evolving reaction is 270 millivolts (a curve A in FIG. 76), an overpotential of a hafnium-doped ruthenium oxide nanometer material prepared in Example 34 under 10 milliampere per square centimeter in an oxygen evolving reaction is 270 millivolts (a curve B in FIG. 76), an overpotential of a tungsten-doped ruthenium oxide nanometer material prepared in Example 35 under 10 milliampere per square centimeter in an oxygen evolving reaction is 250 millivolts (a curve C in FIG. 76), an overpotential of a molybdenum-doped ruthenium oxide nanometer material prepared in Example 36 under 10 milliampere per square centimeter in an oxygen evolving reaction is 240 millivolts (a curve D in FIG. 76), an overpotential of a tantalum-doped ruthenium oxide nanometer material prepared in Example 37 under 10 milliampere per square centimeter in an oxygen evolving reaction is 220 millivolts (a curve E in FIG. 76), an overpotential of a platinum-doped ruthenium oxide nanometer material prepared in Example 38 under 10 milliampere per square centimeter in an oxygen evolving reaction is 222 millivolts (a curve F in FIG. 76), and it proves that the oxygen evolving reaction activity of the transition metal doped ruthenium oxide nanometer materials prepared in Examples 33 to 38 is obviously superior to the commercial ruthenium dioxide (a curve G in FIG. 76).

FIG. 77 is stability curves obtained from the transition metal doped ruthenium oxide materials obtained in Examples 28 to 32 under a current density of 200 milliampere per square centimeter. A is a stability curve of the germanium-doped ruthenium oxide prepared in Example 28, B is a stability curve of the indium-doped ruthenium oxide prepared in Example 29, C is a stability curve of the antimony-doped ruthenium oxide prepared in Example 30, D is a stability curve of the niobium-doped ruthenium oxide prepared in Example 31, and E is a stability curve of the titanium-doped ruthenium oxide prepared in Example 32. It can be seen from FIG. 77 that, by being kept for 80 hours under the current density of 200 milliampere per square centimeter, the transition metal doped ruthenium oxide nanometer materials obtained in Examples 28 to 32 barely attenuate in current; and compared to the commercial ruthenium dioxide in FIG. 81, in a stability test under a current density of 100 milliampere per square centimeter, a stability curve of the commercial ruthenium dioxide is attenuated by 500 millivolts or above after being tested for 1 hour. It indicates that the above transition metal germanium, indium, antimony, niobium and titanium doped ruthenium oxide nanometer materials have extremely high stability under the large current density when used as oxygen evolving reaction anode materials.

FIG. 78 is stability curves obtained from the transition metal doped ruthenium oxide materials obtained in Examples 33 to 38 under a current density of 200 milliampere per square centimeter. A is a stability curve of the zirconium-doped ruthenium oxide prepared in Example 33, B is a stability curve of the hafnium-doped ruthenium oxide prepared in Example 34, C is a stability curve of the tungsten-doped ruthenium oxide prepared in Example 35, D is a stability curve of the molybdenum-doped ruthenium oxide prepared in Example 36, E is a stability curve of the tantalum-doped ruthenium oxide prepared in Example 37, and F is a stability curve of the platinum-doped ruthenium oxide prepared in Example 38. It can be seen from FIG. 78 that, by being kept for 80 hours under the current density of 200 milliampere per square centimeter, the transition metal doped ruthenium oxide nanometer materials obtained in Examples 33 to 38 barely attenuate in current; and compared to the commercial ruthenium dioxide in FIG. 81, in a stability test under a current density of 100 milliampere per square centimeter, a stability curve of the commercial ruthenium dioxide is attenuated by 500 millivolts or above after being tested for 1 hour. It indicates that the above transition metal zirconium, hafnium, tungsten, molybdenum, tantalum and platinum doped ruthenium oxide nanometer materials have extremely high stability under the large current density when used as oxygen evolving reaction anode materials.

### Application Example 19-Activity and stability test

A three-electrode system was used to test water electrolysis oxygen evolving reaction activity of a manganese-doped ruthenium oxide nanometer material of the present invention: a reference electrode was a calomel electrode, a counter electrode was a platinum gauze electrode, and a working electrode was a manganese-doped ruthenium oxide nanometer material obtained in Examples 39 to 43 and commercial ruthenium dioxide.

A two-electrode system was used to test water electrolysis oxygen evolving reaction stability of the manganese-doped ruthenium oxide nanometer material of the present invention: an anode was the manganese-doped ruthenium oxide nanometer material obtained in Examples 39 to 43 or the commercial ruthenium dioxide, and a cathode was the platinum gauze electrode.

FIG. 79 is polarization curves obtained by testing the manganese-doped ruthenium oxide material obtained in Examples 39 to 43 in a 0.5 mol/L sulfuric acid solution. It can be seen from FIG. 79 that, an overpotential of the manganese-doped ruthenium oxide nanometer material prepared in Example 39 under 10 milliampere per square centimeter in an oxygen evolving reaction is 310 millivolts (a curve A in FIG. 79), an overpotential of the manganese-doped ruthenium oxide nanometer material prepared in Example 40 under 10 milliampere per square centimeter in an oxygen evolving reaction is 220 millivolts (a curve B in FIG. 79), an overpotential of the manganese-doped ruthenium oxide nanometer material prepared in Example 41 under 10 milliampere per square centimeter in an oxygen evolving reaction is 220 millivolts (a curve C in FIG. 79), an overpotential of the manganese-doped ruthenium oxide nanometer material prepared in Example 42 under 10 milliampere per square centimeter in an oxygen evolving reaction is 200 millivolts (a curve D in FIG. 79), an overpotential of the manganese-doped ruthenium oxide nanometer material prepared in Example 43 under 10 milliampere per square centimeter in an oxygen evolving reaction is 200 millivolts (a curve E in FIG. 79), and it proves that the oxygen evolving reaction activity of the manganese-doped ruthenium oxide nanometer material prepared in Examples 39 to 43 is obviously superior to 320 millivolts of the commercial ruthenium dioxide (a curve F in FIG. 75).

FIG. 80 is stability curves obtained from the manganese-doped ruthenium oxide material obtained in Examples 39 to 43 under a current density of 200 milliampere per square centimeter. A is a stability curve of the manganese-doped ruthenium oxide prepared in Example 39, B is a stability curve of the manganese-doped ruthenium oxide prepared in Example 40, C is a stability curve of the manganese-doped ruthenium oxide prepared in Example 41, D is a stability curve of the manganese-doped ruthenium oxide prepared in Example 42, and E is a stability curve of the manganese-doped ruthenium oxide prepared in Example 43. It can be seen from FIG. 80 that, by being kept for 24 hours under the current density of 200 milliampere per square centimeter, the manganese-doped ruthenium oxide nanometer material obtained in Examples 39 to 43 barely attenuates in current; and compared to the commercial ruthenium dioxide in FIG. 81, in a stability test under a current density of 100 milliampere per square centimeter, a stability curve of the commercial ruthenium dioxide is attenuated by 500 millivolts or above after being tested for 1 hour. It indicates that the above transition metal manganese-doped ruthenium oxide nanometer material has extremely high stability under the large current density when used as an oxygen evolving reaction anode material. As for experiment conditions, compared to Application Example 7 and Application Example 8, optimal reaction conditions in step 1 and step 2 are: a temperature preservation temperature of an oven is 180°C, and temperature preservation time is 10 h; and a temperature raising rate of a muffle furnace is 10 °C/min, a temperature preservation temperature is 400°C, and temperature preservation time is 3 h.

FIG. 53 to FIG. 81 show that, in a water electrolysis process, the transition metal doped ruthenium oxide nanometer material of the present invention is excellent in activity and stability as the oxygen evolving reaction anode material, which are both superior to the commercial ruthenium dioxide material.

The above sufficiently proves that, through the addition of the high-molecular polymer having the plurality of coordination sites in combination with the simple hydrothermal method and calcination, the transition metal doped ruthenium oxide nanometer material is prepared, the surface of such material has rough nanometer structures, and with the addition of the high-molecular polymer multidentate ligand, the electrochemical oxygen evolving reaction activity and stability of such material are greatly improved.

## Claims

1. A metal-doped ruthenium oxide nanometer material, **characterized in that** the metal-doped ruthenium oxide nanometer material is an acid-insoluble metal oxide doped ruthenium oxide nanometer material or a transition metal doped ruthenium oxide nanometer material;
the acid-insoluble metal doped ruthenium oxide nanometer material has a molecular formula of MₓRu₁₋ₓO₂;
M is acid-insoluble metal, and the acid-insoluble metal is selected from: one or more of niobium, titanium, zirconium, hafnium, tungsten, molybdenum, and tantalum;
or, the transition metal doped ruthenium oxide nanometer material has a molecular formula of MₓRu₁₋ₓO₂; and
M is transition metal, and the transition metal is selected from: one of Cr, Mn, Ge, In, Sn, Sb, Nb, Ti, Zr, Hf, W, Mo, Ta, and Pt.

2. The metal-doped ruthenium oxide nanometer material according to claim 1, **characterized in that** when the metal-doped ruthenium oxide nanometer material is the acid-insoluble metal oxide doped ruthenium oxide nanometer material, in the acid-insoluble metal doped ruthenium oxide nanometer material, the acid-insoluble metal is doped into lattices of ruthenium oxide, and the acid-insoluble metal replaces a position of ruthenium in part of the lattices;
when the metal-doped ruthenium oxide nanometer material is the transition metal doped ruthenium oxide nanometer material,in the transition metal doped ruthenium oxide nanometer material, the transition metal is doped into crystals of the ruthenium oxide, and the transition metal replaces a position of ruthenium in part of lattices.

3. The metal-doped ruthenium oxide nanometer material according to claim 1, **characterized in that** the acid-insoluble metal and ruthenium are uniformly dispersed in the acid-insoluble metal oxide doped ruthenium oxide nanometer material, and the acid-insoluble metal oxide doped ruthenium oxide nanometer material is nanoparticles with rough and porous surfaces;
or, the transition metal and ruthenium are uniformly dispersed in the transition metal doped ruthenium oxide nanometer material, and the transition metal doped ruthenium oxide nanometer material is nanoparticles with rough surfaces; and
the nanoparticles has a size ranges from 5 nm to 2000 nm.

4. The metal-doped ruthenium oxide nanometer material according to claim 1, **characterized in that**, in the acid-insoluble metal doped ruthenium oxide nanometer material, a doping ratio of the acid-insoluble metal ranges from 1% to 50%, based on a total mole quantity of metal in the acid-insoluble metal doped ruthenium oxide nanometer material;
or, in the transition metal doped ruthenium oxide nanometer material, a doping ratio of the transition metal ranges from 1% to 50%, based on a total mole quantity of metal in the transition metal doped ruthenium oxide nanometer material.

5. A preparation method of the metal-doped ruthenium oxide nanometer material according to claim 1, **characterized in that** the metal-doped ruthenium oxide nanometer material is the acid-insoluble metal oxide doped ruthenium oxide nanometer material; and
the preparation method is a sol-gel method, and comprises the following steps:
step (1), placing a ligand into a solution containing an acid-insoluble metal source and a ruthenium source to obtain a mixture, sealing and mixing the above mixture in a container at a constant temperature for several hours, then opening a lid of the container, volatilizing a solvent, and scrapping off powder to obtain a metal complex precursor; and
step (2), placing the metal complex precursor obtained in step (1) into a muffle furnace, raising temperature to a required temperature and then preserving the temperature for several hours, taking out a product after natural cooling to obtain powder, thus obtaining the acid-insoluble metal oxide doped ruthenium oxide nanometer material.

6. The preparation method of the metal-doped ruthenium oxide nanometer material according to claim 5, **characterized in that** the acid-insoluble metal source is selected from: one or more of an acid-insoluble metal chloride, an acid-insoluble metal organic esterate, an acid-insoluble metal carbonyl compound, an acid-insoluble metal oxalate and an acid-insoluble metal ammonium oxalate;
the ruthenium source is one or more of ruthenium chloride, ruthenium acetylacetone, ruthenium carbonyl or ruthenium nitrosylnitrate; and
the ligand is a polymer containing a plurality of coordination sites.

7. The preparation method of the metal-doped ruthenium oxide nanometer material according to claim 6, **characterized in that** the polymer containing the plurality of coordination sites is selected from: one or more of polyvinylpyrrolidone, polyvinyl alcohol, polyethylene glycol, polyethylene diamine, polylactic acid, polypyridine and polyamide.

8. The preparation method of the metal-doped ruthenium oxide nanometer material according to claim 5, **characterized in that**, in the mixture in step (1), a concentration of the acid-insoluble metal source ranges from 0.01 mol/L to 1 mol/L, a concentration of the ruthenium source ranges from 0.1 mol/L to 1 mol/L, and a concentration of the complex ranges from 1 g/L to 40 g/L.

9. The preparation method of the metal-doped ruthenium oxide nanometer material according to claim 5, **characterized in that**, in step (2), a temperature raising rate ranges from 1 °C/min to 10 °C/min, the required temperature ranges from 400°C to 600°C, and temperature preservation time ranges from 3 hours to 6 hours.

10. A preparation method of the metal-doped ruthenium oxide nanometer material according to claim 1, **characterized in that** the metal-doped ruthenium oxide nanometer material is the acid-insoluble metal oxide doped ruthenium oxide nanometer material, and the preparation method is a solvothermal method and comprises the following steps:
step A, placing a solution of an acid-insoluble metal source and a ruthenium source into a hydrothermal reactor, mixing till complete dissolution, adding an alkali source to obtain a reaction liquid, placing the hydrothermal reactor into an oven of 100°C to 200°C, performing temperature preservation for 8 to 16 hours, taking out the hydrothermal reactor, after natural cooling to a room temperature, taking out sediment generated by a reaction, and performing washing and drying to obtain powder; and
step B, placing the powder obtained by drying in above step A into a porcelain boat and placing the porcelain boat into a muffle furnace: setting a temperature raising rate to range from 5 °C/min to 10 °C/min, raising a temperature to 400°C to 600°C, performing natural cooling after 2 to 8 hours of temperature preservation to obtain a black powder sample, thus obtaining the acid-insoluble metal oxide doped ruthenium oxide nanometer material; wherein
in step A, in the reaction liquid, a concentration of the acid-insoluble metal source ranges from 0.001 mol/L to 1 mol/L, a concentration of the ruthenium source ranges from 0.1 mol/L to 1 mol/L, and a concentration of the alkali source ranges from 1 g/L to 5 g/L.

11. A preparation method of the metal-doped ruthenium oxide nanometer material according to claim 1, **characterized in that** the metal-doped ruthenium oxide nanometer material is the acid-insoluble metal oxide doped ruthenium oxide nanometer material, and the preparation method is a ball milling method and comprises the following steps:
placing ruthenium oxide and an acid-insoluble metal oxide into a ball milling tank, performing ball milling for 3 to 6 hours each time, repeating 2 to 3 times to obtain precursor powder, and placing the precursor powder into a porcelain boat and placing the porcelain boat into a muffle furnace: setting a temperature raising rate to range from 5 °C/min to 10 °C/min, raising a temperature to 400°C to 800°C, performing natural cooling after 6 to 12 hours of temperature preservation to obtain a black powder sample, thus obtaining the acid-insoluble metal oxide doped ruthenium oxide nanometer material; wherein
a mole ratio of the ruthenium oxide to the acid-insoluble metal oxide ranges from 99:1 to 1:1.

12. A use of the metal-doped ruthenium oxide nanometer material according to any one of claims 1 to 4 in an electrode material.

13. The use according to claim 12, **characterized by** a use of the metal-doped ruthenium oxide nanometer material in an anode material for electrolysis of water for oxygen evolution.

14. A preparation method of the metal-doped ruthenium oxide nanometer material according to claim 1, **characterized in that**, the metal-doped ruthenium oxide nanometer material is a transition metal doped ruthenium oxide nanometer material; and
the preparation method is a hydrothermal method, and comprises the following steps:
step (1), adding a soluble transition metal source into a solution containing a soluble ruthenium source and mixing, then adding a polymer containing a plurality of coordination sites, after re-mixing, obtaining a mixture, transferring the mixture into a hydrothermal reactor, taking out the mixture after several hours of temperature preservation in a constant temperature oven, performing natural cooling to a room temperature, and after washing and centrifuging, performing drying to obtain a precursor containing transition metal; and
step (2), placing the precursor containing the transition metal obtained in step (1) into a muffle furnace, raising a temperature to a required temperature and then preserving the temperature for several hours, taking out a product after natural cooling to obtain powder, thus obtaining the transition metal doped ruthenium oxide nanometer material.

15. The preparation method of the metal-doped ruthenium oxide nanometer material according to claim 14, **characterized in that** the soluble transition metal source is selected from: one or more of a transition metal chloride, a transition metal high-valence compound, a transition metal organic esterate, a transition metal carbonyl compound, and a transition metal oxalate;
the ruthenium source is selected from: one or more of ruthenium chloride, ruthenium acetylacetone, ruthenium carbonyl or ruthenium nitrosylnitrate; and
the polymer containing the plurality of coordination sites is selected from: one or more of polyvinylpyrrolidone, polyvinyl alcohol, polyethylene glycol, polyethylene diamine, polylactic acid, polypyridine and polyamide.

16. The preparation method of the metal-doped ruthenium oxide nanometer material according to claim 15, **characterized in that**, in the mixture in step (1), a concentration of the transition metal source ranges from 0.001 mol/L to 1 mol/L, a concentration of the ruthenium source ranges from 0.1 mol/L to 1 mol/L, and a concentration of the polymer ranges from 1 g/L to 50 g/L.

17. The preparation method of the metal-doped ruthenium oxide nanometer material according to claim 15, **characterized in that**, in step (1), the constant temperature ranges from 100°C to 180°C, and temperature preservation time ranges from 4 hours to 10 hours; and
in step (2), a temperature raising rate ranges from 1 °C/min to 10 °C/min, the required temperature ranges from 300°C to 500°C, and temperature preservation time ranges from 3 hours to 5 hours.
